(19) Europäisches Patentamt
European Patent Office
Office européen des brevets

(11) **EP 2 768 722 B1**

(12) **EUROPÄISCHE PATENTSCHRIFT**

(45) Veröffentlichungstag und Bekanntmachung des Hinweises auf die Patenterteilung:
**27.07.2016   Patentblatt 2016/30**

(21) Anmeldenummer: **12798600.8**

(22) Anmeldetag: **16.10.2012**

(51) Int Cl.:
**B62K 15/00** *(2006.01)*        **B62K 25/00** *(2006.01)*
**B62K 19/32** *(2006.01)*

(86) Internationale Anmeldenummer:
**PCT/DE2012/100321**

(87) Internationale Veröffentlichungsnummer:
**WO 2013/056702 (25.04.2013 Gazette 2013/17)**

(54) **KOMPAKTES, ZUSAMMENKLAPPBARES FAHRRAD**

COMPACT, COLLAPSIBLE BICYCLE

BICYCLETTE COMPACTE PLIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2011   DE 102011054538**
**28.11.2011   DE 102011122836**
**28.11.2011   DE 102011055748**

(43) Veröffentlichungstag der Anmeldung:
**27.08.2014   Patentblatt 2014/35**

(73) Patentinhaber: **Bettin, Karsten**
**30173 Hannover (DE)**

(72) Erfinder: **Bettin, Karsten**
**30173 Hannover (DE)**

(56) Entgegenhaltungen:
**EP-A1- 1 258 421          WO-A1-00/29277**
**WO-A1-2006/111590     CN-U- 2 043 597**
**NL-A- 9 002 644          US-A1- 2007 063 478**

**Beschreibung**

Technisches Gebiet

Die Erfindung betrifft ein kompaktes, zusammenklappbares Fahrrad gemäß dem Oberbegriff des Anspruchs 1.

Stand der Technik

In Kombination mit (motorgetriebenen) Verkehrsmitteln wie Eisenbahn, Kraftfahrzeug oder Flugzeug beziehungsweise in Kombination mit Schiffen werden als muskel- oder elektrobetriebene Fahrzeuge insbesondere Falträder oder Tretroller eingesetzt.

Die Hauptaufgabe dieser Fahrzeuge besteht darin, den Zeitaufwand für die Zubringerwege von und zu diesen Verkehrsmitteln zu minimieren. Darüber hinaus werden insbesondere Falträder auf Reisen eingesetzt, wo für die Mitnahme eines 26/28-Zoll-Erwachsenenfahrrades nicht genügend Platz ist.

Um diesen Aufgaben gerecht zu werden, werden ein kleinstmögliches Faltmaß und ein geringst mögliches Gewicht bei möglichst hoher Energieeinsatzeffizienz für ein von Erwachsenen fahrbares Fahrzeug angestrebt.

Aus der EP 1 258 421 ist ein Kompaktes, zusammenklappbares Fahrrad mit den Merkmalen des Oberbegriffes des Anspruchs bekannt.

Bekannte handelsübliche Falträder haben diesbezüglich folgende Nachteile:

a. Sie sind verhältnismäßig schwer (> 10 kg) beziehungsweise leichtere Varianten sind teuer, weil leichtere und teurere Materialien eingesetzt werden (beispielsweise Carbon statt Aluminium).

b. Die Rahmenkonstruktion erfordert den Einsatz vieler nur für den jeweiligen Fahrradrahmen gefertigter Sonderbauteile, was die Herstellung sehr teuer macht.

c. Um das angestrebte Faltmaß zu erreichen, müssen teilweise auch die Komponenten wie Bremsen und Schalteinrichtungen individuell für das jeweilige Faltrad gefertigt werden.

d. Axial gesehen zwischen Fahrradrahmen und Hinterrad ist die Abtriebsscheibe (überwiegend ein Abtriebs-Zahnkranz) eines Zugmittelgetriebes (überwiegend ein Kettengetriebe) angeordnet. Die dafür erforderliche Mindestbreite der Hinterradachse führt im zusammengeklappten Zustand des Fahrrades zu einem entsprechend breiten oder aufgrund der dann erforderlichen Hinterbaulängen zu einem langen Faltmaß.

e. Es werden Getriebe (Planetengetriebe und Kettenschaltungen) eingesetzt, deren Übersetzungen für große Laufräder konzipiert sind. Folglich muss das eingesetzte Antriebs-Kettenrad an der Tretkurbel mehr Zähne aufweisen als bei Fahrrädern mit großen Laufrädern, damit der Fahrer bei gleicher Trittfrequenz auch die gleiche Strecke wie mit Fahrrädern mit großen Laufrädern zurücklegen kann. Um im größten Gang pro Umdrehung der Tretkurbel mindestens 7,5 m und damit nutzungstaugliche Entfaltungen zu erreichen, können diese Getriebe auch mit großem Antriebs-Kettenrad nur bis zu einer Laufradgröße von 20 Zoll, mindestens jedoch 16 Zoll, sinnvoll eingesetzt werden.

Handelsübliche Tretroller haben folgende Nachteile:

a. Der vom Fahrer einzusetzende Energieaufwand pro Meter Wegstrecke ist deutlich höher als bei einem Fahrrad.

b. Die erreichbare Geschwindigkeit mit dem Tretroller ist deutlich geringer als mit einem Fahrrad.

Bei Verwendung kleinerer Laufräder als 16 Zoll beziehungsweise 20 Zoll sind weitere, insbesondere die Fahreigenschaften des Fahrrades betreffenden Aspekte bei der Beurteilung des Standes der Technik zu berücksichtigen:

- Kleine Vorderräder reagieren schneller auf Lenkbewegungen und tendieren schon bei kleineren Geschwindigkeiten und auf leicht unebenen Bodenbelägen zum Wackeln.

- Beim Überfahren von Hindernissen (Gegenstände, Löcher, Erhebungen auf der Fahrbahn) mit kleinen Laufrädern kann die Lenkbewegung empfindlich gestört werden.

- Fahrräder mit kleinen Laufrädern können kürzere Abstände der Hinterradachse zum Tretlager aufweisen als Fahrräder mit großen Laufrädern. Je weiter hinten in Fahrtrichtung gesehen allerdings der Schwerpunkt des Fahrers liegt, desto eher besteht die Gefahr, dass das Vorderrad beim Antritt des Fahrers abhebt.

- Aufgrund des bei kleinen Laufrädern deutlich verminderten Kreiseleffektes übt die Massenträgheit des Fahrers einen größeren die Fahrstabilität beeinträchtigenden Einfluss aus. Lenkt der Fahrer beispielsweise mit einem kleinen Vorderrad in rascher Folge abwechselnd in die eine und in die andere Richtung, erzeugt die Masse des Fahrradfahrers ein Massenträgheitsmoment, das der Lenkbewegung nachläuft. Die Steuerung eines Fahrrades mit kleinen Laufrädern wird dadurch insofern beeinträchtigt, als das Massenträgheitsmoment des Fahrers im Beginn der Lenkbewegung die Kurvenbewegung des Fahrers verzögert und zum Ende der Lenkbewegung die Kurvenbewegung des Fahrers beschleunigt. Dieser Effekt schaukelt sich bei gleichbleibend raschen Wechseln (zum Beispiel beim Slalomfahren) soweit auf, dass das Fahrrad ins Strudeln gerät. Je weiter vorn in Fahrtrichtung gesehen der Schwerpunkt des Fahrers dabei liegt, desto größer sind die destabilisierenden Kippmomente, die die Massenträgheit des Fahrers erzeugt, wenn er eine Kurve lenkt.

- Aufgrund des deutlich verminderten Kreiseleffektes bei Fahrrädern mit kleinen Laufrädern ist das Fahren im Stehen darüber hinaus grundsätzlich instabiler als bei Fahrrädern mit großen Laufrädern.

- Kleine Laufräder benötigen mehr Umdrehungen, um den gleichen Gebrauchsnutzen für das Fahrrad zu erreichen wie Fahrräder mit größeren Laufrädern.

Weiterhin wesentlich für die Fahreigenschaften des Fahrrades ist das Bremsverhalten. Zumeist wird daher die Sitzposition des Fahrers so angeordnet, dass die Arme eine weitgehend gerade Linie zwischen dem Lenker und der Schulter beschreiben, damit der Fahrer sein eigene Massenträgheit beim Bremsen über die Arme gegen den Lenker abstützen kann. Insbesondere bei kompakt gestalteten Fahrrädern besteht die Gefahr, dass die Arme keine ausreichend gerade Linie beschreiben, weswegen der Fahrer bei stärkerem Abbremsen höherer Geschwindigkeiten seine beschleunigte Masse nicht mehr gegen den Lenker abstützen kann und nach vorn über den Lenker fallen würde beziehungsweise zumindest eine die Fahrstabilität beeinträchtigende nach vorn gerichtete Relativbewegung zum Fahrrad vollzieht.

Wesentlich zur Beurteilung des Standes der Technik von Fahrrädern mit kleinen Laufrädern sind daher:

- die Fahreigenschaften und die Fahrstabilität

- das erzielte Faltmaß

- die erreichten Entfaltungen für Fahrräder mit kleinen Laufrädern

- das Bremsverhalten

Nachteilig an den folgenden Fahrrädern ist, dass die Fahrstabilität, wie vorstehend ausgeführt, aufgrund des konstruktionsbedingt weit vorn liegenden Schwerpunktes des Fahrers mit den ausgeführten kleinen Laufrädern durch die vorstehend beschriebenen, bei raschen Lenkbewegungen auftretenden Kippmomente beeinträchtigt ist. In den nachfolgend beispielhaft aufgeführten Schriften sind Fahrräder mit kleinen Laufrädern beschrieben, die konstruktionsbedingt einen großen Abstand des Fahrerschwerpunktes von horizontal gesehen mehr als 25 cm zur Hinterradachse aufweisen, wobei in Klammern die konstruktionsbedingten Ursachen dafür aufgeführt sind:

DE 201 10 016 U1 (Antrieb mit Stehkonsolen),
DE 201 20 092 U1 (Antrieb mit Stehkonsolen),
US 6 439 590 B1 (Antrieb mit Stehkonsolen),
US 7 784 808 B2 (Antrieb mit Doppelkettentrieb),
US 6 799 771 B2 (Antrieb mit Doppelkettentrieb),
das Fahrrad dreamslide der Firma dreamslide, S.A, Bures-sur-Yvette, Frankreich (Tretlagergestänge und wegen des einstufigen Kettentriebes verwendetes 16-Zoll-Hinterrad), das Fahrrad microslider der Firma dreamslide, S.A, Bures-sur-Yvette, Frankreich (Doppelkettentrieb),
US 5 186 482 A (Doppelkettentrieb),
das Fahrrad Birdy Frog der Firma Riese und Müller bis Modelljahr 2006 (drehbewegliche gegen das Sitzrohr gedämpfte Gabel am Tretlager zur gabelartigen Aufhängung des Hinterrades),
US 3 979 136 A (Stirnradgetriebe am Tretlager in Richtung Hinterrad angeordnet),
EP 1 995 165 A2 (Antrieb über Trittbretter, wodurch der Schwerpunkt des Fahrers in Fahrtrichtung gesehen vor der Tretlagerachse liegt),
US 2007 / 0 069 499 A1 (Kette muss unter dem Rahmen durchgeführt werden, im zusammengeklappten Zustand des Fahrrades muss zur Einhaltung des Faltmaßes das Hinterrad unterhalb des Sattelrohres angeordnet bleiben) US 4 598 923 A (Faltprinzip).

Die Fahrräder in DE 201 10 016 U1 und in DE 201 20 092 U1 haben dabei den Nachteil, dass die Stehkonsolen drehbeweglich mit der Hinterradachse verbunden sind, womit konstruktionsbedingt die Hinterbaulänge wenigstens so groß ist wie die Vorderbaulänge mit den vorstehend beschriebenen Nachteilen betreffend die Fahrstabilität.

Die weiteren im Folgenden beispielhaft genannten Fahrräder mit kleinen Laufrädern weisen demgegenüber einen horizontal gesehen verhältnismäßig geringen Abstand zwischen dem Schwerpunkt des Fahrers und der Hinterradachse auf: DE 198 03 462 A1, US 7 306 249 B2, DE 32 25 340 A1, US 3 990 717 A, DE 203 11 511 U1, US 2005 / 0 263 979 A1, WO 2010 / 054 500 A1, DE 201 12 963 U1, US 6 595 536 B1, WO 2007 / 057 992 A1, US 6 595 539 B1.

Sie haben jedoch den Nachteil, dass sie einen Sattel aufweisen und vorzugsweise im Sitzen gefahren werden. Beschleunigt der Fahrer das Fahrrad, so fängt er seine eigene verharrende Massenträgheit mit seinen Händen am Lenker auf, um nicht vom Fahrrad zu fallen. Dabei wird bei den oben genannten Fahrrädern durch die Anordnung der Sitzposition die Kraft auf die Pedale in Fahrtrichtung gesehen vor dem Schwerpunkt des Fahrers aufgebracht und/oder durch die aufgrund der Lenkerposition nach vorn zeigenden Arme die Zugkraft auf den Lenker nach hinten ausgeübt. Die dadurch auf den Lenker nach hinten wirkende Zugkraft gepaart mit der Kraft, die durch die Massenträgheit des Fahrers bei der Beschleunigung auf den Sattel nach hinten ausgeübt wird, und gepaart mit dem horizontal gesehen bereits sehr nah an der Hinterradachse angeordneten Schwerpunkt des Fahrers hebt das Vorderrad bereits bei geringen auf den Lenker einwirkenden Zugkräften vom Boden ab.

Darüber hinaus sind Fahrräder bekannt, die es dem Fahrer aufgrund der Lenkerposition nicht ermöglichen, seine Massenträgheit bei stärkerer Bremsverzögerung gegen den Lenker abzustützen, da die Arme keine weitgehend gestreckte Position einnehmen können beziehungsweise der Fahrer vielmehr mit angewinkelten Armen fährt. Der Fahrer würde bei stärkerem Abbremsen eine nach vorn gerichtete Relativbewegung zum Fahrrad vollziehen und gegebenenfalls über den Lenker beziehungsweise nach vorn fallen. Beispiele dafür finden sich in: DE 32 25 340 A1, US 7 306 249 B2, US 2003 / 0 114 274 A1 und US 1 381 281 A.

Das Faltmaß und das Gewicht eines Faltrades ist für die Alltagstauglichkeit von wesentlicher Bedeutung. Der Stand der Technik zum erreichbaren Faltmaß soll im Folgenden beschrieben werden:

Ein großer Teil der vorgeschlagenen Faltprinzipien für Fahrräder mit kleinen Laufrädern führt im zusammengeklappten Zustand dazu, dass die beiden Laufräder konstruktionsbedingt hintereinander zu liegen kommen, zumindest aber nicht deckungsgleich nebeneinander liegen.

Der Nachteil dieser Faltprinzipien besteht darin, dass bei Verwendung von Laufrädern der Größe 12 Zoll und mehr eine entsprechende, wenigstens circa 65 cm betragende Faltmaßlänge resultiert. Beispiele dazu finden sich in EP 1 600 368 A2, WO 2010 / 054 500 A1, US 2007 / 0 069 499 A1, US 7 306 249 B2, DE 203 11 511 U1, EP 0 388 540 A1, WO 2009 / 145 599 A2, WO 2006 / 111 590 A1, US 4 824 130 A, DE 40 06 095 A1, US 3 419 283 A, US 6 196 566 B1, US 2005 / 0 230 933 A1, US 2007 / 0 024 023 A1, US 2003 / 0 051 934 A1.

Es sind ein paar Fahrräder bekannt, die ein aus zwei drehbar verbundenen Rahmenrohren bestehendes Oberrohr aufweisen, das einerseits drehbar mit dem Steuerkopfrohr verbunden ist, das über die erforderliche Länge wiederum eine Lenksäule mit dem Vorderrad verbindet und das andererseits mittig mit einem weiteren Rahmenteil drehbar verbunden ist, an dem wiederum das Hinterrad und das Tretlager angebracht sind. Das Faltprinzip dieser Fahrräder führt dazu, dass die beiden mit dem Oberrohr verbundenen Rahmenbestandteile scherenartig zusammengeklappt werden. Der Nachteil dieser Fahrräder besteht jedoch darin, dass die längste Seite des Faltmaßes wenigstens 65 cm beträgt und dass das Faltmaß L+B+H des Fahrrades wenigstens 120 cm beträgt. Der weitaus größere Nachteil ist jedoch, dass ein so geringes Faltmaß nur erreicht wird, indem besonders kleine 6-Zoll beziehungsweise 7 Zoll große Laufräder eingesetzt werden, was den Fahrkomfort und den Einsatzbereich deutlich einschränkt. Beispiele dazu finden sich in: US 2005 / 0 263 979 A1 und WO 2010 / 054 500 A1.

Häufig werden für Fahrräder mit kleinen Laufrädern auch Faltprinzipien vorgesehen, die ein gleichsinniges Zusammenklappen von Lenksäule und Sattelrohr verwirklichen, wobei das Sattelrohr und die Lenksäule dann in etwa parallel zur längsten Seite des Faltmaßes liegen. Der Nachteil dieser Faltprinzipien besteht darin, dass diese längste Seite wenigstens 70 cm beträgt. Beispiele dazu finden sich in US 4 844 494 A, US 6 032 971 A, US 6 595 536 B1, US 7 055 842 B1, US 2005 / 0 230 933 A1, US 2003 / 0 114 274 A1, US 2007 / 0 024 023 A1, US 6 883 817 B2, DE 603 03 842 T2, US 6 695 334 B2, DE 203 11 511 U1, DE 198 03 462 A1, US 6 799 771 B2, US 7 290 780 B2, US 4 718 688 A, US 4 895 386 A, US 3 979 136 A, US 5 785 338 A.

Auch weitere bekannte Fahrräder weisen aufgrund des Faltprinzips eine wenigstens 65 cm lange längste Seite auf. Beispiele finden sich in: US 6 032 971 A, US 6 595 536 B1, US 2005 / 0 230 933 A1, US 2007 / 0 024 023 A1, US 3 419 283 A, US 4 132 428 A, US 4 111 447 A, US 7 367 576 B2.

Dem Erfinder sind nur drei von einem Erwachsenen fahrbare Fahrräder mit einem sehr geringen Faltmaß bekannt: US 4 598 923 A, US 6 595 539 B1 und US 7 306 249 B2.

Zu US 4 598 923 A: Der wesentliche Nachteil dieses Fahrrades ist, dass die Falttiefe durch den vorgesehenen Faltmechanismus mit den zwei nebeneinander angeordneten Laufrädern und den diese Laufräder umschließenden Kasten zu einer solchen Kastentiefe führen würde, dass ein bequemes Fahren nicht möglich sein wird. Die Nachteile des konstruktionsbedingt großen horizontalen Abstandes zwischen der Hinterradachse und dem Schwerpunkt des Fahrers sind bereits oben benannt worden. Aufgrund der konstruktionsbedingt großen Vorderbaulänge muss der Fahrer die Arme verhältnismäßig weit nach vorn strecken, während der Lenkrohrkopf mit dem Steuerkopfrohr und der Vorderradachse auf einer Linie liegt. Damit fehlt es dem Fahrrad an geeigneten Mitteln, das bei schnellerer Fahrt zum Wackeln neigende Vorderrad angemessen zu kontrollieren. Darüber hinaus erreicht das Fahrrad nur eine geringe Entfaltung, da für die kleinen Laufräder lediglich ein einstufiger Kettentrieb als Antriebssystem vorgesehen ist.

Zu US 6 595 539 B1: Nachteilig ist neben den vorstehend genannten Nachteilen insbesondere, dass das Fahrrad keine üblicherweise eingesetzten Tretkurbeln vorsieht beziehungsweise dass im Falle des Einsatzes von Tretkurbeln das geringe Faltmaß nicht erreicht werden kann und dass aufgrund der vielen vorgesehenen Rahmenteile und Gelenkverbindungen eine stabile Ausführung des Fahrrades voraussichtlich ein hohes Fahrradgewicht zur Folge hat und/oder die Fahrstabilität nicht gewährleistet ist. Eine Ausführung mit größeren Laufrädern würde auch hier zu einem größeren Faltmaß führen.

Zu US 7 306 249 B2: Das Faltmaß beträgt circa 58 x 33 x 25 cm. Neben den vorstehend für dieses Fahrrad benannten Nachteilen besteht der weitere Nachteil darin, dass die Hinterbaulänge für größere Laufräder konstruktionsbedingt groß ist, da das Vorderrad im zusammengeklappten Zustand zwischen dem Hinterrad und dem Tretlager angeordnet ist. Dadurch ist das genannte Faltmaß nur mit 8 Zoll-Rädern erreichbar. 10 Zoll-Laufräder würden beispielsweise bereits eine Faltlänge von circa L=68 cm erforderlich machen. Zwecks Unterbringung des Vorderrades zwischen Tretlager und Hinterrad im zusammengeklappten Zustand und zwecks Anordnung des Kettenlaufes sind fragile Hinterbaustreben ausgeführt, was begründete Zweifel an der erforderlichen Festigkeit der Hinterbaustreben im praktischen Gebrauch erlaubt. Nachteilig ist weiter, dass die Vorderbaulänge bei dem Fahrrad genauso lang ist wie die Hinterbaulänge und dass der Steuerkopfwinkel weniger als 10° beträgt. Dies hat zur Folge, dass das Vorderrad nicht normgerecht mit einer Bremsverzögerung von 3,4 m/s$^2$ abbremsbar ist, ohne dass das Hinterrad vom Boden abhebt. Außerdem sind damit aus den vorstehend genannten Gründen die Fahrstabilität und die Fahreigenschaften des Fahrrades nachteilig beeinflusst. Eine zur Verbesserung erforderliche Verlängerung der Vorderbaulänge ist jedoch konstruktionsbedingt nicht möglich, da ansonsten die Lenksäule nicht mehr, wie hier vorgesehen, parallel zur längsten Seite des Faltmaßes zusammenklappbar wäre. Eine Vergrößerung des Steuerkopfwinkels ist ebenso nur begrenzt möglich, da mit der Vergrößerung des Steuerkopfwinkels ohne die Möglichkeit einer nennenswerten Verlängerung der Vorderbaulänge der Lenker nach hinten verlagert wird und damit das Fahren im Stehen unmöglich wird.

Bis auf die vorgenannten Fahrräder ist an allen vorgenannten und an allen dem Erfinder ansonsten bekannten von einem Erwachsenen angemessen komfortabel fahrbaren Falträdern nachteilig, dass die Summe der beiden längeren Kanten des Faltmaßes mehr als 100 cm beträgt. Die leichtesten handelsüblichen Falträder wiegen darüber hinaus wenigstens 6,5 kg, allerdings nur unter Inkaufnahme besonders kleiner Laufräder von 10 Zoll und weniger. Handelsübliche Falträder mit größeren Laufrädern wiegen wenigstens knapp 10 kg:

Bei der überwiegenden Anzahl der Fahrräder, die für das Fahren im Sitzen konzipiert sind, ist der Abstand zwischen dem Lenker und dem Rumpf des Fahrers konstruktionsbedingt relativ groß. Beim Fahren im Sitzen ist der Rücken des Fahrers nicht senkrecht zur Fahrbahn, weshalb der Fahrer den Kopf in den Nacken beugen muss. Der Fahrer muss beim Fahren den Rücken und die Nackenmuskulatur anspannen und verbraucht damit zusätzliche Energie, die er nicht zum Fahren einsetzen kann. Der Rücken-/Schulter- und Nackenbereich ist kontinuierlich angespannt. Nachteilig daran ist weiter, dass sich der Fahrer zum Fahren im Stehen vorbeugen muss und mit einem gekrümmten Körper nicht sein ganzes Gewicht zum Vortrieb einsetzen kann. Ein Beispiel findet sich in US 4598923.

Die in DE 40 06 095 A1, DD 2 84 200 A5, US 4 389 055 A offenbarten kompakten Fahrräder haben unter anderem den Nachteil, dass das Vorderrad angetrieben wird, wodurch das Fahrrad im Sitzen gefahren werden muss und das Gewicht des Fahrers nur zu einem kleinen Teil die Haftung zwischen dem angetriebenen Rad und dem Untergrund erhöht, weshalb ein häufiges Durchrutschen des angetriebenen Rades bei größeren Beschleunigungen zu erwarten ist.

Bei dem in DE 195 21 064 A1 offenbarten Fahrrad ist das Tretlager in Fahrtrichtung gesehen noch vor dem Vorderrad angeordnet, wodurch das Fahrrad ebenfalls nicht im Stehen gefahren werden kann.

Weiter sind Fahrräder bekannt, in denen ein insbesondere quer stehendes Sitzrohr und/oder ein Oberrohr konstruktionsbedingt zwingend erforderlich sind. Dies hat den Nachteil, dass das Fahrrad nicht gut zum Fahren im Stehen geeignet ist, weil die erforderliche Beinfreiheit fehlt. Konstruktionen mit Oberrohr sind darüber hinaus schlechter zusammenklappbar auszuführen. Beispiele für konstruktionsbedingt mit Oberrohr und/oder mit quer stehendem Sitzrohr ausgeführte Fahrräder: EP 1 600 368 A2, US 5 186 482 A, WO 2010 / 054 500 A1, DE 32 25 340 A1, DE 198 03 462 A1, US 4 895 386 A, DE 603 03 842 T2.

Bei dem Fahrrad aus US 1 381 281 A tritt der oben beschriebene Effekt, dass das Vorderrad beim stärkeren Beschleunigen abhebt, trotz der sitzenden Fahrweise nicht auf. Dies wird jedoch mit dem Nachteil erkauft, dass das Fahrrad nicht komfortabel im Sitzen gefahren werden kann, da der Druckpunkt auf die Pedale horizontal gesehen sehr nah am Schwerpunkt des Fahrers liegt. Darüber hinaus besteht der Nachteil, dass das Fahrrad konstruktionsbedingt nicht im Stehen gefahren werden kann und dafür auch nicht vorgesehen ist: Die für Frauen vorgesehene Ausführungsform (Fig. 1 aus US 1 381 281 A) ist nicht im Stehen fahrbar, weil der Lenker unter dem Sattel mit dem Verbindungsrohr zum Gabelschaft verbunden ist und die erforderliche Beinfreiheit für das Fahren im Stehen nicht gegeben ist. Die für Männer vorgesehene Ausführungsform (Fig. 3 aus US 1 381 281 A) ist nicht im Stehen fahrbar, weil der Lenkervorbau unter dem Sattel sehr flach nach vorn verläuft und damit nicht genug Höhe gewinnt, damit die Beine beim Fahren im Stehen unter dem Lenker hindurch passen. Auch sind die Lenkergriffe in dieser Ausführungsform niedriger angeordnet als die Sitzfläche, so dass der Fahrer in aufrecht fahrender Fahrposition die Lenkergriffe nicht umgreifen könnte. Bei der für Männer vorgesehenen Ausführungsform besteht der zusätzliche Nachteil, dass der Fahrer beim etwas stärkeren Abbremsen nach vorn über oder gegen den Lenker fallen würde. In allen Ausführungsformen besteht der Nachteil, dass der Fahrer bei stärkerem Bremsen seine eigene Massenträgheit nicht abstützen kann und nach vorn fallen würde. In beiden Ausführungsformen behindert der in vertikaler Linie über der Tretlagerachse angeordnete Sattel das Fahren im Stehen. Weitere Nachteile der Ausführungsformen bestehen darin, dass der Rahmen nicht zusammenklappbar ist, dass der Rahmen nicht in Einzelträgerbauart ausgeführt ist, dass die bevorzugte Ausführungsform nur eine Entfaltung von circa 3,8 m/Kurbelumdrehung (geschätzter Aufbau der bevorzugten Ausführungsform: 8-Zoll-Laufräder mit einem AntriebsKettenrad mit 54 Zähnen und einem Abtriebs-Zahnkranz mit 9 Zähnen) und dass ein einstufiger Kettenantrieb mit einem sehr großen Antriebs-Kettenrad und einem zwischen Rahmen und Hinterrad angeordneten Abtriebs-Zahnkranz vorgesehen ist, weshalb der Rahmen zwischen Antriebs-Kettenrad und Abtriebs-Zahnkranz hindurch von innen nach außen geführt werden muss, und weshalb damit die Hinterbaulänge ein ermittelbares Mindestmaß nicht unterschreiten kann.

Bei vielen der vorgenannten und ansonsten bekannten Fahrräder wird aufgrund der Verwendung eines einstufigen Kettentriebes als Antriebssystem mit den eingesetzten kleinen Laufrädern nur eine sehr geringe, für eine übliche Fahrradgeschwindigkeit nicht taugliche Entfaltung erzielt. Auf eine detaillierte Beschreibung der sonstigen, über die vorgenannten Nachteile hinausgehenden Nachteile dieser Fahrräder wird an dieser Stelle verzichtet, da die Fahrräder ohnehin nicht alltagstauglich einsetzbar sind. Beispiele finden sich in: US 2007 / 0 069 499 A1, US 4 895 386 A, GB 2 373 771 A, US 2004 / 0 180 758 A1, DE 43 16 366 A1, DE 201 12 963 U1, US 2007 / 0 024 023 A1, US 2005 / 0 230 933 A1, US 6 595 536 B1, US 4 598 923 A.

Des Weiteren sind Fahrräder bekannt, bei denen das Hinterrad ohne Endlos-Zugmittelgetriebe direkt oder über ein zwischengeschaltetes Zahnradgetriebe angetrieben wird, wobei die Tretlagerachse und die Hinterradachse zusammenfallen. Der Nachteil dieser Fahrräder besteht darin, dass die für den Fahrradantrieb erreichbaren Übersetzungen sehr klein sind und damit große Laufräder erfordern, um eine alltagstaugliche Entfaltung erreichen zu können, womit kein kompaktes Faltmaß erreichbar ist. Wenigstens sind 20 Zoll große Laufräder erforderlich, damit die Pedale die nötige Bodenfreiheit gewinnen. Außerdem können keine handelsüblichen Tretlager und Tretkurbeln eingesetzt werden. Beispiele finden sich in: WO 98 / 00 331 A1, EP 0 010 201 A1, FR 411 607 A, FR 2 366 491 A1, FR 876 657 A, DE 138 824 A, FR 493 509 A, WO 2007 / 057 992 A1.

In WO 2009 / 056 078 A2 ist ein Fahrradantrieb mit einem zweistufigen, das Hinterrad antreibenden Kettengetriebe offenbart, bei dem die Tretlagerachse und die Hinterradachse ebenfalls zusammenfallen, wodurch das Antriebskettenrad der ersten Getriebestufe mit der gleichen Welle verbunden ist, auf der das Abtriebskettenrad der zweiten Getriebestufe gelagert ist. Das Antriebskettenrad der ersten Getriebestufe ist in handelsüblicher Art mit einer Tretkurbel des Fahrradantriebes fest verbunden. Um trotz des zweistufigen Kettengetriebes angemessene Kettenlinienabstände der ersten Getriebestufe zu erreichen, ist der Kettenlinienabstand der zweiten Getriebestufe zur Bezugsmittelebene des Fahrrades in etwa so klein auszuführen wie der halben Breite des Hinterradreifens entspricht. Der Nachteil dieses Antriebssystems ist daher, dass Laufräder von etwa 26 Zoll Größe verwendet werden müssen, damit Felge und Reifen des Laufrades nicht mit der zweiten Getriebestufe kollidieren, womit konstruktionsbedingt ebenfalls kein kompaktes Faltmaß erreichbar ist. Darüber hinaus besteht der Nachteil, dass keine handelsüblichen Tretlager eingesetzt werden können, da das Tretlager gleichzeitig das Hinterrad lagert.

Bei allen bekannten im Stehen gefahrenen Fahrrädern besteht der Nachteil, dass der Fahrradfahrer sich nur an zwei Stellen am Fahrrad abstützt und zwar mit den Füßen auf den Pedalen und mit den Händen am Lenker. Werden kleine Vorderräder eingesetzt, ist entsprechend obiger Ausführungen insbesondere bei schnellem Fahren und/oder beim Überfahren von Hindernissen der Geradeauslauf empfindlich gestört. Außerdem besteht bei allen bekannten Fahrrädern, die im Stehen gefahren werden, der Nachteil, dass der Fahrer beim stärkeren Abbremsen durch seine eigene Massenträgheit nach vorn bewegt wird und zunächst eine unkontrollierte Relativbewegung in Richtung zum Lenker erfährt, die dazu führen kann, dass der Fahrer den Lenker verzieht und damit insbesondere bei kleinen Laufrädern die Kontrolle über das Fahrrad verliert, wodurch die Fahrstabilität beeinträchtigt wird. Schließlich besteht der Nachteil, dass durch die nach vorn gerichtete Position der Arme die Schulter- und Rückenmuskulatur des Fahrers angespannt ist und der Fahrer zum Ausgleich dazu neigt, sich beim Fahren leicht nach vorn zu lehnen. Beispiele finden sich in: JP 2010 260 457 A, FR 2 876 657 A1, EP 1 995 165 A2, WO 2006 / 111 590 A1, KR 10 0 768 964 B1, US 2004 / 0 004 341 A1, den Fahrrädern microslider und dreamslide der Firma dreamslide, S.A, Bures-sur-Yvette, Frankreich und den Fahrrädern MCS16" und MCS across the city der Firma Maderna Cycle Systems, Wien, Österreich, wobei die in FR 2 876 657 A1 eingesetzten Fußschlaufen und die vor der Fußspitze nach oben abgeknickten Pedalen die vorgenannten Nachteile nur geringfügig mindern, indem die Füße die Massenträgheit des Fahrers beim stärkeren Abbremsen ebenfalls gegen die abgeknickten Pedale abstützen können.

Über das vorgenannte hinaus nachteilig an dem Fahrzeug aus US 2004 / 0 004 341 A1 ist, dass die durch den einstufigen Ketten- beziehungsweise Zahnradantrieb verwirklichten Übersetzungen für kleine Laufräder keine angemessenen Entfaltungen ermöglichen. Ebenso muss der Fahrer aufgrund der Anordnung einer Standfläche zwischen dem Tretlager und dem Vorderrad in nach vorn gebeugter Haltung und/oder mit nach vorn gestreckten Armen fahren. Der geringe Abstand zwischen dem Tretlager und dem Hinterradreifen bei dem Fahrzeug wird nur erreicht, weil das Tretlager durch einen gesonderten, nach oben weisenden Arm am Rahmen befestigt ist und weil dadurch sämtliche Getriebeteile (Kettenräder und Kette beziehungsweise Zahnräder) oberhalb des tragenden Rahmens angeordnet sind.

Die Fahrräder MCS16" und MCS across the city der Firma Maderna Cycle Systems, Wien, Österreich, haben zusätzlich folgende Nachteile: Das Fahrrad kann nur von Personen mit kleinem Körpergrößenunterschied gefahren werden, da das mit dem Gabelschaft verbundene Lenkrohr nicht höhenverstellbar ist. Das Lenkrohr weist darüber hinaus an seinem oberen Ende einen nach vorn weisenden Vorbau auf, der mit dem Lenker verbunden ist und der den Lenker vom Fahrer weg weiter nach vorn positioniert. Das Lenk- und Bremskonzept dieser Fahrräder sieht daher offensichtlich vor, dass der Fahrer beim Bremsen sein Gewicht durch Strecken der Arme gegen den Lenker abdrückt und damit beim Bremsen seine Position zum Fahrrad beibehält mit den vorgenannten Nachteilen. Das Faltkonzept des Fahrrades sieht ein Drehgelenk mit einer zur Hinterradachse parallelen Drehachse vor, so dass die Einheit aus Vorderrad, Vorderradgabel, Steuerkopfrohr und Lenker mit dem hinteren Rahmenteil scherenartig zusammengeklappt wird mit dem vorgenannten Nachteil des sehr langen Faltmaßes.

Die Fahr-/Lenk- und Bremskonzepte der Fahrräder microslider und dreamslide der Firma dreamslide S.A. Bures-sur-Yvette, Frankreich sehen aufgrund der Anordnung der nach vom geneigten Lenkergriffe und der Position des Lenkers zum Rumpf des Fahrers (Lenkerposition etwas niedriger als der Schwerpunkt des Fahrers, Lenkerposition so weit vor dem Rumpf des Fahrers, dass Wiegetritt ermöglicht wird) offensichtlich ebenfalls vor, dass der Fahrer beim Bremsen sein Gewicht durch Strecken der Arme gegen den Lenker abdrückt und damit seine Position zum Fahrrad beibehält mit den vorgenannten Nachteilen. Nachteilig an diesen Fahrrädern ist außerdem, dass nur der Lenker eingeklappt werden kann.

Alle Fahrräder mit besonders kleinen Laufrädern haben den Nachteil, dass die Laufräder beim Auffahren auf ein unüberwindliches Hindernis unweigerlich zu einer Seite weggedrückt werden, womit auch der Fahrer unkontrolliert zur Seite fällt.

Die Nachteile des Einsatzes handelsüblicher Tretkurbeln mit einer handelsüblichen Tretkurbellänge von wenigstens 165 mm für das Fahrradfahren im Stehen sind in US 2008 / 0 217 881 A1 eingehend beschrieben. Ebenso sind hier die Nachteile von US 2002 / 0 163 159 A1 und US 2003 / 0 030 245 A1 eingehend erörtert. Der Nachteil der in US 2008 / 0 217 881 A1 bekannt gemachten Ausführungsform für eine im Stehen zu fahrende Tretkurbel besteht aber darin, dass hier keine üblicherweise für Fahrräder eingesetzten Tretlager und keine handelsüblichen, mit der Tretkurbel fest verbundenen Antriebskettenräder eingesetzt werden können, weil das Tretlager zwischen dem Antriebskettenrad und den Tretkurbeln zum Fahrradrahmen gelagert werden muss, dass Tretlager und Tretkurbeln vielmehr als teure Sonderteile gefertigt werden müssen, dass der Kettenantrieb innerhalb des Rahmens und damit schwerer zugänglich für die Wartung angeordnet ist, dass demzufolge der Fertigungsaufwand für den Fahrradrahmen ebenfalls entsprechend hoch ist, dass die Faltbarkeit des Rahmens nur mit erheblichem Aufwand ermöglicht werden kann und dass, wie oben für das entsprechend ausgeführte Fahrrad der Firma dreamslide bereits beschrieben, konstruktionsbedingt Hinterbaulängen von mehr als 25 cm resultieren (siehe auch das Fahrrad dreamslide der Firma dreamslide S.A, Bures-sur-Yvette, Frankreich).

Bei dem Fahrrad microslider der Firma dreamslide S.A, Bures-sur-Yvette, Frankreich, wird zur Erreichung alltagstauglicher Entfaltungen und zur Erreichung einer trotz der kleinen Laufräder guten Bodenhaftung des Hinterrades ein Doppelkettengetriebe eingesetzt. Um das Doppelkettengetriebe bei einer angemessenen Baubreite und einem angestrebten geringen axialen Pedalabstand im Fahrrad unterbringen zu können, muss das Kettengetriebe innerhalb des zwischen Hinterrad und Tretlager zweiteilig ausgeführten Fahrradrahmens angeordnet werden. Diese Anordnung hat über die vorgenannten Nachteile hinaus die weiteren konstruktionsbedingten Nachteile, dass aufgrund der erforderlichen Anordnung des Abtriebsrades der ersten Getriebestufe eine große Hinterbaulänge resultiert mit den vorstehend beschriebenen Nachteilen betreffend die Fahrstabilität und das erreichbare Faltmaß.

Für das in FR 2 876 657 A1 dargestellte Fahrrad ist ein elliptisch gestaltetes Antriebskettenrad vorgesehen, um die Fallgeschwindigkeit des Fahrers auf der Pedale zu vermindern. Auch hier ist nachteilig, dass nicht auf üblicherweise eingesetzte Tretkurbeln zurückgegriffen werden kann. Nachteilig ist, dass das Fahrrad nicht zusammengeklappt werden kann.

Das in KR 10 0 768 964 B1 offenbarte Fahrrad hat neben den bereits genannten Nachteilen den Nachteil, dass jede Pedale auch auf Höhe der Hinterradachse auf beiden Seiten des Fahrrades drehbar mit dem Fahrrad verbunden ist. Daher muss auch zu beiden Seiten eine entsprechenden Hinterradachse und ein abstützender Fahrradrahmen ausgebildet sein.

Das in EP 1 995 165 A2 offenbarte Fahrrad hat neben den bereits benannten Nachteilen den Nachteil, dass es aufgrund der komplexen Rahmenkonstruktion sehr kostenaufwändig herzustellen ist.

Das in WO 2006 / 111 590 A1 bekannt gemachte, im Stehen zu fahrende Fahrrad weist horizontal gesehen etwa eine Hinterbaulänge von wenigstens 21 cm auf, wenn wie gezeigt, ein 8-Zoll-Laufrad verwendet wird. Die Hinterbaulänge würde bei Verwendung eines 9-Zoll-Laufrades wenigstens 22,5 cm betragen. Dabei ist der Lenker durch den nach vorn weisenden Vorbau in Fahrtrichtung gesehen so weit vor dem Fahrer positioniert, dass die Arme vom Fahrer ausreichend gestreckt werden müssen mit den vorgenannten Nachteilen. Außerdem besteht der Nachteil, dass die Konstruktion keine Mittel zur Beherrschung des durch Fahrbahnunebenheiten und Fahraktivität auftretenden Wackelns des besonders kleinen vorderen Laufrades von 8 Zoll Größe vorsieht. Auch das Überfahren von Hindernissen ist wegen der besonders kleinen Laufräder und der mangelhaften Kontrolle des Vorderrades problematisch. Nachteilig ist weiter, dass lediglich ein einstufiger Kettentrieb zum Antrieb verwendet wird, wodurch aufgrund der kleinen Laufräder nur eine Entfaltung von circa 54 / 9 * 8 Zoll * $\pi$ = 3,83 m/U bei 8 Zoll-Laufrädern für das Fahrrad erreichbar ist.

Konstruktionsbedingt wird die Hinterbaulänge von circa 21 cm nur erreicht, indem das in der Bezugsmittelebene des Fahrrades verlaufende tragende Rahmenteil oberhalb des 8 Zoll-Hinterrades verläuft und am Hinterrad zwei Ausfallende aufweist, die oberhalb des Lasttrums der Kette mit dem tragenden Rahmenteil verbunden sind und vom Rahmen aus nach unten verlaufen müssen, um das Hinterrad und den Abtriebs-Zahnkranz des Kettentriebes innerhalb der Ausfallenden des Hinterrades anzuordnen.

Nachteilig an dieser Anordnung ist, dass das tragende Rahmenteil oberhalb der beiden Laufräder angeordnet ist, so dass nutzungstaugliche Tretlagerhöhen der direkt unterhalb des tragenden Rahmenteils angeordneten Tretlagers konstruktionsbedingt nur für Laufradgößen bis maximal 10 Zoll erreicht werden beziehungsweise für größere Laufräder das Tretlager über einen kreuzrahmenähnlichen Rahmen weiter unterhalb des waagerechten Rahmenträgers angeordnet werden müsste.

Konstruktionsbedingt besteht weiter der Nachteil, dass eine spezielle nicht handelsübliche Hinterradbremse vorgesehen werden muss, die im vorliegenden Fall von einem Trethebel bedient wird, wobei der Drehpunkt des Trethebels zwischen dem Hinterrad und dem Tretlager angeordnet werden muss mit der Folge, dass zwischen der Tretlagerachse und dem Außenumfang des Hinterrades horizontal gemessen ein Platzbedarf von mehr als 10 cm erforderlich ist, um die Bremskonstruktion unterbringen zu können. Die Hinterbaulänge von circa 21 cm wird damit konstruktionsbedingt nur für Laufräder von 8 Zoll Größe verwirklicht. In einer Ausführung des Fahrrades mit 10 Zoll großen Laufrädern würde deshalb bereits eine Hinterbaulänge von mehr als 25 cm resultieren.

Aufgrund der Anordnung und Führung des Lenkers und der für ein 8-Zoll-Laufrad erzielbaren Hinterbaulänge von 21 cm resultiert bei dem gezeigten Radstand von circa 72 cm eine Gewichtsverteilung des Fahrers zu maximal 71 % auf das Hinterrad und zu wenigstens 29 % auf das Vorderrad.

Für einen beispielsweise 100 kg schweren Fahrer resultieren damit konstruktionsbedingt etwa folgende Kräfteverhältnisse zwischen dem Hinterrad und dem Bodenbelag: Da der Fahrer im Stehen fährt, setzt er sein gesamtes Gewicht auf die Pedale. Damit wird auf ein 8-Zoll-Hinterrad bei der genannten Entfaltung von 3,8 m/Kurbelumdrehung und einer Tretkurbellänge von wenigstens 130 mm ein Drehmoment von etwa 100 x 9,81 x 130 x 8 Zoll x pi / 3.830 = 21.250 Nmm ausgeübt. Das heißt zwischen Hinterrad und Bodenbelag wirkt eine tangentiale Kraft von 21.250/8 Zoll*2 = 209 N. In diesem Moment befindet sich die Pedale am vordersten Punkt, das heißt 210 mm + 130 mm = 340 mm von der Hinterradachse entfernt. Damit lastet unter Berücksichtigung des Radstandes von 720 mm auf dem Hinterrad eine Gewichtskraft von 100 x 9,81 x (1- 340/720) = 518 N. Um eine ausreichende Haftung des Hinterrades zum Boden zu erreichen, muss daher der Reibungskoeffizient zwischen Hinterrad und Bodenbelag wenigstens 0,4 betragen, um ein Durchrutschen des Hinterrades auf dem Boden zu verhindern. Außerdem ist aufgrund der Verwendung kleiner Laufräder der Einsatz von Luftreifen sehr ungünstig beziehungsweise sogar unmöglich. Dies zusammengenommen ist das Fahrrad nur eingeschränkt zum Fahren auf nassen und/oder weniger festen Untergründen wie Erde oder Schotter geeignet.

Der Rahmen besteht aus einem vorderen und einem hinteren Rahmenteil, die, um ein günstiges Packmaß zu erreichen, ineinander geschoben werden können und daher konstruktionsbedingt in gerader Linie ausgeführt sind. Konstruktionsbedingt muss daher das Tretlager unterhalb des hinteren Rahmenteils angeordnet werden, um einerseits das Ineinanderschieben der Rahmenteile zu ermöglichen und andererseits den Lasttrum der Kette unterhalb der Ausfallenden des Hinterrades führen zu können. Da das mit dem vorderen Rahmenteil verbundene Steuerkopfrohr, um das angestrebte günstige Packmaß zu erreichen, unmittelbar über dem Vorderrad angeordnet ist und somit der Lenker unmittelbar über dem Steuerkopfrohr demontiert oder zusammengeklappt werden kann, besteht der konstruktionsbedingte Nachteil, dass in der gezeigten Ausführung mit 8 Zoll-Laufrad nur eine Tretlagerhöhe von circa 22 cm erreicht werden kann. In einer Ausführung mit 9-Zoll-Laufrad kann entsprechend nur eine Tretlagerhöhe von 24 cm erreicht werden. Des weiteren besteht der Nachteil, dass zwischen dem vorderen und dem hinteren Rahmenteil Biegemomente wirken, die eine über die Darstellung hinausgehende, beide Rahmenteile überdeckende Mindesteinschublänge erfordern.

Schließlich liegt der vorgesehene Steuerkopfwinkel nicht innerhalb der normgerechten 65 - 75°. Dies hat den Nachteil der schlechteren Steuerfähigkeit des Fahrrades.

Bei allen Fahrrädern mit Kettengetrieben, die im Stehen gefahren werden und/oder die kleine Laufräder von weniger als 20 Zoll Größe aufweisen, besteht der weitere Nachteil, dass der Abtriebs-Zahnkranz des Kettengetriebes zwischen dem Fahwadrahmen und dem Hinterrad angeordnet ist, wobei auch ein etwaiger das Hinterrad tragender Kettenschutz als Teil des Fahrradrahmens gilt.

Diese Anordnung hat die konstruktionsbedingten Nachteile,

- dass im Falle eines einstufigen Kettenantriebes der Abtriebs-Zahnkranz wenigstens 9 Zähne aufweisen muss, wodurch bereits für 12-Zoll-Laufräder ein Antriebskettenrad mit wenigstens 52 Zähnen gewählt werden sollte, um angemessene Entfaltungen erreichen zu können.

- dass aufgrund des am Hinterrad außen liegenden Rahmens und den Befestigungsschrauben für die Hinterradachse eine Mindest-Baubreite der Hinterradachsaufhängung von wenigstens 120 mm erforderlich wird,

- dass die Hinterbaustreben im Falle eines einstufigen Kettengetriebes und eines außen liegenden Antriebs-Kettenrades vom Tretlager zur Hinterradachse eine Kurve beschreiben müssen, wobei relativ große Pedalabstände oder entsprechende Hinterbaulängen gewählt werden müssen, damit zwischen der Tretkurbel und dem Fahrradrahmen beziehungsweise der Hinterradachse beziehungsweise der Befestigungsschraube für das Hinterrad ein ausreichender Abstand vorhanden ist.

Beispiele für diese Ausführungsform finden sich wiederum in den Fahrrädern MCS 16" und MCS across the city der Firma Maderna Cycle Systems, Wien, Österreich, bei denen die Hinterbaulänge mehr als 23 cm beträgt.

In DE 152 616 A ist ein kompaktes zusammenlegbares Fahrrad beschrieben, dass folgende Nachteile hat:

Nachteilig ist, dass die Pedale konstruktionsbedingt nicht mit einer Tretkurbel, sondern drehbar mit der an ihren Enden exzentrischen Kurbelwelle verbunden ist. Dabei beträgt die Exzentrität zwischen der Kurbelwelle und der Pedalachse konstruktionsbedingt nur wenige Zentimeter. Der Krafteinsatz des Fahrers führt nur zu einem sehr kleinen Antriebsdrehmoment, womit keine alltagstauglichen Beschleunigungen mit dem Fahrrad erreicht werden.

Das Vorderrad ist konstruktionsbedingt etwa halb so groß wie das Hinterrad, damit das angestrebte geringe Packmaß erreicht werden kann. Bei Verwendung eines größeren Vorderrades würde darüber hinaus der erfindungswesentliche Gedanke des Fahrrades nicht mehr umgesetzt werden können. Zur Erzielung des angestrebten Packmaßes liegt die Kurbelwelle konstruktionsbedingt etwa auf gleicher Höhe wie die Hinterradachse. Aus diesem Grund ist zur Realisierung der angestrebten Fahrradgeometrie in Verbindung mit den erforderlichen Tretlagerhöhen konstruktionsbedingt ein 16-Zoll-Laufrad als Hinterrad zu verwenden. Unabhängig von der Laufradgröße besteht der Nachteil, dass angemessene Tretkurbellängen aufgrund der Fahrradgeometrie in Verbindung mit der erforderlichen Bodenfreiheit der Pedale konstruktionsbedingt nicht realisierbar sind.

Es wird ein innenliegendes Kettenrad verwendet, wodurch nicht die üblicherweise eingesetzten Tretkurbeln verwendet werden können.

Der Winkel des Steuerkopfrohres muss wie gezeigt mehr als 85 ° betragen, damit das geringe Packmaß erreicht werden kann. Dadurch kann das Vorderrad nicht normgerecht mit einer Bremsverzögerung von wenigstens 3,4 m/s$^2$ abgebremst werden, ohne dass das Hinterrad vom Boden abhebt.

Um das Fahrrad zusammenzulegen, müssen Vorderrad, Lenker und Steuerkopfrohr demontiert werden.

Es wird ein innerhalb des Rahmens liegendes Zahnrädergetriebe verwendet. Um einen ungestörten Zahneingriff des Zahnrädergetriebes zu erreichen, muss die Rahmenkonstruktion entsprechend steif ausgeführt werden.

Das Fahrrad ist mit einem Rahmen versehen, der konstruktionsbedingt zu beiden Seiten von Hinterrad und Vorderrad je ein Seitenblech aufweist und damit zwischen den Ausfallenden des Hinterrades und dem Tretlagergehäuse sowie zwischen dem Tretlagergehäuse und der Vorderradaufhängung wenigstens zweistückig ausgeführt ist.

Die größte Packmaßlänge des zusammengelegten Fahrrades beträgt wenigstens 65 cm.

Im Folgenden sind wesentliche Aspekte des zuvor beschriebenen Standes der Technik nochmals hervorgehoben:

a. Alle bekannten Fahrräder, die im Stehen gefahren werden, weisen einen in Fahrtrichtung gesehen nach vorn weisenden Vorbau und/oder nach vorn weisende Lenkergriffe und einen horizontalen Anteil des Abstandes zwischen Tretlagerachse und Lenkrohrkopf von mehr als 300 mm auf. Das Lenk- und Bremskonzept der Fahrräder sieht vor, dass sich der Fahrer beim Bremsen mit seinen möglichst gestreckten Armen so gegen den Lenker abstützt, dass er seine Position zum Fahrrad beibehält mit den vorgenannten Nachteilen betreffend die Fahrstabilität und Fahrsicherheit.

b. Alle bekannten Fahrräder mit Laufrädern von höchstens 16 Zoll sehen für den Fahrradantrieb entweder ein Kettengetriebe mit einem axial gesehen zwischen dem Fahrradrahmen und dem Hinterrad angeordneten Abtriebs-Zahnkranz oder mit einem axial gesehen auf der dem Fahrradrahmen gegenüber liegenden Seite des Hinterrades angeordneten Abtriebs-Zahnkranz vor, wobei auch ein etwaiger das Hinterrad tragender Kettenschutz als Teil des Fahrradrahmens gilt, mit den vorgenannten Nachteilen betreffend die Breite des Hinterbaus und/oder die erforderlichen Hinterbaulängen.

c. Alle bekannten Fahrräder, die konstruktiv verwirklicht werden können und die Tretkurbeln zum Antrieb einsetzen, weisen Faltkonzepte auf, die lediglich ein Faltmaß von mehr als H+B+T = 115 cm erreichen. Die Summe der beiden längsten Seiten des Faltmaßes aller bekannten Fahrräder beträgt mehr als 100 cm. Die längste Faltmaßlänge aller bekannten Fahrräder beträgt mehr 55 cm.

d. Alle bekannten Fahrräder haben den Nachteil, dass sie entweder keine angemessene Entfaltung von wenigstens 4,5 m pro Kurbelumdrehung erreichen, um eine nutzungstaugliche Geschwindigkeit mit einer vertretbaren Kurbelfrequenz zu erreichen oder dass sie zwar die Entfaltung erreichen, dabei aber eine Hinterbaulänge von mehr als 23 cm aufweisen.

e. Damit das Hinterrad auf dem Bodenbelag beim Beschleunigen im Stehen nicht durchrutscht, muss für alle Fahrräder mit einer durchschnittlichen Laufradgröße von höchstens 380 mm und einem außerhalb des Fahrradrahmens angeordneten Antriebsrad des Fahrradantriebes der Reibungskoeffizient für die Reibpaarung Hinterrad zu Bodenbelag wenigstens 0,4 betragen. Damit besteht grundsätzlich die Gefahr des Durchrutschens auf erdigem und/oder nassem Untergrund.

Darstellung der Erfindung

Demgegenüber besteht die Aufgabe der Erfindung darin, ein zusammenklappbares Fahrrad zu entwickeln,

a. das die Lücke zwischen zwar leichtem, aber energieaufwändig zu fahrendem Tretroller und schwerem, aber energieeffizient zu fahrendem Faltrad schließt,

b. das kleinere Faltmaße ermöglicht und möglichst leichter ausgeführt werden kann als bislang bekannte und realisierbare Fahrräder.
Zur Lösung dieser Aufgabe bei einem gattungsgemäßen Fahrrad dienen die kennzeichnenden Merkmale des Anspruchs 1.
Darüber hinaus weist das Fahrrad der Erfindung weitere vorteilhafte Ausgestaltungen auf,

c. deren Haftungsvermögen des Hinterrades beim Beschleunigen im Stehen trotz kleiner Laufräder möglichst ähnliche Eigenschaften aufweist wie handelsübliche Erwachsenenfahrräder mit einer Laufradgröße von 26 beziehungsweise 28 Zoll.

d. deren Vorderrad beim Beschleunigen zumindest aus den schwereren Gängen ähnlich einem Erwachsenenfahrrad mit einer Laufradgröße von 26 beziehungsweise 28 Zoll nicht abhebt.

e. die auch mit kleinen Laufrädern ein gutes Geradeauslaufverhalten aufweisen,

f. die beim Überfahren von Hindernissen mit kleinen Laufrädern zu möglichst geringen Lenkerausschlägen führen,

g. mit denen rasche Lenkbewegungen mit kleinen Laufrädern nicht zu einer durch die Massenträgheit des Fahrers ausgelösten Übersteuerung der Lenkbewegung und zum Schlingern führen,

h. die so ausgeführt werden können, dass sie sicher abgebremst werden können, ohne dass der Fahrer nach vorn über den Lenker fällt,

i. deren Antriebssystem trotz kleiner Laufräder nutzungstaugliche Entfaltungen aufweist.

j. die das Faltmaß eines reiseüblichen Koffers, vorzugsweise eines reiseüblichen handgepäckfähigen Koffers mit den Maßen B+L+H <= 115 cm einhalten,

k. die hinsichtlich des Gewichtes deutlich weniger als 10 kg wiegen mit Varianten, die die Bordgepäckbestimmungen im Flugverkehr mit einem Gewicht von höchstens 6 bis 8 kg erfüllen,

l. die aufgrund der kurzen Tretkurbellängen auch über längere Distanzen energieeffizient gefahren werden können,

m. die auch mit Hartgummireifen kleinerer Zollgröße ausgeführt werden können, um auf trockener Fahrbahn eine hohe (spaßfördernde) Kurvenneigung erreichen zu können,

n. die für Fahrer mit unterschiedlicher Körpergröße geeignet sind, wobei die günstigen Fahreigenschaften erhalten bleiben,

o. die mit unterschiedlichen Laufradgrößen zwischen 8 Zoll und 16 Zoll ausgeführt werden können,

p. die einen einfach herzustellenden Fahrradrahmen mit wenigen, einfach - vorzugsweise in Strangpressverfahren - herzustellenden Rahmenteilen aufweisen und damit kostengünstig produziert werden können,

q. wobei dieselben für den Rahmen verwendeten stranggepressten Profile für unterschiedliche Laufradgrößen einsetzbar sind,

r. die einen schmalen Pedalabstand aufweisen und ein ergonomisch günstiges Fahren ermöglichen,

s. die mit handelsüblichen Komponenten wie Bremsen, Kurbeln, Tretlagern, Zahnkränzen etc. ausgestattet sind und kostengünstig produziert werden können,

t. die eine Mehrgangschaltung mit sechs gleichmäßig abgestuften Gängen aufweisen.

u. die normgerecht ausgeführt sind.

v. die eine optimale Bodenhaftung des Hinterrades beim Antritt im Stehen bieten.

Zur Erläuterung der Erfindungsgedanken und der Vorteilhaftigkeit der kennzeichnenden Merkmale:

Zunächst wird ein vereinfachendes Berechnungsmodell zur Ermittlung des Haftungsvermögens des Hinterrades eingeführt, das sich als gute Zusammenfassung vieler charakterisierender Eigenschaften der Erfindung erwiesen hat. Als Bestimmungsgröße wird der erforderliche Reibungskoeffizient der Reibpaarung Hinterrad-Bodenbelag ermittelt. Für das vereinfachte Berechnungsmodell wird angenommen, dass das Beschleunigen der kleinen Laufräder beim Fahren im Stehen erfolgt.

Die Kräfteverhältnisse zwischen dem Hinterrad und dem Bodenbelag beim Beschleunigen im Stehen werden zur Formulierung eines kennzeichnenden Merkmals in folgendem vereinfachten Modell betrachtet:

Der Fahrradfahrer setzt beim Fahren im Stehen sein gesamtes Gewicht auf die Pedale ein, wobei die Pedale dabei in der vordersten Stellung ist. Seine Gewichtskraft wirkt dabei senkrecht auf die Pedale. Das auf das Hinterrad wirkende Drehmoment ermittelt sich aus dem von der Tretkurbel aufgenommenen Drehmoment multipliziert mit dem Übersetzungsverhältnis des Antriebssystems des Fahrrades, wobei das Übersetzungsverhältnis als das Verhältnis zwischen der Drehzahl der Tretkurbel geteilt durch die Drehzahl des Hinterrades definiert wird. Dabei werden zur Vereinfachung folgende Parameter gesetzt: die Gewichtskraft von Fahrrad und Fahrer zusammen beträgt 115% der Gewichtskraft des Fahrers (dies entspricht einem 12 kg schweren Fahrrad, das von einem 80 kg schweren Fahrer gefahren wird beziehungsweise einem 10,5 kg schweren Fahrrad, das von einem 70 kg schweren Fahrer gefahren wird) und der Schwerpunkt des Fahrrades liegt auf einer senkrechten Linie mit dem Schwerpunkt des stehend fahrenden Fahrers.

Für den erforderlichen Reibungskoeffizienten für die Reibpaarung Hinterrad-Bodenbelag folgt dann vereinfa-

chend:

Mit

$$G = \text{Gewichtskraft des Fahrers}$$

$$TKL = \text{Tretkurbellänge}$$

HBL = Hinterbaulänge, das heißt horizontaler Abstand zwischen der Hinterradachse und der Tretlagerachse

AA = Radstand, das heißt horizontaler Abstand zwischen der Hinterradachse und der Vorderradachse

$$Ut = \text{Drehzahl der Tretkurbel}$$

$$Uh = \text{Drehzahl des Hinterrades}$$

$$\ddot{U} = \text{Übersetzung des Fahrradantriebes} = Ut / Uh$$

$$Da = \text{Außendurchmesser des Hinterrades}$$

$$M = \text{Auf das Hinterrad wirkendes Drehmoment} = G * TKL * \ddot{U}$$

$$Ft = \text{Aus M resultierende Tangentialkraft Ft zwischen Hinterrad und Bodenbelag} = M / Da * 2$$

$$Fg = \text{Auf das Hinterrad wirkende Gewichtskraft des Fahrers}$$

$$Rerf = \text{Erforderlicher Reibungskoeffizient für die Reibpaarung Hinterrad-Bodenbelag}$$

gilt:

$$Fg = G * (1 - (TKL+HBL)/AA) * 1{,}15$$

$$Ft = M / Da * 2 = TKL * G * \ddot{U} / Da * 2$$

$$Rerf = Ft / Fg = (TKL * \ddot{U} / Da * 2) / (1 - (TKL+HBL) / AA) / 1{,}15$$

Der erforderliche Reibungskoeffizient gibt damit an, für welchen Untergrund mit welchen Laufrädern und damit in welcher daraus resultierenden Reibpaarung Hinterrad - Untergrund das Fahrrad gefahren werden kann, ohne dass das Hinterrad beim Beschleunigen im Stehen durchrutscht.

Für Erwachsenen-Fahrräder mit 26- beziehungsweise 28-Zoll-Laufrädern errechnet sich aus der obigen Gleichung ein erforderlicher Reibungskoeffizient von Rerf etwa 0,32. Wird dieser Wert in die obige Gleichung eingesetzt, kann ein allgemeines von der Erfindung erfülltes Merkmal formuliert werden:

$$\text{Bemessungswert} = 1 \geq \text{TKL} / \text{AA} + \text{HBL} / \text{AA} + \text{TKL} * 5,4 * \ddot{\text{U}} / \text{Da}$$

wobei sich der Faktor F = 5,4 durch F = 2 / 0,32 / 1,15 errechnet.

Das Berechnungsmodell bietet damit den besonderen Vorteil, dass ein vom Fahrer unabhängiger Bemessungswert gebildet wird, um die charakterisierenden Eigenschaften der Erfindung für verschiedene Laufradgrößen zu beschreiben und verschiedene Fahrräder durch Zurückführung auf die geometrische Werte des Fahrrades anhand von Zeichnungen zu vergleichen.

Bekannte Fahrräder mit einer durchschnittlichen Laufradgröße von weniger als 16 Zoll mit kostengünstig gestaltbaren Fahrradantrieben, bei denen also das Antriebsrad des Zugmittelgetriebes gemeinsam mit der Tretkurbel auf der gleichen Seite des Tretlagers angeordnet ist und bei denen der Abstand zwischen der Tretlagerachse und der Hinterradachse größer ist als der halbe Außendurchmesser des Hinterrades, erreichen lediglich Bemessungswerte von mehr als 1,02. Durch die Erfindung werden Bemessungswerte von 1,00 und weniger erreicht. Dies führt unter anderem zu einer Verbesserung des Durchrutschverhaltens des Hinterrades auf nassem und/oder erdigem und/oder auch sandigem Untergrund gegenüber allen bekannten Fahrrädern mit durchschnittlichen Laufradgrößen von weniger als 16 Zoll.

Die Einhaltung eines Bemessungswertes von 1,00 oder weniger wird für kleine Laufräder erreicht, weil die Hinterbaulänge und die Tretkurbel kurz genug ausgeführt sind und die Übersetzung des Fahrradantriebes klein genug ist, um trotz der kleinen Laufräder nutzungstaugliche Entfaltungen zu erreichen.

Der Bemessungswert ist daher auch ein geeignetes charakterisierendes Merkmal für die Kompaktheit des Fahrrades zwischen Tretlager und Hinterrad in Verbindung mit der für das Fahrrad erreichten nutzungstauglichen Entfaltung und auch aus diesem Grund ein geeignetes charakterisierendes Merkmal für die Erfindung.

Die für das Fahren im Stehen gezeigten Ausführungsformen halten sogar dann einen Bemessungswert von 1,00 ein, wenn beispielsweise in der obigen Formel der Wert von F= 5,4 durch F = 2 / 0,3 / 1,15 = 5,8 ersetzt wird, womit eine nochmals bessere Bodenhaftung mit einem Rerf von circa 0,3 und eine nochmals kompaktere Ausführung bei weiterhin alltagstauglicher Entfaltung erreicht wird.

Zur Erzielung von guten Fahreigenschaften und Fahrstabilität für das Fahrrad mit kleinen Laufrädern gehören ein gutes Geradeauslaufverhalten, der Ausgleich rascher Lenkbewegungen unter anderem auch beim Überfahren von Hindernissen, ein gutes Kurvenverhalten, ein sicheres Abbremsverhalten und das Vermeiden des Abhebens des Vorderrades beim Beschleunigen.

Diese Eigenschaften werden für das Fahrrad jeweils erreicht,

- weil durch eine kurze Hinterbaulänge der Einfluss der Massenträgheit des Fahrers und ein Schlingern bei raschen Lenkbewegungen vermindert beziehungsweise der Einfluss der Massenträgheit des Fahrers auf die Lenkbewegung bei einer Hinterbaulänge von höchstens 25 cm sogar nahezu aufgehoben ist, was sich positiv auf das Geradeauslaufverhalten auswirkt.

- weil die Nähe des Lenkers zum Rumpf des die Lenkgriffe umgreifenden Fahrers ein Anlegen der Ellenbogen und/oder der Unterarme und/oder der Handgelenke an den Rumpf des Fahrers ermöglicht, was den Lenker zusätzlich stabilisiert, wodurch beim Überfahren von Hindernissen eine rasche Kurskorrektur möglich wird und wodurch der Geradeauslauf des zum Wackeln neigenden kleinen Vorderrad-Laufrades stabilisiert wird. Die Nähe des Lenkers zum Rumpf des Fahrers hat einen weiteren wichtigen Vorteil: Die Armposition des Fahrers vermeidet die bei allen bekannten im Stehen zu fahrenden Fahrrädern auftretende Muskelspannung von Schulter- und Rückenmuskulatur. Die Armhaltung des Fahrers entspricht vielmehr der eines Läufers. Der Fahrer neigt deshalb nicht mehr dazu, sich - wenn auch nur leicht - nach vorn zu beugen. Vielmehr kann er eine bleibend entspannte, aufrechte Fahrposition einnehmen.

- weil sich der Fahrer durch die Nähe des Lenkers zum Rumpf des Fahrers beim Bremsen mit seinem Rumpf gegen den Lenker oder gegen die zwischen Lenker und Rumpf positionierten Unterarme und Handgelenke abstützen kann.

- weil das Fahrrad im Stehen gefahren wird und damit trotz der kurzen Hinterbaulänge beziehungsweise wegen der geringen Abstände des Lenkers zum Rumpf des Fahrers kein Abheben des Vorderrades beim Beschleunigen möglich ist. Setzt der Fahrer beim Fahren im Stehen nur sein eigenes Gewicht für den Vortrieb ein, übt der Fahrer keinen Zug auf den Lenker aus, weswegen kein nach hinten wirkendes Kippmoment um die Hinterradachse entsteht. Beschleunigt der Fahrer darüber hinaus, indem er durch Zug auf den Lenker mit einer entsprechenden Körperspannung zusätzlichen Druck auf die Pedale ausübt, ist aufgrund der Position der Hände nahe zum Rumpf des Fahrers der Winkel zwischen der auf den Lenker wirkenden Zugkraft und der auf die Pedale senkrecht nach unten wirkenden Druck- und Gewichtskraft so gering, dass das durch die Zugkraft auf den Lenker beziehungsweise durch die Massenträgheit des Fahrers ausgelöste Kippmoment um die Hinterradachse nicht größer wird als das auf die Pedale senkrecht wirkende Druck- und Gewichtsmoment des Fahrers um die Hinterradachse, so dass das Vorderrad auch bei stärkerem Beschleunigen des Fahrrades nicht abhebt.

Dabei gilt: Je geringer der Abstand des Lenkers zum Rumpf des Fahrers und/oder je kürzer die Hinterbaulänge, desto größer ist die erreichbare Fahrstabilität und desto kleiner ist das erreichbare Faltmaß.

Das Fahrrad bietet damit eine bestmögliche Kombination aus Bodenhaftung des Hinterrades, nutzungstauglicher Entfaltung, geringem Faltmaß und Fahrstabilität.

Um ein Fahrrad mit kleinen Laufrädern und einer kurzen Hinterbaulänge so ausführen zu können, dass die gewünschte nutzungstaugliche Entfaltung bei Verwendung handelsüblicher Tretlager und Tretkurbeln und im Interesse eines möglichst kleinen Faltmaßes eine möglichst schmale Hinterradaufhängung erreicht wird, mussten betreffend das Antriebssystem des Fahrrades gemäß Aktenzeichen DE 10 2011 050 447 A1 und DE 10 2011 051 850 B3 zuvor weitere Aufgaben gelöst werden. Durch die entsprechenden Merkmale aus DE 10 2011 050 447 A1 und/oder DE 10 2011 051 850 B3 können die offenbarten kurzen Hinterbaulängen und nutzungstauglichen Entfaltungen verwirklicht werden. Dabei kommt auch zum Tragen, dass das Abtriebsrad des Zugmittel- beziehungsweise Zahnradgetriebes des Fahrradantriebes auf der gleichen Seite des Fahrradrahmens angeordnet ist wie das Antriebsrad. Aufgrund dieser Eigenschaft können die Hinterbaulängen sehr kurz gestaltet werden und trotz der kurzen Hinterbaulängen kann der Fahrradantrieb mehrgängig ausgeführt werden.

Um einen vorzugsweise eingesetzten zusammenklappbaren Rahmen mit einem geringen Gewicht zu erreichen, sollten zuvor betreffend das einzusetzende Klappgelenk und betreffend den Fahrradrahmen weitere Aufgaben gemäß DE 10 2011 052 134 A1, DE 10 2011 052 270 A1, DE 10 2011 053 733 A1 und DE 10 2011 053 875 A1 gelöst werden. Insbesondere war dabei von wesentlicher Bedeutung, dass ein Fahrradrahmen gefunden wird, der kostengünstig herzustellen ist und der zur Verwirklichung kurzer Hinterbaulängen zwischen dem Tretlager und dem Hinterrad einstückig ausgeführt ist beziehungsweise ohne schwächende Schweißverbindungen auskommt. Die entsprechenden Merkmale aus DE 10 2011 052 134 A1, DE 10 2011052 270 A1, DE 10 2011 053 733 A1 und/oder DE 10 2011 053 875 A1 ermöglichen die Ausführung des Fahrradrahmens in der Weise, dass die offenbarten kompakten Faltmaße, die angestrebten geringen Gewichte des Fahrradrahmens und die offenbarten kurzen Hinterbaulängen verwirklicht werden können.

Auf die Beschreibung weiterer von der Erfindung umfasster, nicht ganz so optimaler Varianten für das Antriebssystem wurde verzichtet.

So könnte ein weiteres von der Erfindung umfasstes Antriebssystem eine Anordnung des Abtriebs-Zahnkranzes auf der dem Hinterrad gegenüberliegenden Seite des Rahmens, an dem das Hinterrad einarmig aufgehängt ist, vorsehen. Diese Anordnung birgt jedoch die Nachteile, dass ein Kettenschutz kaum anbringbar ist und dass die Aufhängung des Hinterrades am Fahrradrahmen höheren gewichts- und stoßbedingten Biegemomentbelastungen ausgesetzt ist.

Aus den genannten Gründen beschränkt sich die nachfolgende Beschreibung auf die beschriebenen, besonders kompakt ausführbaren, bevorzugten Ausführungsformen.

Kurze Beschreibung der Zeichnungen

Fig. 1 zeigt die Seitenansicht einer ersten bevorzugten Ausführungsform des Fahrrades mit zweiseitiger Hinterradaufhängung, einer Verstelleinrichtung für den Steuerkopfwinkel und einem Fahrradantrieb mit sechs Gangstufen mit einer Getriebeeinheit mit Planetengetriebe am 14-Zoll-Hinterrad, wobei das Fahrrad von einem 2,0 m großen Menschen gefahren wird.

Fig. 2 zeigt die Vorderansicht des Fahrrades mit Fahrer aus Fig. 1

Fig. 3 zeigt in vergrößerter Darstellung den hinteren Teil des Fahrrades aus Fig. 1 in der Seitenansicht, wobei das größte Kettenrad geschaltet ist.

Fig. 4 zeigt die Ansicht des hinteren Teils des Fahrrades aus Fig. 1 von unten.

Fig. 5 zeigt das Fahrrad aus Fig. 1 in der Seitenansicht, wobei der Steuerkopfwinkel circa 65° beträgt und das Fahrrad von einem 1,4 m großen Menschen gefahren wird.

Fig. 6 zeigt in vergrößerter Darstellung den hinteren Teil des Fahrrades aus Fig. 1 in der Seitenansicht, wobei das kleinste Kettenrad geschaltet ist.

Fig. 7 zeigt das Dreifach-Kettenrad des Fahrrades aus Fig. 1 mit den Tretkurbeln, dem Tretlager und der Seitenzug-Felgenbremse für das Hinterrad, um den verfügbaren Platz für die Seitenzug-Felgenbremse zu verdeutlichen.

Fig. 8 zeigt in der Explosionsansicht den Rahmen des Fahrrades aus Fig. 1, der ein Dreikammerprofil aufweist, mit dem Steuerkopfrohr, dem vorderen Rahmenteil, dem Klappgelenk, dem hinteren Rahmenteil und den Ausfallenden für das Hinterrad.

Fig. 9 zeigt in der Schnittansicht den Verstellmechanismus für das Steuerkopfrohr, wobei in Fig. 9 der Steuerkopfwinkel von 75 ° gemäß Fig. 1 eingestellt ist.

Fig. 10 zeigt in der Schnittansicht den Verstellmechanismus für das Steuerkopfrohr, wobei in

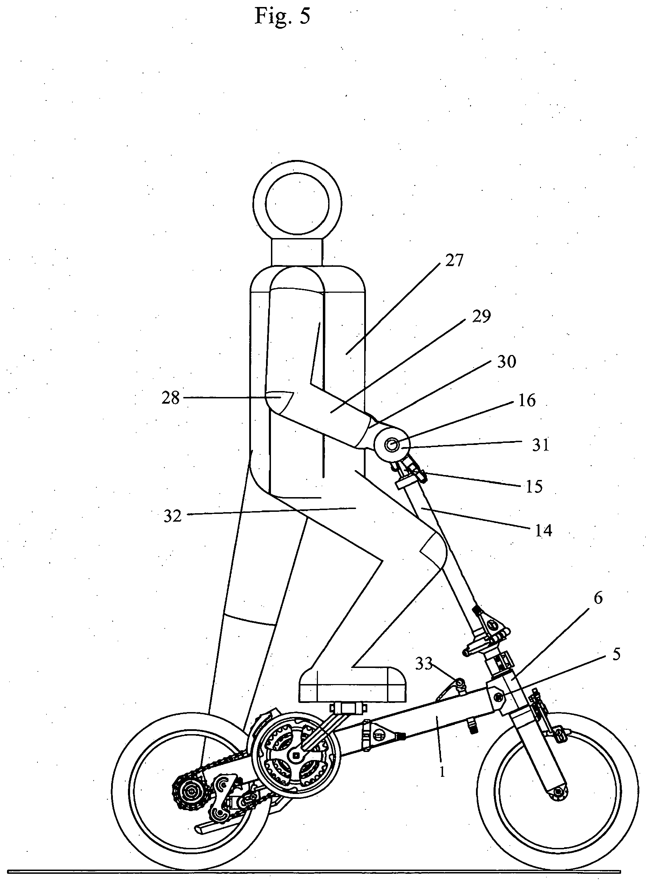

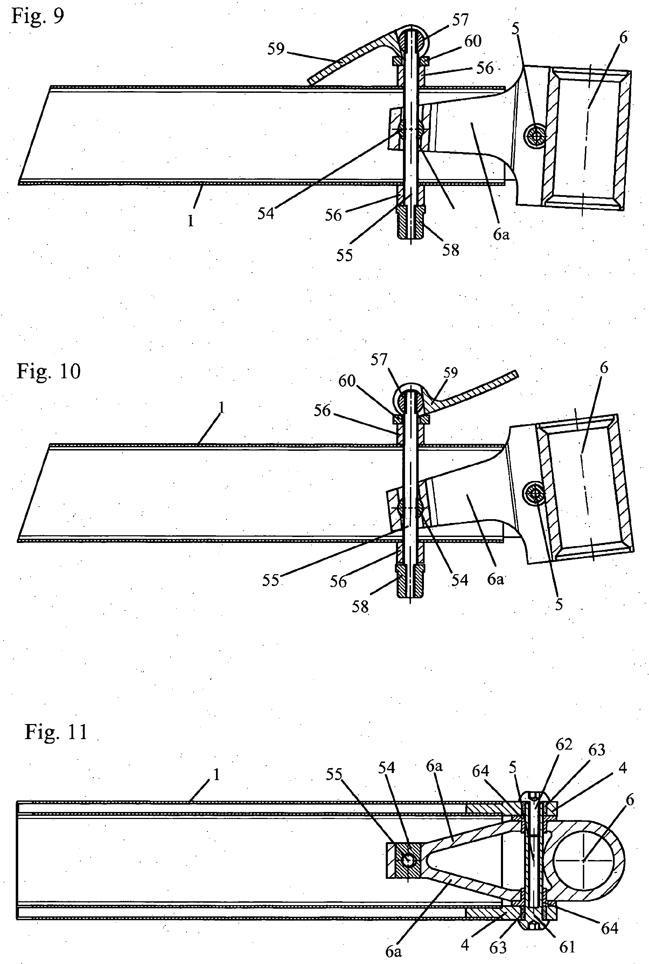

Fig. 10 der Steuerkopfwinkel von 65 ° gemäß Fig. 5 eingestellt ist.

Fig. 11 zeigt eine weitere zu Fig. 9 und Fig. 10 orthogonal stehende Schnittansicht durch den Verstellmechanismus für das Steuerkopfrohr.

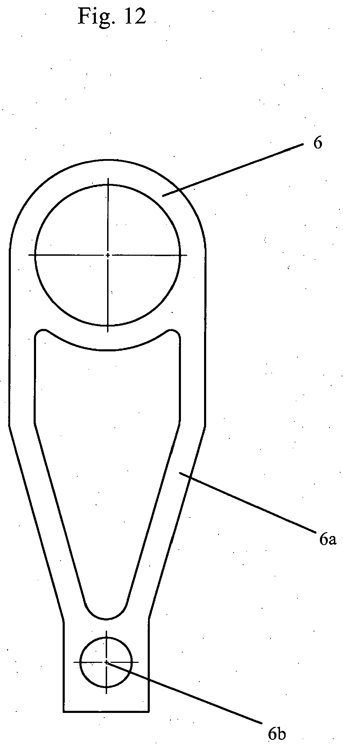

Fig. 12 zeigt das stranggepresste Profil des Steuerkopfrohres.

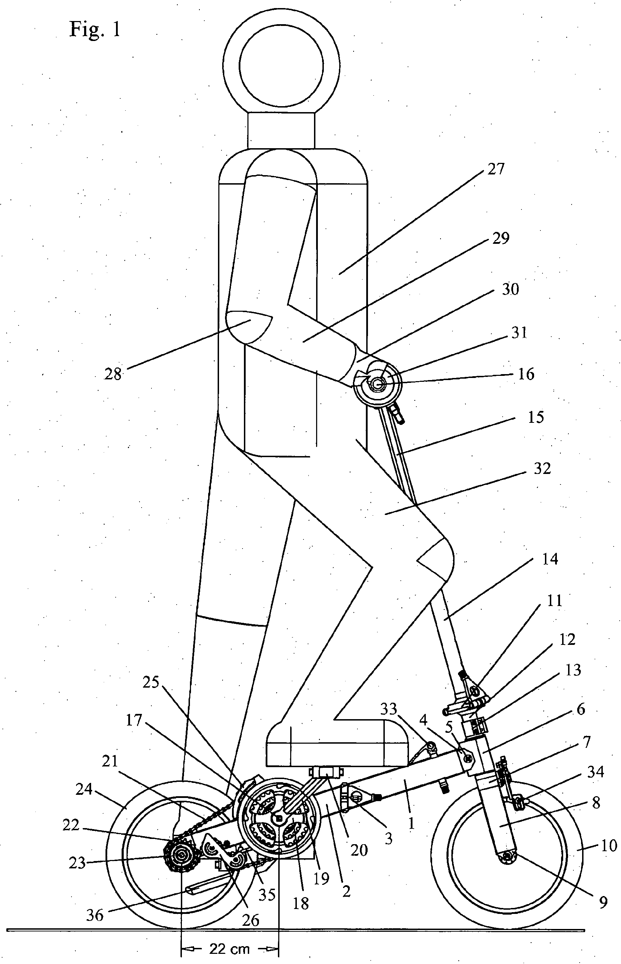

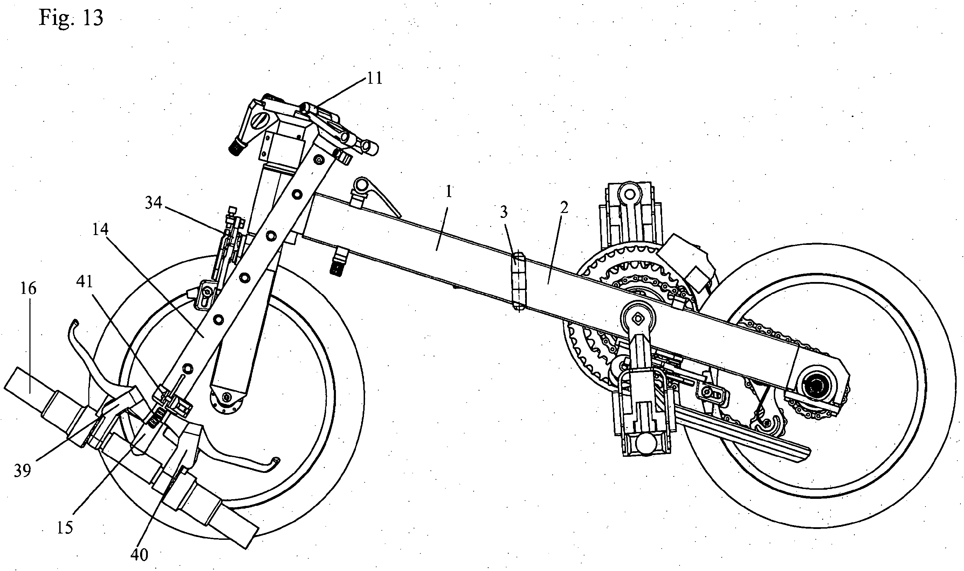

Fig. 13 zeigt eine Seitenansicht des Fahrrades aus Fig. 1 mit eingeklapptem Lenker.

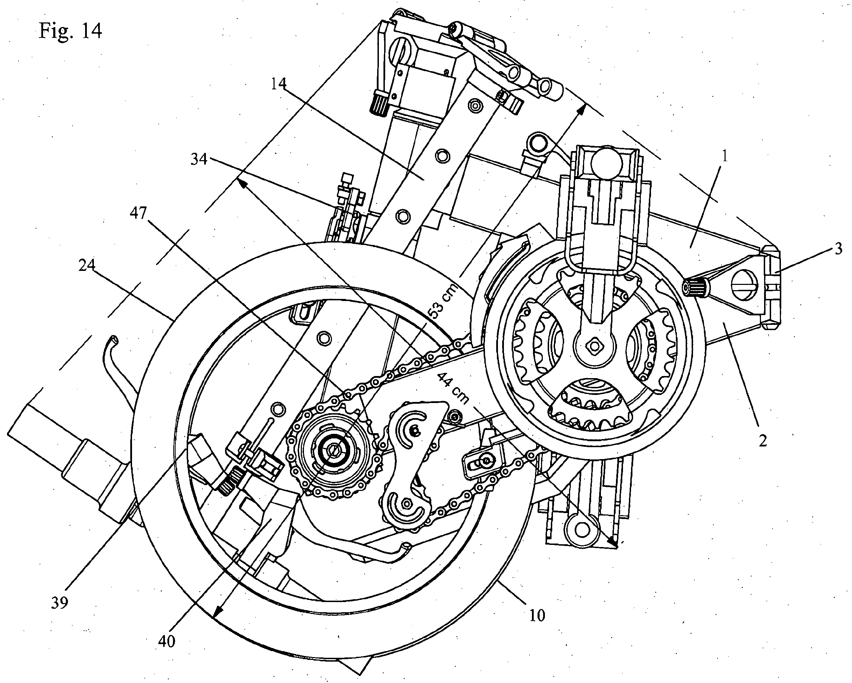

Fig. 14 zeigt eine Seitenansicht des zusammengeklappten Fahrrades aus Fig. 1.

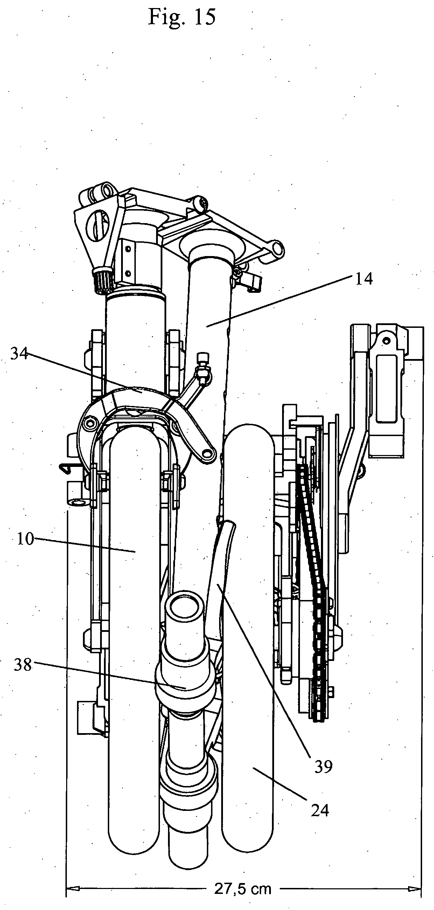

Fig. 15 zeigt die Vorderansicht des zusammengeklappten Fahrrades aus Fig. 1.

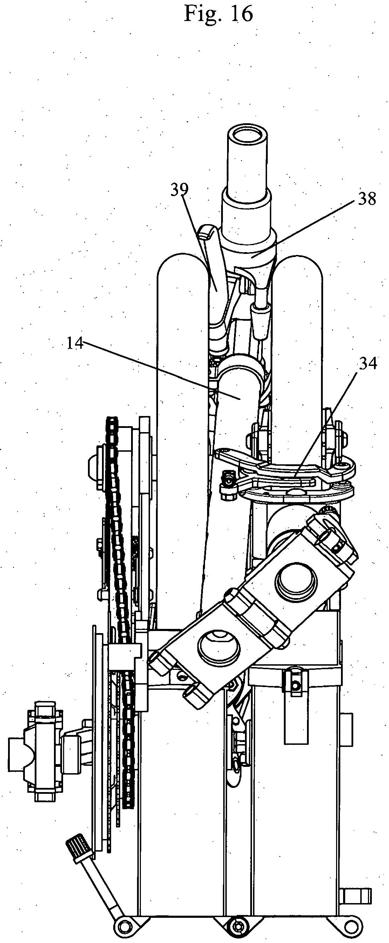

Fig. 16 zeigt die Draufsicht des zusammengeklappten Fahrrades aus Fig. 1

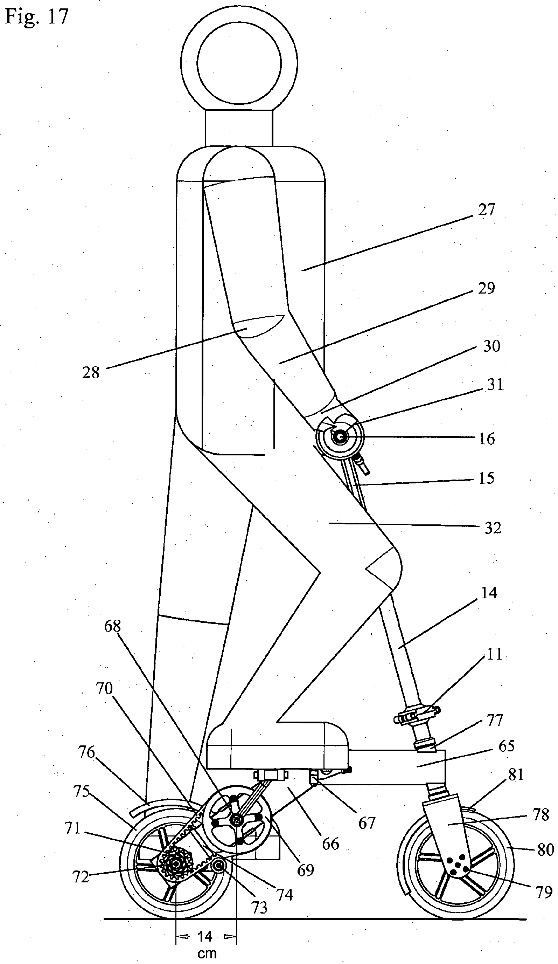

Fig. 17 zeigt die Seitenansicht einer zweiten bevorzugten Ausführungsform des Fahrrades mit einseitiger Hinterradaufhängung, einem Zahnriemengetriebe mit nachgeschaltetem Planetengetriebe, 10-Zoll-Vollkunststoff-Laufrädern und einer Radschutzbremse, wobei das Fahrrad von einem 2,0 m großen Menschen gefahren wird.

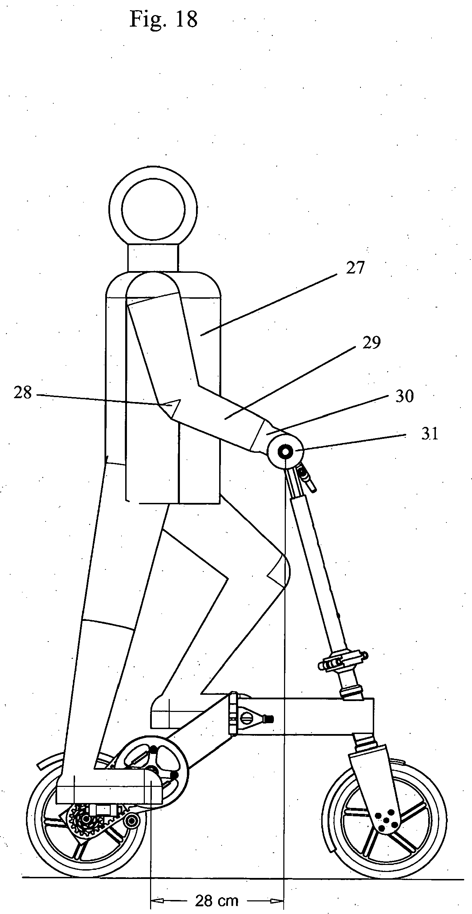

Fig. 18 zeigt die Seitenansicht des Fahrrades aus Fig. 17 mit einem 1,4 m großen Menschen, der das Fahrrad fährt.

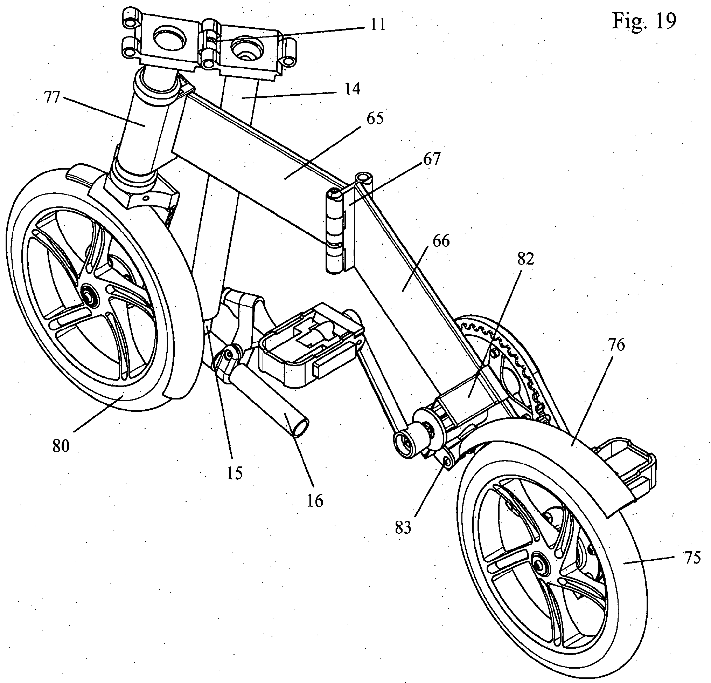

Fig. 19 zeigt eine weitere Ansicht des Fahrrades aus Fig. 17 mit eingeklapptem Lenker.

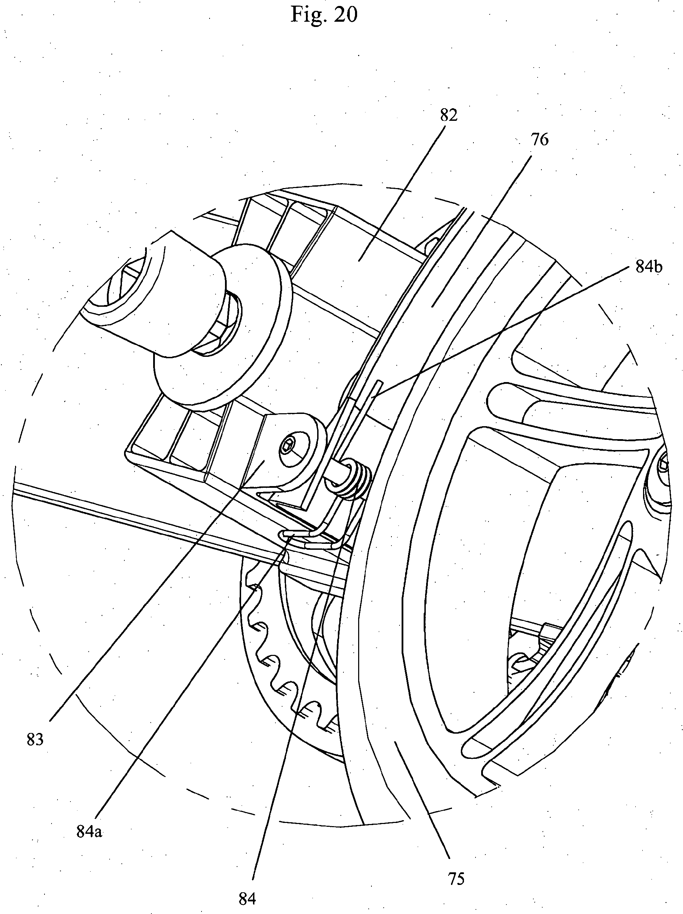

Fig. 20 zeigt in einer Detailansicht die Anordnung der Rückstellfeder für die Radschutzbremse.

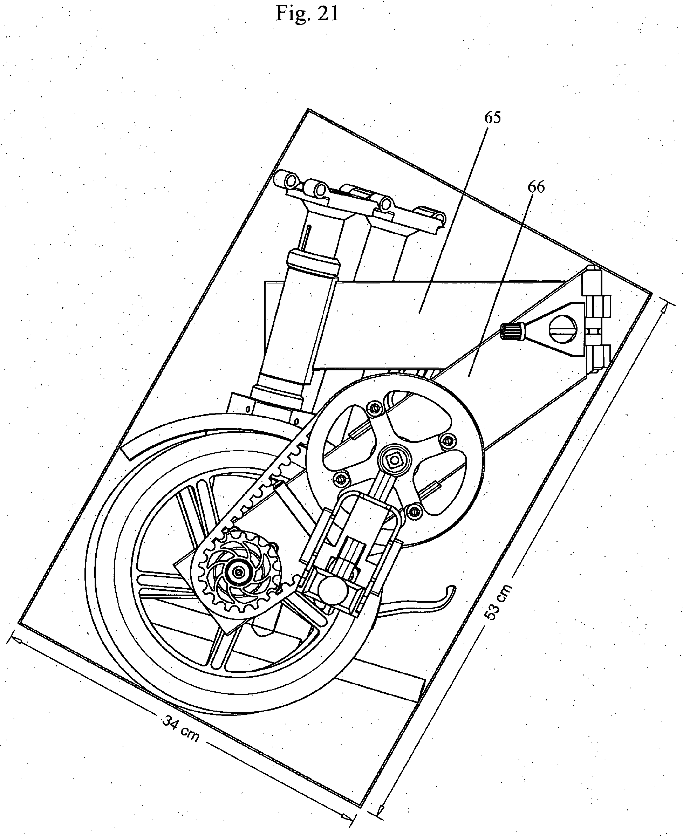

Fig. 21 zeigt das zusammengeklappte Fahrrad aus Fig. 17 in der Seitenansicht.

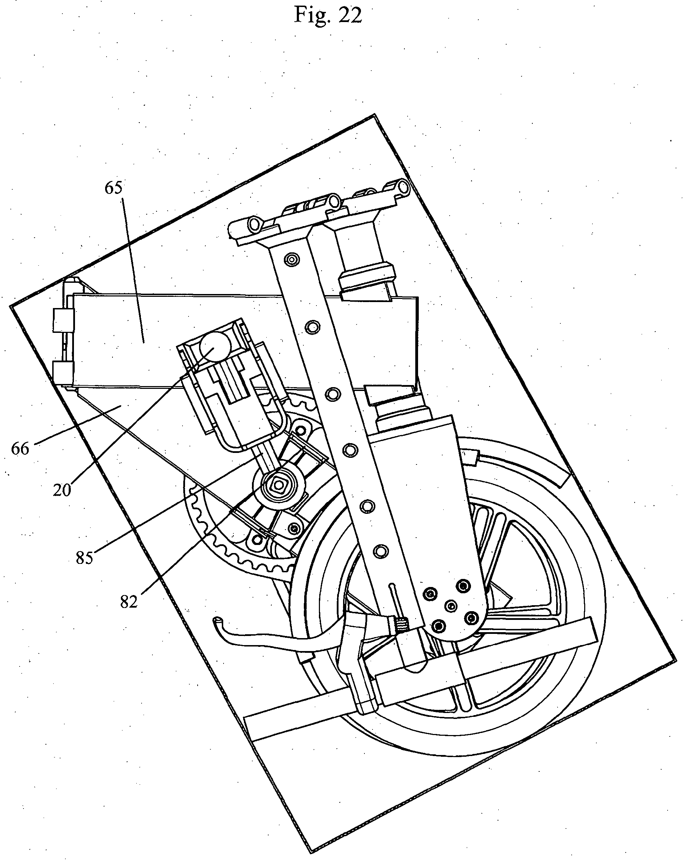

Fig. 22 zeigt das zusammengeklappte Fahrrad aus Fig. 17 in der anderen Seitenansicht.

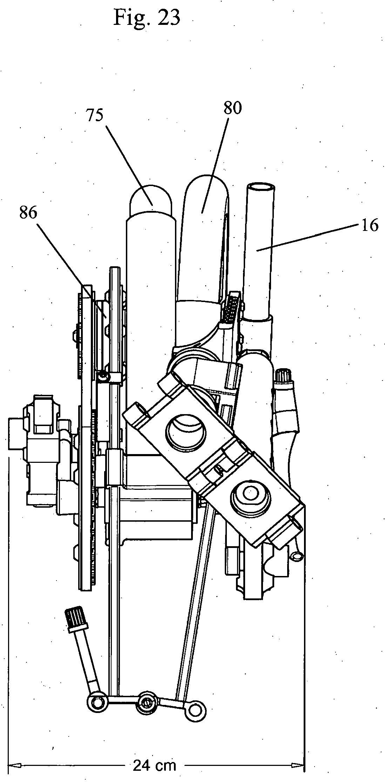

Fig. 23 zeigt das zusammengeklappte Fahrrad aus Fig. 17 in der Draufsicht.

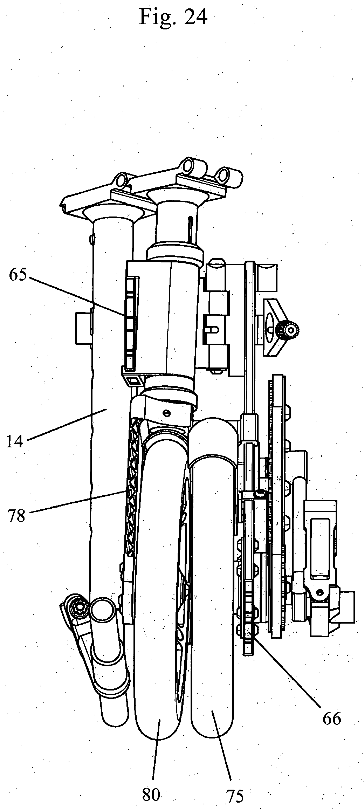

Fig. 24 zeigt das zusammengeklappte Fahrrad aus Fig. 17 in der Vorderansicht.

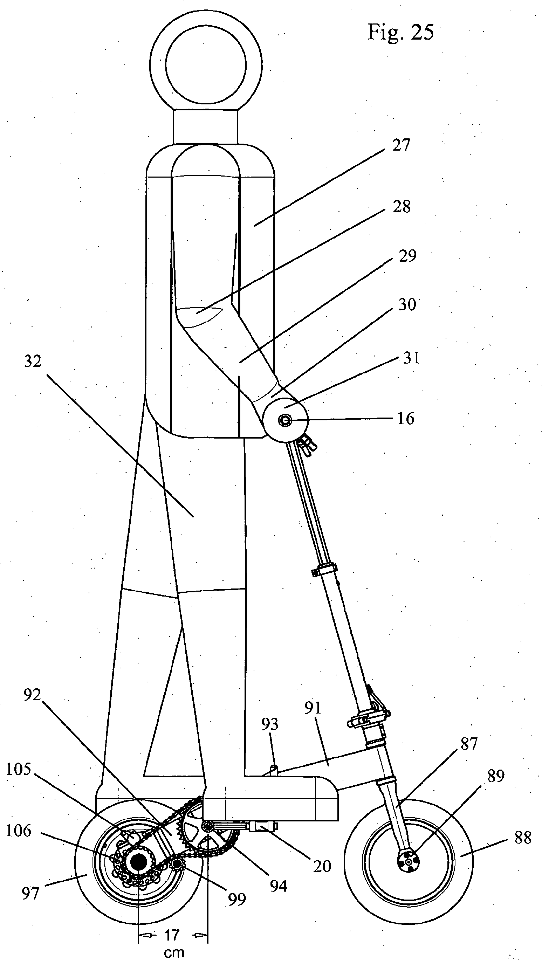

Fig. 25 zeigt die Seitenansicht einer dritten bevorzugten Ausführungsform des Fahrrades mit einseitiger Hinterradaufhängung, einem Kettengetriebe mit nachgeschaltetem Planetengetriebe, einer Scheibenbremse und mit 12-Zoll-Laufrädern mit einem besonders breiten Reifen.

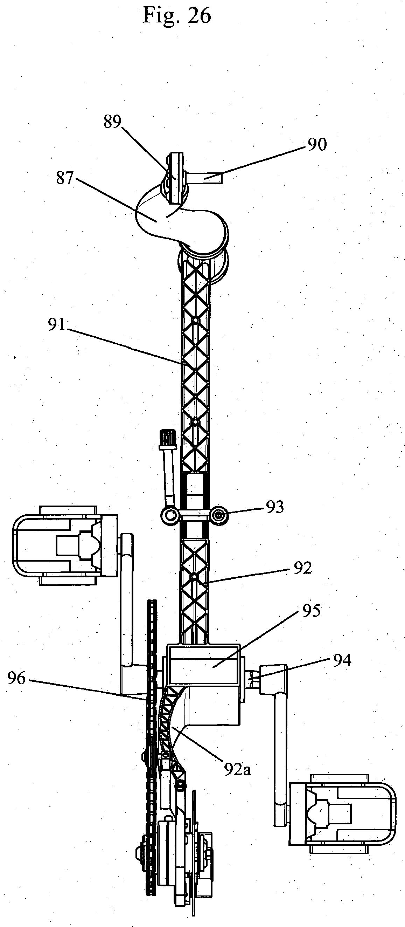

Fig. 26 zeigt eine Ansicht des Fahrrades aus Fig. 25 von unten ohne die Laufräder.

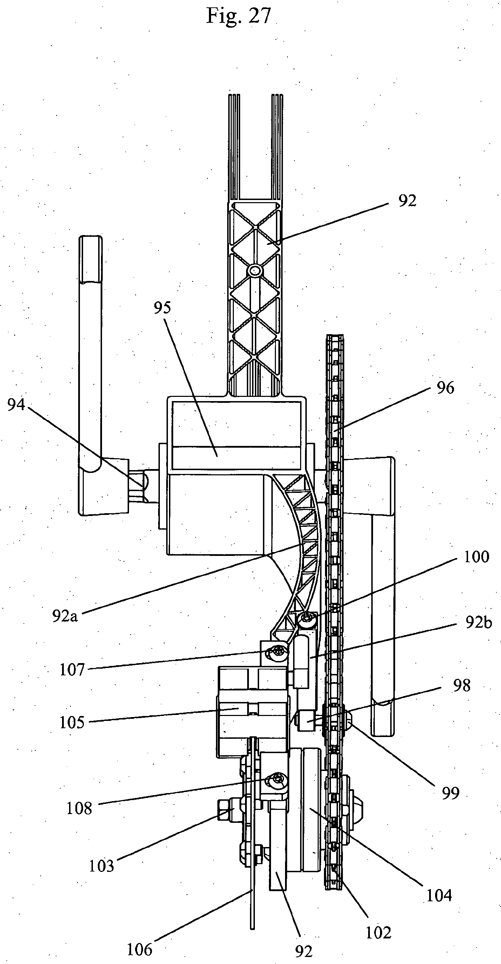

Fig. 27 zeigt eine Rückansicht des hinteren Teils des Fahrrades zur Verdeutlichung der Anordnung der Scheibenbremse und der Rahmenversätze.

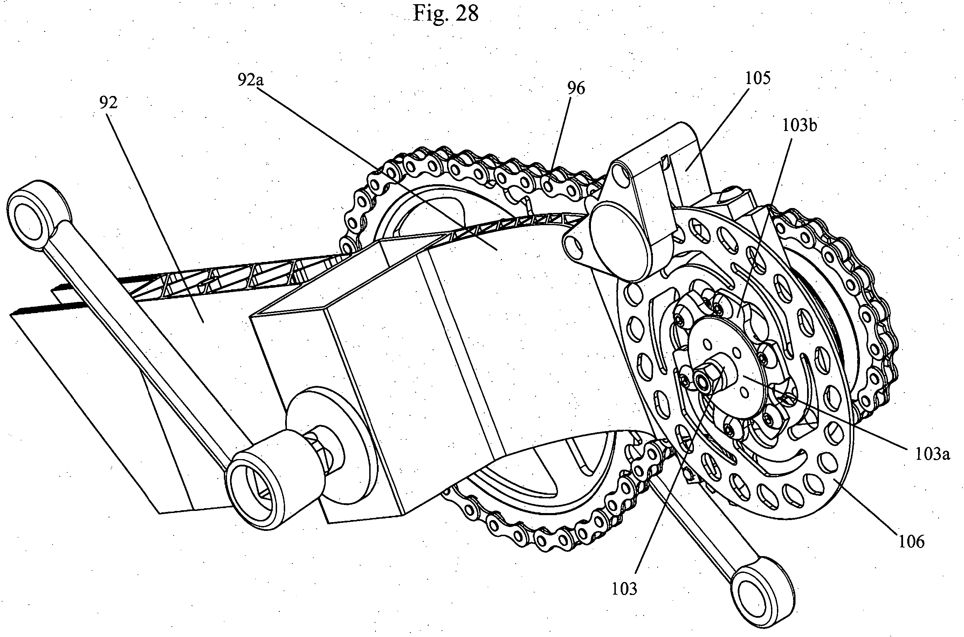

Fig. 28 zeigt eine vergrößerte Ansicht des hinteren Teil des Fahrrades zur Verdeutlichung der Anordnung der Scheibenbremse.

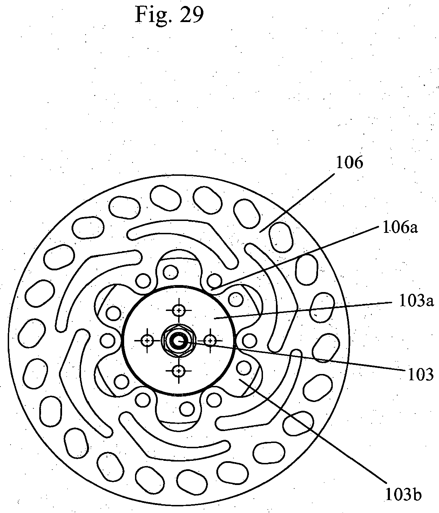

Fig. 29 zeigt die Bremsscheibe der Scheibenbremse in Verbindung mit dem Hinterradflansch, an dem die Bremsscheibe befestigt ist, in der Montagestellung.

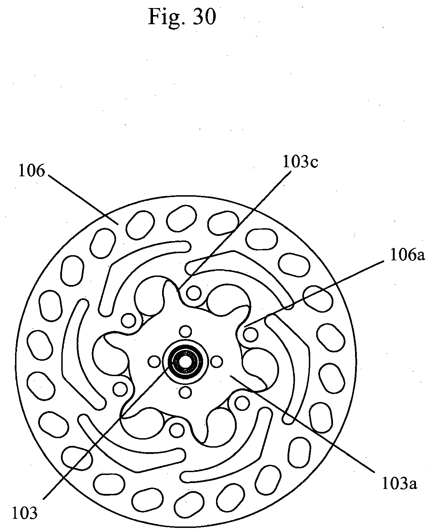

Fig. 30 zeigt die Bremsscheibe und den Hinterradflansch im eingebauten Zustand.

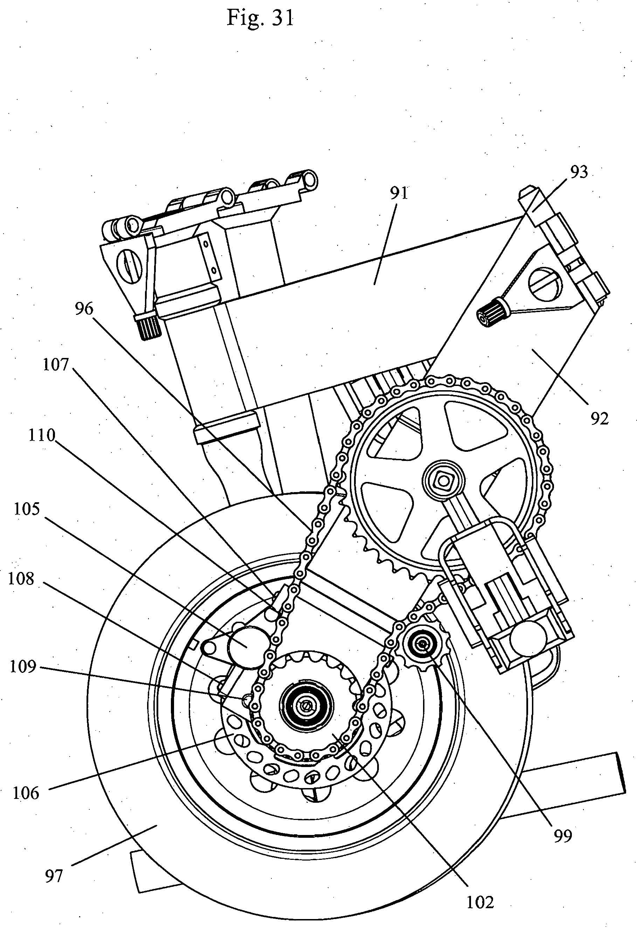

Fig. 31 zeigt das zusammengeklappte Fahrrad aus Fig. 25 in der Seitenansicht.

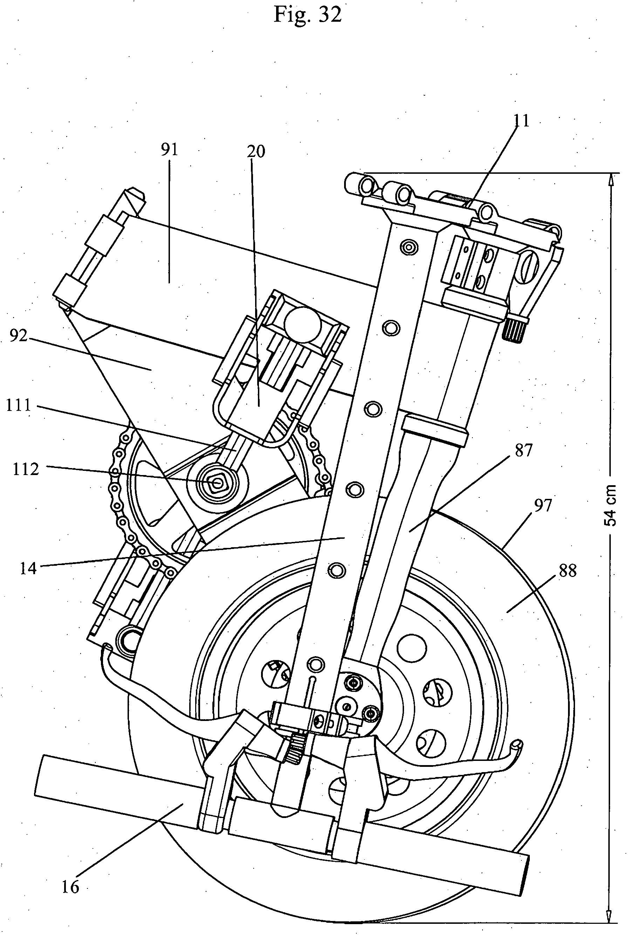

Fig. 32 zeigt das zusammengeklappte Fahrrad aus Fig. 25 in der anderen Seitenansicht.

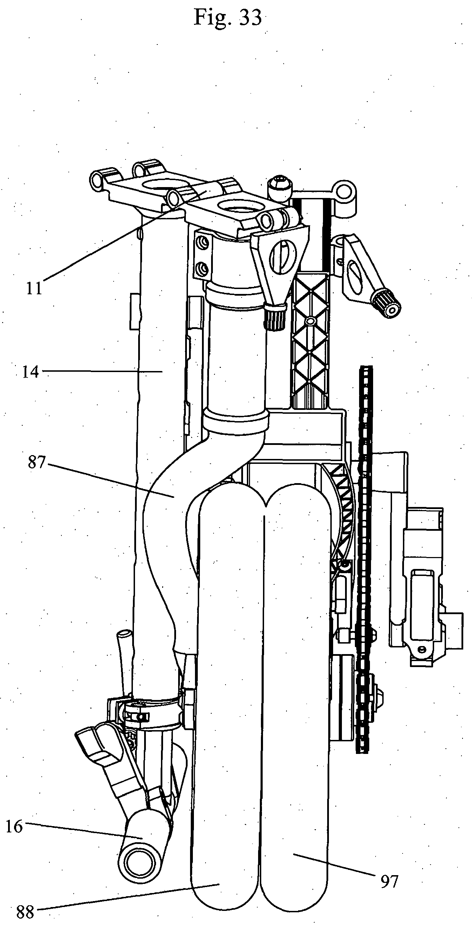

Fig. 33 zeigt das zusammengeklappte Fahrrad aus Fig. 25 in der Vorderansicht.

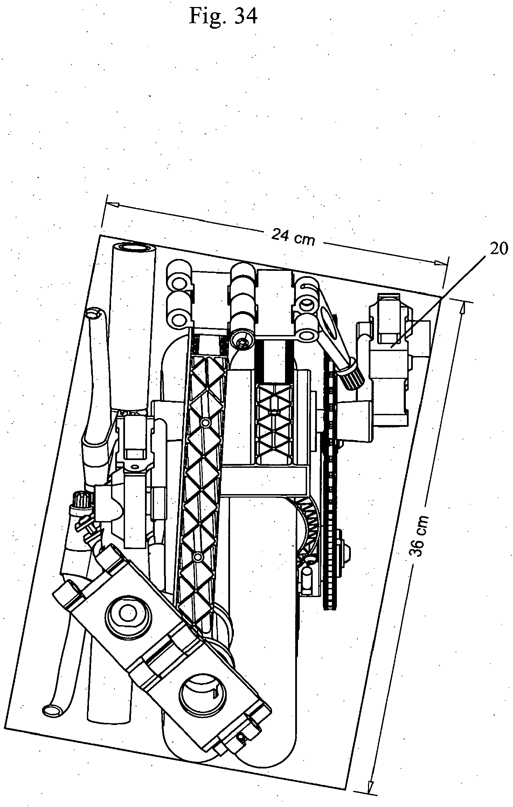

Fig. 34 zeigt das zusammengeklappte Fahrrad aus Fig. 25 in einer Ansicht von oben, um die Faltmaße zu verdeutlichen.

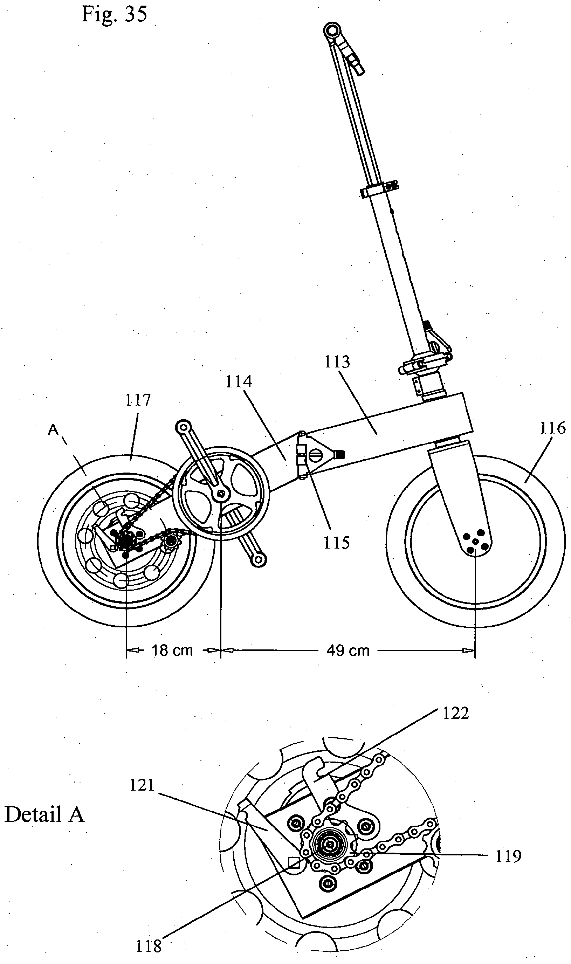

Fig. 35 zeigt die Seitenansicht einer vierten bevorzugten Ausführungsform mit 14-Zoll großen Laufrädern, einem einstufigen Kettengetriebe mit einem besonders kleinen Abtriebs-Zahnkranz und einer Trommelbremse.

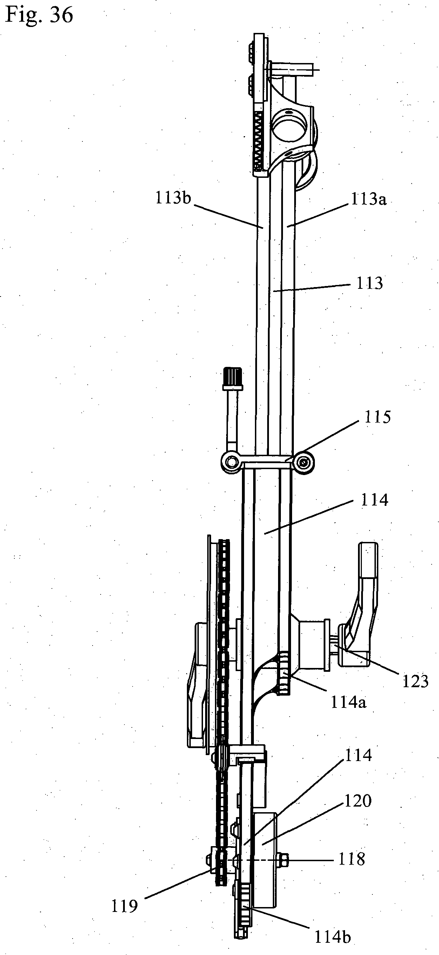

Fig. 36 zeigt eine Ansicht des Fahrrades aus Fig. 35 von unten ohne die Laufräder zur Verdeutlichung der Anordnung des Hinterradantriebes und der Trommelbremse.

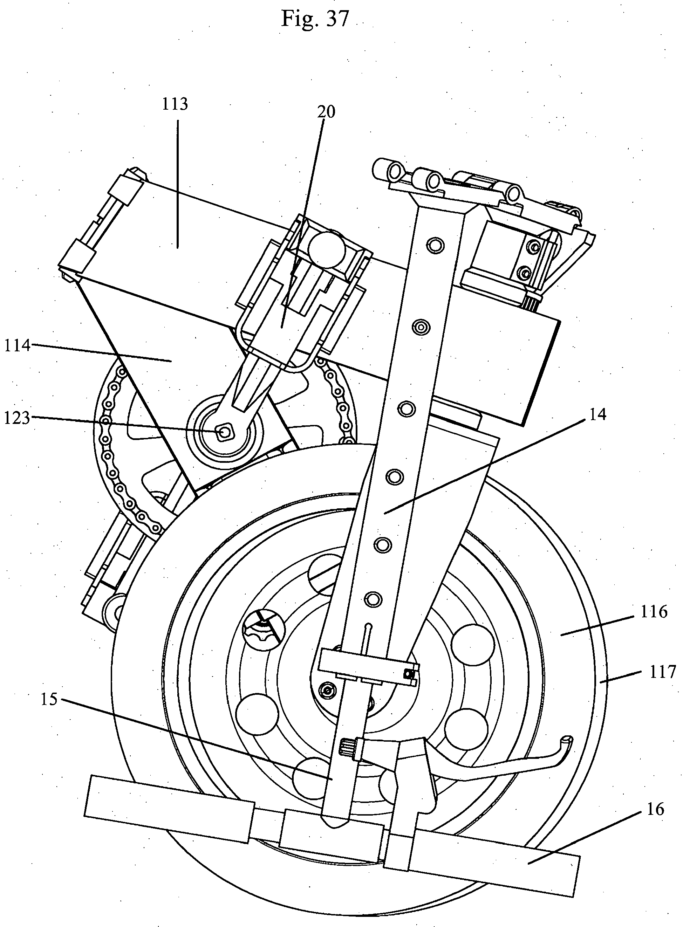

Fig. 37 zeigt das zusammengeklappte Fahrrad aus Fig. 35 in der Seitenansicht.

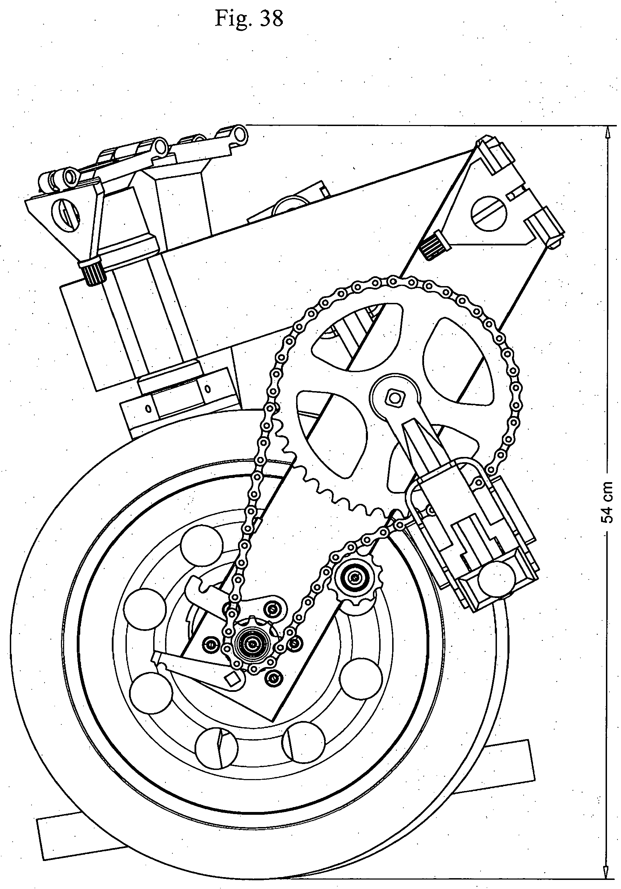

Fig. 38 zeigt das zusammengeklappte Fahrrad aus Fig. 35 in der anderen Seitenansicht.

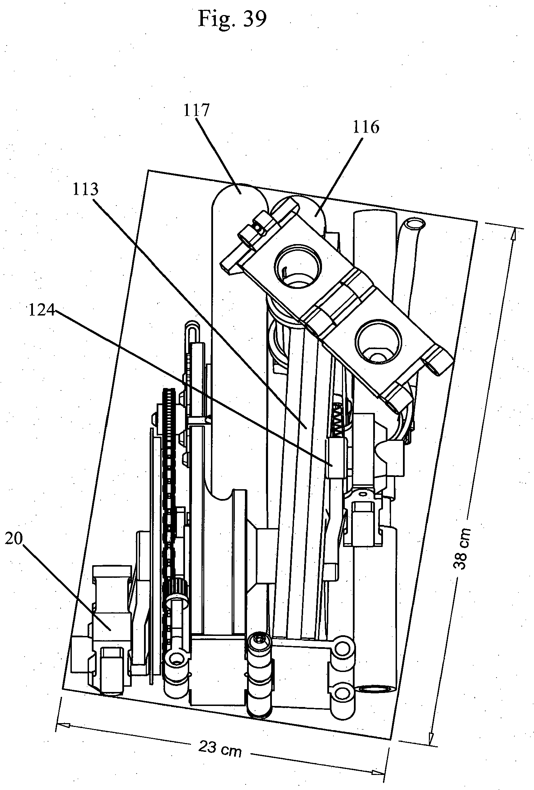

Fig. 39 zeigt das zusammengeklappte Fahrrad aus Fig. 35 in einer Ansicht von oben, um die Faltmaße zu verdeutlichen.

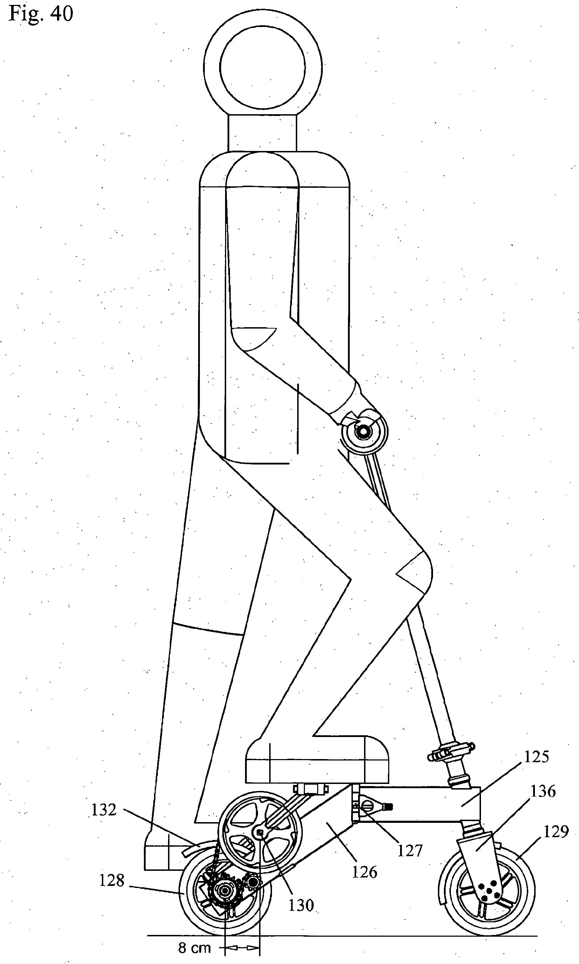

Fig. 40 zeigt die Seitenansicht einer fünften bevorzugten Ausführungsform mit 8-Zoll-Völlkunststoff-Laufrädern und einer mit dem Hinterrad verbundenen Getriebeeinheit mit Planetengetriebe.

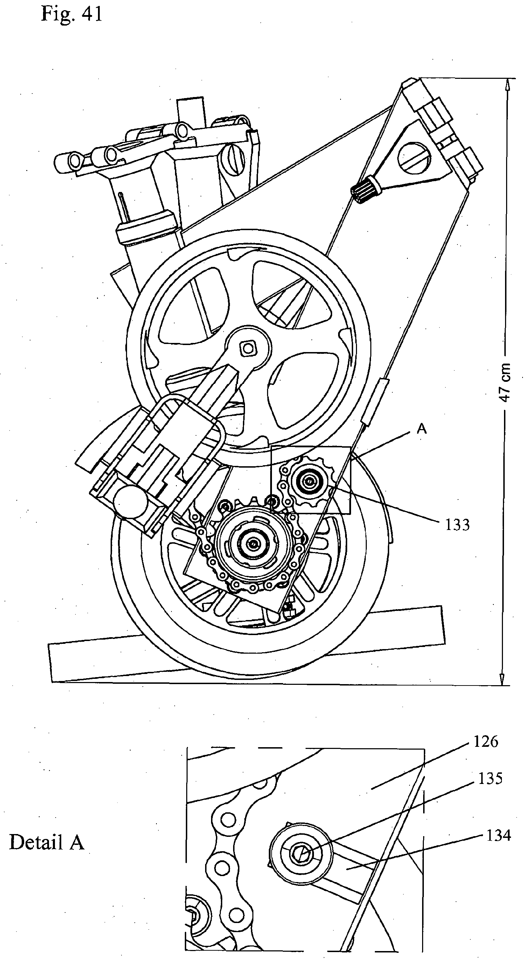

Fig. 41 zeigt das zusammengeklappte Fahrrad aus Fig. 40 in der Seitenansicht.

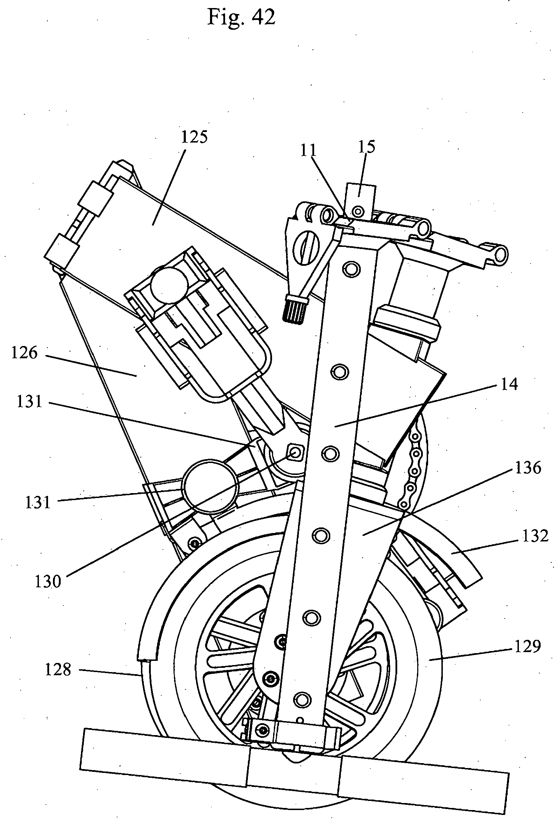

Fig. 42 zeigt das zusammengeklappte Fahrrad aus Fig. 40 in der anderen Seitenansicht.

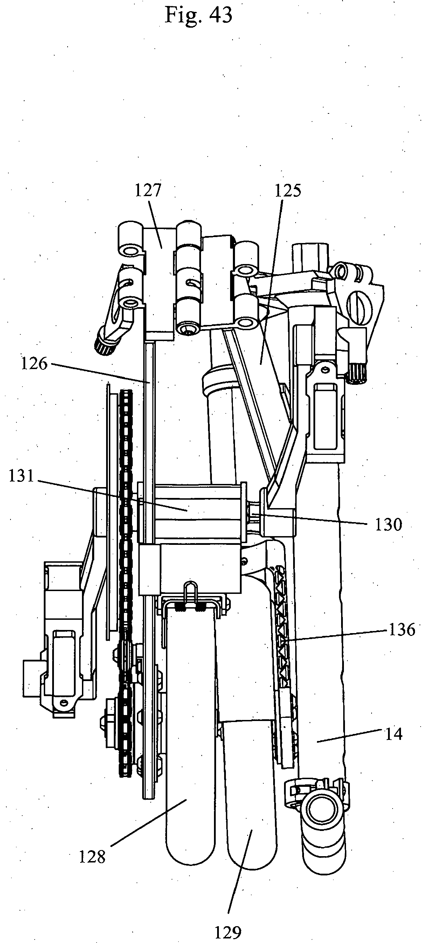

Fig. 43 zeigt das zusammengeklappte Fahrrad aus Fig. 40 in der Vorderansicht.

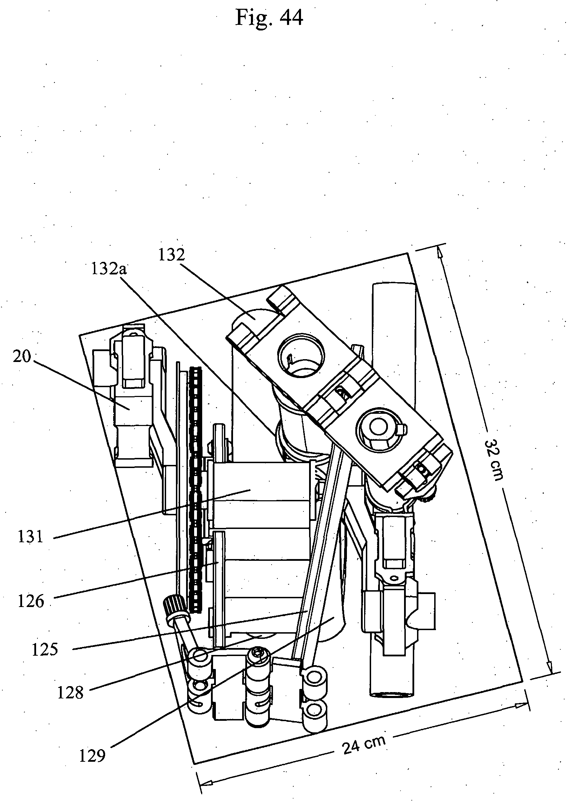

Fig. 44 zeigt das zusammengeklappte Fahrrad aus Fig. 40 in einer Ansicht von oben, um die Faltmaße zu verdeutlichen.

## Bester Weg zur Ausführung der Erfindung und bevorzugte Ausführungsförmen

Fig. 1 zeigt die Seitenansicht einer ersten bevorzugten Ausführungsform des Fahrrades mit zweiseitiger Hinterradaufhängung, einer Verstelleinrichtung für den Steuerkopfwinkel und einem Fahrradantrieb mit sechs Gangstufen mit einer Getriebeeinheit mit Planetengetriebe am 14-Zoll-Hinterrad, wobei das Fahrrad von einem 2,0 m großen Menschen gefahren wird.

Das Fahrrad weist einen Rahmen, enthaltend ein vorderes Rahmenteil 1, ein hinteres Rahmenteil 2 und ein Klappgelenk 3 auf. Der Rahmen ist gemäß DE 10 2011 053 733 A1 aus einem stranggepressten Profil mit drei Segmenten 1a, 1b, 1c beziehungsweise 2a, 2b, 2c hergestellt, wobei die äußeren Segmente 2a und 2c als Hinterbaustreben fungieren.

In die äußeren Segmente 1a und 1c des vorderen Rahmenteils 1 sind Ausfallende 4 eingeschoben, die über eine Achse 5 ein Steuerkopfrohr 6 drehbar lagern. Im Steuerkopfrohr 6 ist ein Gabelschaft eines Gabelkopfes 7 gelagert. Mit dem Gabelkopf 7 sind Gabelscheiden 8 verbunden, die wiederum Gabelausfallenden 9 aufnehmen, an denen ein Vorderrad 10 des Fahrrades befestigt ist. Oberhalb des Steuerkopfrohres 6 weist das Fahrrad ein Klappgelenk 11 auf, wobei ein unteres Scharnier 12 des Klappgelenkes über eine Klemmverbindung 13 mit dem Gabelschaft verbunden ist. Ein oberes Scharnier ist zu einem unteren Lenkrohr 14 ausgebildet, wobei ein oberes Lenkrohr 15 linear verschieblich im unteren Lenkrohr 14 angeordnet ist. Nach einem besonderen Merkmal der Erfindung kann damit die Höhe eines Lenkers 16 an die Größe des Fahrers angepasst werden. Das obere Lenkrohr 15 ist fest mit dem Lenker 16 verbunden.

In dem hinteren Rahmenteil 2 ist ein Tretlager 17 drehbar angeordnet. Das Tretlager 17 ist mit einem Dreifach-Kettenrad 18 und mit Tretkurbeln 19 verbunden. Mit den Tretkurbeln 19 sind faltbare Pedale 20 verbunden. Das Dreifach-Kettenrad 18 treibt über eine Kette 21 und einen Abtriebs-Zahnkranz 22 eine Hinterradwelle 23 an. Auf der Hinterradwelle 23 ist auf der dem Abtriebs-Zahnkranz 22 gegenüber liegenden Seite der rechten Hinterbaustrebe des hinteren Rahmenteils 2 zwischen den beiden Hinterbaustreben ein Hinterrad 24 montiert, in diesem Ausführungsbeispiel ein 14-Zoll-Luftreifen-Laufrad.

Die drei Kettenräder des Dreifach-Kettenrades 18 werden in bewährter Weise über einen vorderen Kettenumwerfer 25 geschaltet. Die Kettenspannung des Leertrums der Kette 21 wird, ebenfalls in bewährter Weise über eine Schaltschwinge 26 aufrecht erhalten.

Das Fahrrad wird nach einem besonderen Merkmal der Erfindung von dem Fahrer aufrecht stehend gefahren. Die aufrechte Fahrweise ermöglicht dem Fahrer, sein gesamtes Gewicht für den Vortrieb einzusetzen und eine für den Rücken entspannende Fahrhaltung einzunehmen. Nach einem besonderen Merkmal der Erfindung ist der Rumpf 27 des Fahrers so nah zum Lenker 16 angeordnet, dass der aufrecht fahrende Fahrer den Lenker 16 umfassen kann und gleichzeitig Kontakt zwischen seinem Rumpf 27 und seinem Ellenbogen 28 und/oder seinem Unterarm 29 und/oder seinem Handgelenk 30 und/oder seiner Hand 31 und/oder dem Lenker 16 herstellen kann. Der Lenker 16 ist dabei soweit nach oben aus dem Lenkrohr 14 herausgezogen, dass die Oberschenkel 32 des Fahrers unterhalb des Lenkers 16 ausreichend Platz haben.

Die Nähe des Lenkers 16 zum Rumpf 27 des Fahrers hat die bereits beschriebenen wesentlichen Vorteile betreffend das sichere Fahren im Stehen.

Darüber hinaus ist nach einem besonderen Merkmal der Erfindung die Lenkermitte unmittelbar vor dem Rumpf 27 des Fahrers angeordnet. Dies hat den Vorteil, dass der Fahrer beim Bremsen seine Massenträgheit mit dem Rumpf 27 gegen den Lenker 16 abstützen kann.

Die Vorderbaulänge in Verbindung mit der Lenkerhöhe ist dabei nach einem besonderen Merkmal der Erfindung so gewählt, dass die normgemäß erforderlichen Bremsverzögerungen der Vorderradbremse nicht dazu führen, dass der Fahrer über das Vorderrad nach vorn kippt. Vielmehr behält der Fahrer auch bei normgerechten Bremsverzögerungen des Vorderrades die Kontrolle über das Fahrrad.

Über eine Verstelleinrichtung 33, die den Steuerkopfwinkel verstellt, ist nach einem besonderen Merkmal der Erfindung die Nähe des Lenkers 16 zum Rumpf 27 des Fahrers einstellbar. Das Fahrrad wird in Fig. 1 von einem 2,0 m großen Menschen gefahren. Dabei ist ein normgerechter Steuerkopfwinkel von 75 ° eingestellt.

Nach einem besonderen Merkmal der Erfindung beträgt die Hinterbaulänge wie in Fig. 1 gezeigt, höchstens 22 cm mit den oben bereits beschriebenen Vorteilen betreffend das sichere Fahren im Stehen.

Nach einem besonderen Merkmal der Erfindung ist die Tretkurbellänge der Tretkurbel 19 für das Fahren im Stehen kürzer gewählt als die für sitzende Fahrweise üblichen Tretkurbellängen von Erwachsenenfahrrädern von 165 - 175 mm.

Vorliegend wird das handelsübliche Dreifach-Kettenrad 18 mit der Tretkurbel 19 mit einer Tretkurbellänge von 150 mm verwendet. Die kürzere Tretkurbellänge hat folgende erfindungswesentliche Vorteile:

- Da der Fahrer beim Fahren im Stehen bei jeder Kurbelumdrehung sein eigenes Gewicht wieder nach oben zum Druckpunkt auf die Pedale 20 heben muss, um das Antriebs-Kettenrad 18 anzutreiben, ist die zu überwindende Höhendifferenz und damit der Eriergieeinsatz des Fahrers je Tretkurbelumdrehung bei einer kürzeren Tretkurbel geringer.

- Aufgrund der kürzeren Tretkurbel ist das vom Gewicht des Fahrers auf das Antriebs-Kettenrad 18 übertragene Antriebsdrehmoment geringer als bei Tretkurbeln mit 165 - 175 mm. Damit ist die höchste auftretende Winkelbeschleunigung der Tretkurbel ebenfalls geringer und der Fuß des Fahrers benötigt länger, um bei gleichem Gewichtseinsatz an den unteren Punkt der Pedale zu kommen. Ebenso ist die am unteren Punkt der Pedale von der Tretkurbel erreichte Winkelgeschwindigkeit geringer. Dies hat wesentliche Vorteile: Für das Fahren im Stehen resultieren weniger stark schwankende Winkelgeschwindigkeiten der Tretkurbel bei einer Tretkurbelumdrehung, der Fahrer kann zur Erreichung der gleichen Geschwindigkeit gleichmäßiger pedalieren, die kurze Tretkurbel befördert insgesamt eine geringere Kurbelfrequenz des Fahrers und der Energieverlust des Fahrers am unteren Punkt der Pedale ist aufgrund der geringeren Winkelgeschwindigkeit der Tretkurbel ebenfalls geringer. Aus diesen Gründen wird eine langsame Kurbelfrequenz von maximal 60 U/min beim Fahren im Stehen als angenehmer empfunden als die im Sitzen üblichen Trittfrequenzen von 90 U/min. Um bei gleicher gewünschter Geschwindigkeit und damit bei gleichem gewünschtem Energieeinsatz die Trittfrequenz für das Fahren im Stehen zu verkleinern und das Pedalieren zu vergleichmäßigen, wird daher nach einem besonderen Merkmal der Erfindung eine kürzere Tretkurbel eingesetzt als beim Fahren im Sitzen.

An dem Gabelkopf 7 ist eine handelsübliche Seitenzug-Felgenbremse 34 angeordnet. Zur Abbremsung des Hinterrades 24 ist nach einem besonderen Merkmal der Erfindung auf der unteren Rahmenseite des hinteren Rahmenteils 2 eine Seitenzug-Felgenbremse 35 angeordnet, wobei der Leertrum der Kette 21 von der Schaltschwinge 26 nach einem besonderen Merkmal der Erfindung in jeder Schaltposition soweit unterhalb der Seitenzug-Felgenbremse 35 geführt wird, dass die Bremsbügel der Seitenzug-Felgenbremse 35 die Kette 21 nicht berühren.

Auch die Anordnung eines Fahrradständers 36 ist wie gezeigt ausführbar.

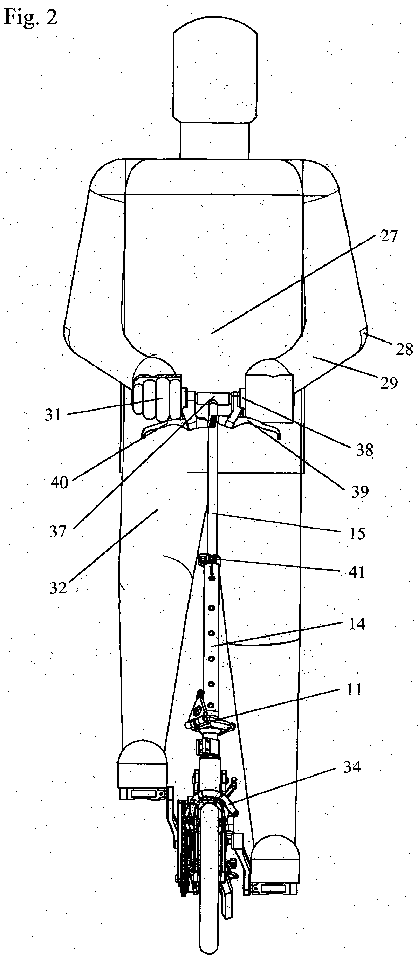

Fig. 2 zeigt die Vorderansicht des Fahrrades mit Fahrer aus Fig. 1. Ein Lenkrohrkopf 37 ist unmittelbar vor dem Rumpf 27 des Fahrers angeordnet. Mit dem Lenker 16 sind zu beiden Seiten des Lenkrohrkopfes 37 Drehgriffschalter 38 verbunden, die über nicht gesondert dargestellte Seilzüge zum einen den vorderen Kettenumwerfer 25 und damit das Dreifach-Kettenrad 18 und zum anderen etwaige weitere Getriebestufen, wie die in diesem Ausführungsbeispiel eingesetzte, in DE 10 2011 050 447.8 ausführlich beschriebene zweigängige Getriebeeinheit am Hinterrad 24 schalten.

Darüber hinaus sind mit dem Lenker 16 zwei Bremshebel 39 und 40 verbunden, die über ebenfalls nicht gesondert dargestellte Seilzüge die beiden Seitenzug-Felgenbremsen 34 und 35 betätigen.

Nach einem besonderen Merkmal der Erfindung werden zwei verschiedene Bremshebel 39 und 40 verwendet, wodurch trotz der sehr eng zusammen stehenden Bremshebel die Kabelführung der Seilzüge trotzdem möglich ist, da die Kabelverstellschrauben der beiden Bremshebel 39 und 40 in einem unterschiedlichen Abstand zur Lenkachse des Lenkers 16 stehen und damit übereinander zu liegen kommen, so dass die Kabel der Seilzüge aneinander vorbei geführt werden können.

Die Länge der zueinander linear verschieblichen Lenkrohrabschnitte 14 und 15 wird über bewährte Arretiereinrichtungen 41 festgelegt.

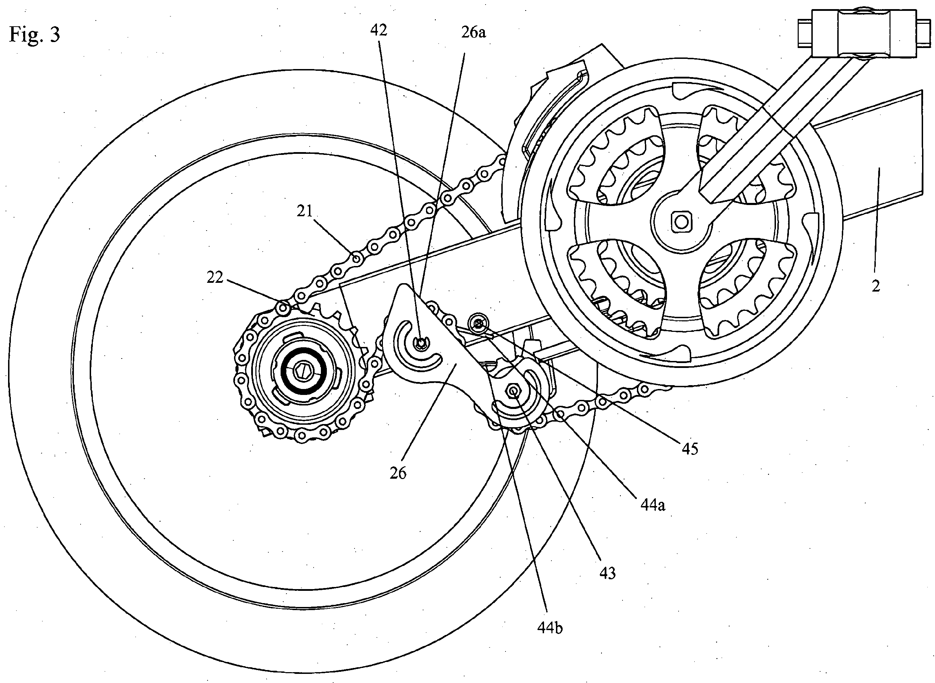

Fig. 3 zeigt in vergrößerter Darstellung den hinteren Teil des Fahrrades aus Fig. 1 in der Seitenansicht, wobei das große Kettenrad des Dreifach-Kettenrades 18 geschaltet ist. Die Schaltschwinge 26 enthält eine obere Kettenführungsrolle 42, die um ihre Achse drehbar an dem hinteren Rahmenteil 2 befestigt ist, sowie eine Kettenspannrolle 43, die von einer Spiralfeder 44 nach hinten in Richtung des Abtriebs-Zahnkranzes 22 gedrückt wird. Dabei stützt sich die Spiralfeder 44 mit ihrem einen Arm 44a an einer mit dem hinteren Rahmenteil 2 verbundenen Schraube 45 ab und drückt mit ihrem anderen Arm 44b die Kettenspannrolle 43 der Schaltschwinge 26 in Richtung des Abtriebs-Zahnkranzes 22. Um eine Kettenkollision zwischen der um die Kettenspannrolle geführten Kette 21 mit der um den Abtriebs-Zahnkranz 22 geführten Kette 21 zu verhindern, weist die Schaltschwinge 26 nach einem besonderen. Merkmal der Erfindung eine gerade Kante 26a auf, die die Drehung der Schaltschwinge 26 nach hinten dadurch begrenzt, dass sie gegen die Schraube 45 stößt, bevor die Kettenspannrolle 43 den Abtriebs-Zahnkranz 22 berührt.

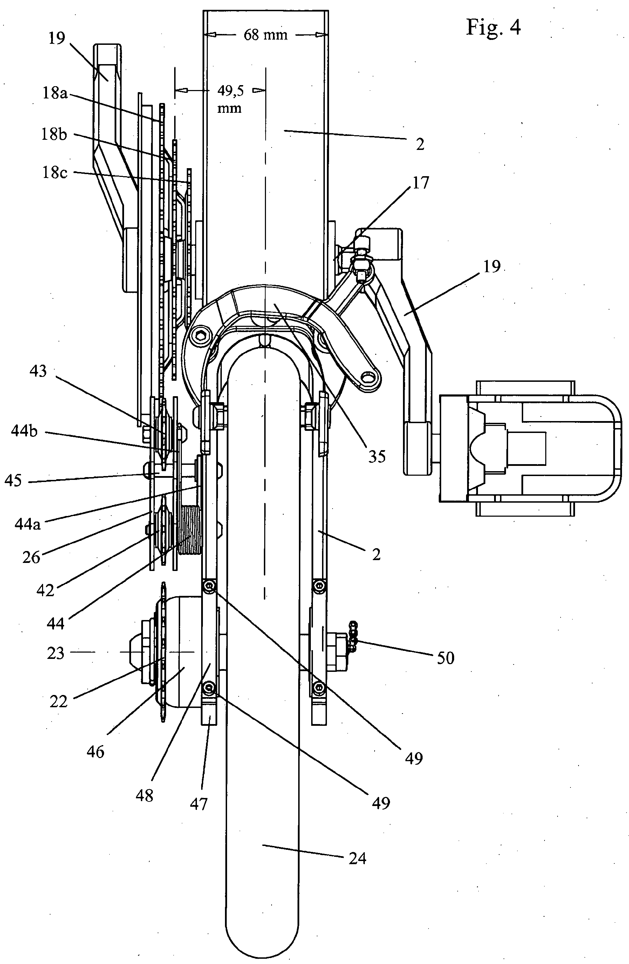

Fig. 4 zeigt die Ansicht des hinteren Teils des Fahrrades aus Fig. 1 von unten.

Um mit dem 14-Zoll großen Hinterrad 24 angemessene Entfaltungen zu erreichen, ist nach einem besonderen Merkmal der Erfindung zwischen dem Abtriebs-Zahnkranz 22 und der Hinterradwelle 23 ein in DE 10 2011 050 447 A1 ausführlich dargestelltes Planetengetriebe 46 mit zwei Gangstufen angeordnet mit einem feststehenden, direkt oder mittelbar mit dem Fahrradrahmen verbundenen Hohlrad, einem vom Abtriebs-Zahnkranz 22 angetriebenen Planetenträger mit Planetenrädern, die mit dem Hohlrad kämmen, und mit zwei abgetriebenen und mit den Planetenrädern kämmenden Sonnenrädern. Jeweils eines der Sonnenräder treibt mittels eines Kupplungsgliedes oder über eine dazwischen geschaltete schaltbare Freilaufkupplung die Hinterradwelle 23 an. Um eine dem Gewicht des Fahrers und den unterschiedlichen Steigungs- und Gefälleverhältnissen angepasste Entfaltung erreichen zu können, ist dem Planetengetriebe nach einem besonderen Merkmal der Erfindung ein Kettengetriebe mit dem Dreifach-Kettenrad 18, enthaltend ein Kettenrad 18a mit 42 Zähnen, ein Kettenrad 18b mit 32 Zähnen und ein Kettenrad 18c mit 24 Zähnen, und den Abtriebs-Zahnkranz 22 vorgeschaltet. In einer Kombination mit dem zweigängigen Planetengetriebe 46 wird damit nach einem besonderen Merkmal der Erfindung eine Sechsgang-Schaltung mit einer gleichmäßigen Gangabstufung für das Fahrrad verwirklicht. Der Hinterradantrieb mit dem enthaltenen Planetengetriebe 46 ist in Ausfallenden 47 des hinteren Rahnienteils 2 über Befestigungsmittel 48 und Befestigungsschrauben 49 mit dem hinteren Rahmenteil 2 verbunden. Ein aus dem Hinterradantrieb kommendes Schaltkettchen 50 schaltet die beiden im Planetengetriebe 46 vorhandenen Gangstufen.

Die beiden Umlenkräder der Schaltschwinge 26, die Kettenführungsrolle 42 und die Kettenspanrirolle 43 sind in einem festen Abstand zur Bezugsmittelebene des Fahrrades angeordnet, da das Kettengetriebe nicht über mehrere zu schaltende Abtriebs-Zahnkränze, sondern nur über den einen Abtriebs-Zahnkranz 22 verfügt. Da der Leertrum der Kette 21 am kürzesten ist, wenn das große Kettenrad 18a des Dreifach-Kettenrades 18 geschaltet ist, sind Abtriebs-Zahnkranz 22, großes Kettenrad 18a, Kettenführungsrolle 42 und Kettenspannrolle 43 auf einer fast geraden Linie angeordnet, womit Kettenschräglauf in diesem Schaltzustand vermieden wird. Dabei wird in diesem Ausführungsbeispiel, wie in Fig. 4 dargestellt, ein üblicher Kettenlinienabstand von 49,5 mm verwirklicht.

Die um die gleiche Achse wie die Kettenführungsrolle 42 angeordnete Spiralfeder 44 stützt sich mit ihrem einen Arm 44a an der Schraube 45 ab und drückt mit ihrem anderen Arm 44b die Kettenspannrolle 43 in Richtung des Abtriebs-Zahnkranzes 22.

Nach einem besonderen Merkmal der Erfindung weist das hintere Rahmenteil 2, wie in Fig. 4 dargestellt, eine der Einbaubreite handelsüblicher Tretlager entsprechende Breite auf, in diesem Ausführungsbeispiel eine Breite von 68 mm. Entsprechend einfach kann in dem hinteren Rahmenteil 2 damit auch ein Tretlagergehäuse und ein Tretlager 17 untergebracht werden.

Nach einem besonderen Merkmal der Erfindung ist die Seitenzug-Felgenbremse 35 zwischen den Tretkurbeln 19 angeordnet und ist nach einem weiteren besonderen Merkmal der Erfindung so nah zum Tretlager 17 angeordnet, dass die genannten kurzen Hinterbaulängen verwirklicht werden können.

Fig. 5 zeigt das Fahrrad aus Fig. 1 in der Seitenansicht. Der Lenker 16 ist auf seine niedrigste Höhe eingestellt. Mit Hilfe der Verstelleinrichtung 33 für den Steuerkopfwinkel ist ein normgerechter Steuerkopfwinkel von circa 65° eingestellt. Damit wird es nach einem besonderen Merkmal der Erfindung möglich, dass das Fahrrad aus Fig. 1, wie in Fig. 5 gezeigt, unter Beibehaltung der genannten vorteilhaften Fahreigenschaften sowohl von einem 2,0 m großen Menschen als auch von einem 1,4 m großen Menschen gefahren werden kann. Oder allgemeiner wird damit nach einem besonderen Merkmal der Erfindung erreicht, dass das Fahrrad von Menschen mit einem Körpergrößenunterschied von 60 cm gleichermaßen gefahren werden kann. Mit Hilfe der Verstelleinrichtung 33 für den Steuerkopfwinkel wird erreicht, dass auch der deutlich kleinere Fahrer den Lenker 16 umfassen kann und gleichzeitig Kontakt zwischen seinem Rumpf 27 und seinem Ellenbogen 28 und/oder seinem Unterarm 29 und/oder seinem Handgelenk 30 und/oder seiner Hand 31 und/oder dem Lenker 16 herstellen kann.

In Fig. 5 ist darüber hinaus der Schaltzustand bei Schaltung des kleinen Kettenrades 18c dargestellt.

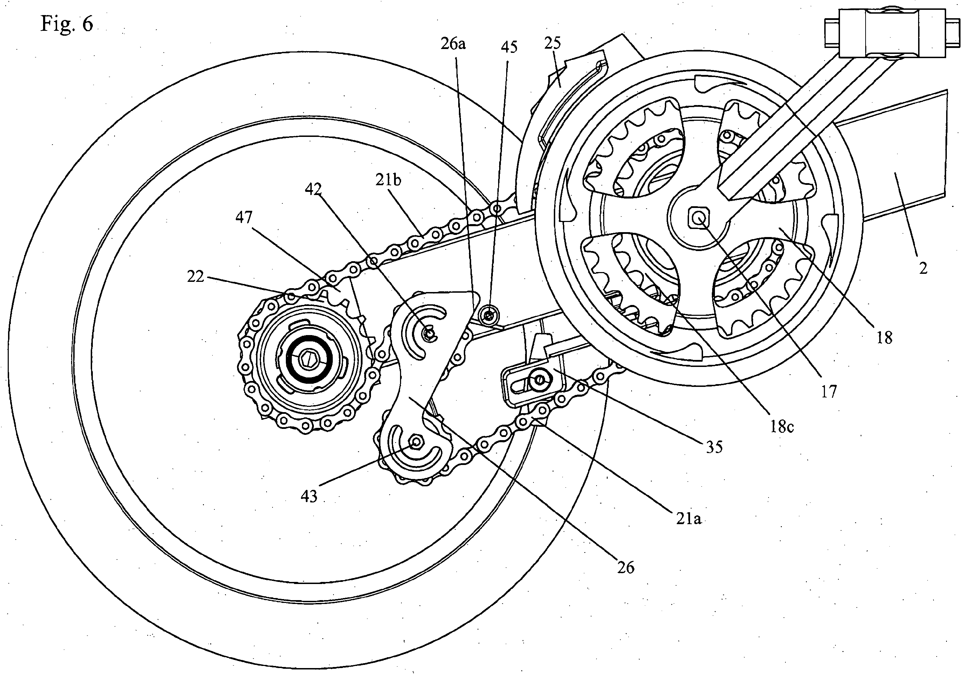

Fig. 6 zeigt in vergrößerter Darstellung den hinteren Teil des Fahrrades aus Fig. 5 in der Seitenansicht, wobei das kleine Kettenrad 18c geschaltet ist. Aus der Darstellung wird deutlich, dass die gerade Kante 26a der Schaltschwinge 26 gegen die Schraube 45 gedrückt würde, bevor die Kettenspannrolle 43 mit dem Abtriebs-Zahnkranz 22 kollidieren würde. Auch in diesem Schaltzustand wird der Leertrum 21a der Kette 21 sicher unter dem Bremsbügel der Seitenzug-Felgenbremse 35 geführt: Die Seitenzug-Felgenbremse 35 ist so nah zum Tretlager 17 hin angeordnet, dass sie seitlich gesehen vom dem Dreifach-Kettenrad 18 weitgehend verdeckt wird.

Der Lasttrum 21b der Kette 21 hält auch in diesem Schaltzustand einen ausreichenden Abstand zum vorderen Kettenumwerfer 25 ein. Der vordere Kettenumwerfer 25 wiederum ist über der Oberseite des hinteren Rahmenteils 2 angeordnet und hat damit die zur Schaltung des kleinen Kettenrades 18c erforderliche Bewegungsfreiheit in Richtung der Bezugsmittelebene des Fahrrades.

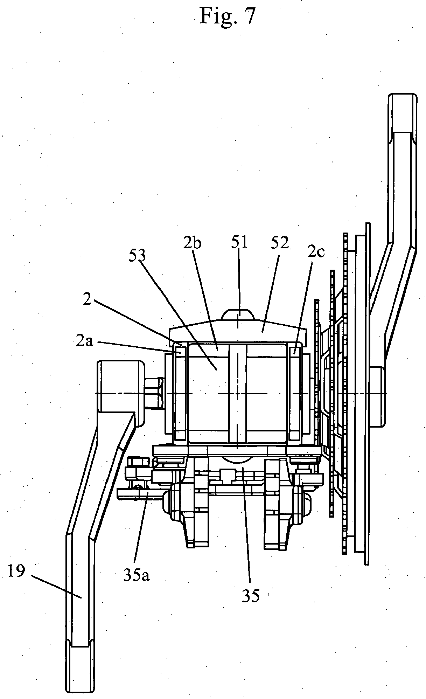

Fig. 7 zeigt das Dreifach-Kettenrad 18 des Fahrrades aus Fig. 1 mit den Tretkurbeln 19, dem Tretlager 17 und der Seitenzug-Felgenbremse 35 für das Hinterrad 24, um den verfügbaren Platz für die Seitenzug-Felgenbremse 35 mit ihren Bremsbügeln 35a zu verdeutlichen. Eine Mutter 51 mit langem Gewinde ist mit der Befestigungsschraube der Seitenzug-Felgenbremse 35 verschraubt. Zur Abstützung der Bremskräfte ist ein Druckstück 52 mit Hilfe der Befestigungsmutter 51 gegen das hintere Rahmenteil 2 verspannt.

Ein Tretlagergehäuse 53 ist nach einem besonderen Merkmal der Erfindung fest mit den Wänden der beiden Segmente 2a und 2c des hinteren Rahmenteils 2 verbunden.

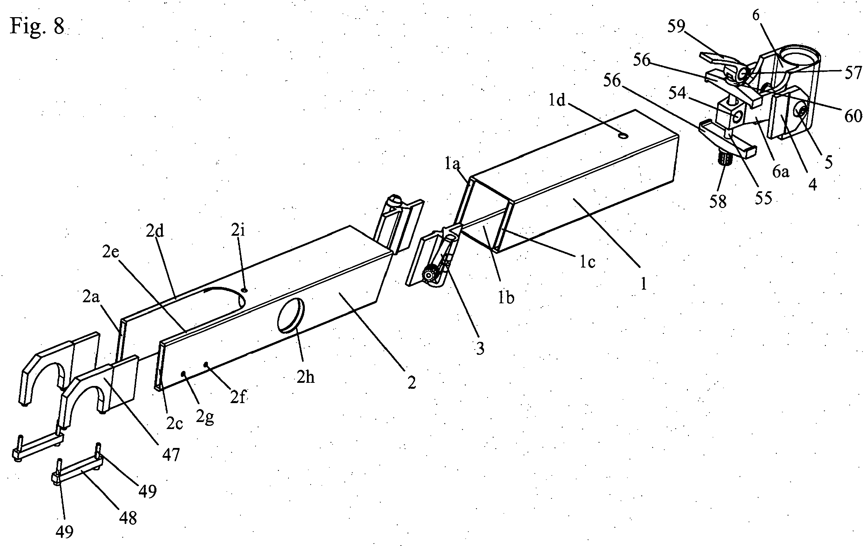

Fig. 8 zeigt in der Explosionsansicht den Rahmen des Fahrrades aus Fig. 1, der nach einem besonderen Merkmal der Erfindung ein Dreikammerprofil gemäß DE 10 2011 053 733 A1 aufweist, mit dem Steuerkopfrohr 6, dem vorderen Rahmenteil 1, dem Klappgelenk 3, dem hinteren Rahmenteil 2 und den Ausfallenden 47 für das Hinterrad 24. Nach einem besonderen Merkmal der Erfindung sind die Scharniere des gemäß DE 10 2011 052 134 A1 ausgeführten Klappgelenks 3 in die beiden äußeren Segmente 1a und 1c des vorderen Rahmenteils 1 beziehungsweise in die entsprechenden Segmente 2a und 2c des hinteren Rahmenteils 2 eingeschoben und fest mit diesen verbunden.

Das innere Segment 2b des Dreikammerprofils ist im Bereich des Hinterrades 24 entfernt, sodass hier zwei aus den äußeren Segmenten 2a und 2c gebildete Hinterbaustreben 2d und 2e verbleiben. In diesem Ausführungsbeispiel sind die zwei Ausfallenden 47 in die Hinterbaustreben 2d beziehungsweise 2e geschoben und fest mit diesen verbunden. Der Hinterradantrieb wird über die Befestigungsmittel 48 und die Befestigungsschrauben 49 mit den Ausfallenden 47 des hinteren Rahmenteils 2 verbunden. Das hintere Rahmenteil 2 weist diverse Ausnehmungen 2f, 2g, 2h und 2i zur Befestigung der vorgenannten Komponenten mit dem hinteren Rahmenteil 2 auf. Auch die in DE 10 2011 053 733 A1 beziehungsweise in DE 10 2011 050 447 A1 für den Rahmen beziehungsweise für das Planetengetriebe 46 beschriebenen Varianten mit einseitiger Hinterradaufhängung sind in diesem Ausführungsbeispiel einsetzbar und von der Erfindung umfasst.

Nach einem besonderen Merkmal der Erfindung ist der Steuerkopfwinkel des Steuerkopfrohres 6 über die Verstelleinrichturig 33 einstellbar. Vorzugsweise stellt die Verstelleinrichtung 33 den Steuerkopfwinkel innerhalb des verfügbaren Normbereiches von 65° bis 75° ein. Nach weiteren besonderen Merkmalen der Erfindung erfolgt die Verstellung des Steuerkopfwinkels wie nachfolgend beschrieben:

Im vorderen Rahmenteil 1 sind von vorn die Ausfallenden 4 in die Segmente 1a und 1c des vorderen Rahmenteils 1 eingeschoben und fest mit diesen verbunden. In den Ausfallenden 4 ist das Steuerkopfrohr 6 über die Achse 5 drehbar gelagert. Ebenso möglich und von der Erfindung umfasst ist, dass das Steuerkopfrohr 6 ohne weitere Ausfallenden direkt mit den beiden äußeren Segmenten 1a und 1c drehbar verbunden ist. Das Steuerkopfrohr 6 weist zwei Arme 6a auf, die innerhalb des vorderen Rahmenteils 1 verlaufen. Die beiden Arme 6a werden im Innern des Rahmenteils 1 zusammengeführt und nehmen in einer Ausnehmung eine Rundmutter 54 auf.

Die Rundmutter 54 steht nach einem besonderen Merkmal der Erfindung in einer Gewindeverbindung zu einer Verstellschraube 55. Die Verstellschraube 55 ragt über die Ober- und unter die Unterseite des vorderen Rahmenteils 1 hinaus. Die Verstellschraube 55 führt auf der Ober- und auf der Unterseite des vorderen Rahmenteils 1 Befestigungselemente 56, im Falle der Fig. 8 Befestigungsplatten, die sich auf der Ober- beziehungsweise auf der Unterseite des vorderen Rahmenteils 1 abstützen. Zwischen den Befestigungselementen 56 und dem vorderen Rahmenteil 1 können nach einem besonderen Merkmal der Erfindung dämpfende oder federnde Elemente vorgesehen werden, um eine etwaig gewünschte Beweglichkeit des Lenkrohres 14 zu ermöglichen oder auftretende Kräfte auf die Verstellschraube 55 beziehungsweise auf die Rundmutter 54 zu verringern. Die Verstellschraube 55 ist nach einem besonderen Merkmal der Erfindung Teil einer handelsüblichen Schnellspanneinrichtung, bestehend aus der Verstellschraube 55, einer Rundmutter 57, einer Gegenmutter 58, einem Arretierhebel 59 und einer Unterlegscheibe 60, wobei die beiden Befestigungselemente 56 gegen das vordere Rahmenteil 1 verspannt werden.

Im verspannten Zustand, das heißt bei geschlossenem Arretierhebel 59 der Schnellspanneinrichtung ist die Position des Armes 6a durch die Position der Rundmutter 54 auf der Verstellschraube 55 und damit der Steuerkopfwinkel festgelegt. Diesen Zustand zeigt Fig. 9, wobei der in Fig. 1 gezeigte Steuerkopfwinkel von 75 ° eingestellt ist.

In Fig. 10 ist der gelöste Zustand dargestellt. Im gelösten Zustand, das heißt bei geöffnetem Arretierhebel 59, kann die Verstellschraube 55 durch Drehen des Arretierhebels 59 gedreht werden, womit die Position der Rundmutter 54 auf der Verstellschraube 55 verändert wird. Durch diese Positionsänderung verändert sich nach einem besonderen Merkmal der Erfindung der Winkel zwischen dem Arm 6a und dem vorderen Rahmenteil 1 und das Steuerkopfrohr 6 wird um die Achse 5 bewegt, wodurch sich der Steuerkopfwinkel verändert. In Fig. 10 ist der in Fig. 5 gezeigte Steuerkopfwinkel von 65° eingestellt. Durch Schließen des Arretierhebels 59 wird die erhaltene Position wieder fixiert.

Besonders vorteilhaft an dieser Anordnung ist, dass die auf das Vorderrad 10 einwirkenden vertikalen Kräfte über die Achse 5 in das vordere Rahmenteil 1 eingeleitet werden, während auf das Vorderrad 10 wirkende horizontale Kräfte eine Drehbewegung des Steuerkopfrohres 6 um die Achse 5 auszulösen suchen und somit von der Rundmutter 54 in die Schraube 55 und schließlich über die Befestigungselemente 56 förnischlüssig auf das vordere Rahmenteil 1 abgeleitet werden. Darüber hinaus werden keine weiteren Biegemomentbelastungen ausgelöst, die in anderen Ausführungsformen eine entsprechend stabile Ausführung der Verbindung zwischen Steuerkopfrohr und vorderem Rahmenteil erfordern.

Die Länge der Arme 6a des Steuerkopfrohres 6 und damit der Abstand zwischen der Achse 5 und der Rundmutter 54 bestimmen die Kraft, die auf die Rundmutter 54 und auf das vordere Rahmenteil 1 ausgeübt wird. Ebenso wird damit der einstellbare Winkelbereich des Steuerkopfrohres 6 festgelegt.

Fig. 11 zeigt eine Schnittansicht der Verstelleinrichtung von oben. Nach einem besonderen Merkmal der Erfindung sind die Arme 6a des Steuerkopfrohres 6 zunächst sehr nah zu den Ausfallenden 4 auf der Achse 5 drehbar gelagert, wodurch das Auftreten hoher Biegemomentbelastungen auf die Achse 5 vermieden wird. Im weiteren Verlauf werden die Arme 6a nach einem besonderen Merkmal der Erfindung im Bereich der Rundmutter 54 zusammengeführt, wodurch die auftretenden Kräfte nun durch die Verstellschraube 55 auf das vordere Rahmenteil 1 abgeleitet werden. Die Achse 5 wird durch eine Stahlmutter 61 gebildet, die mit einer Stahlschraube 62 verschraubt ist. Die Stahlmutter 61 stützt sich in Lagerschalen 63 aus Stahl ab und ist drehbar mit diesen verbunden. Die Lagerschalen 63 wiederum sind fest mit den aus Aluminium hergestellten Ausfallenden 4 verbunden. Ebenso ist das aus Aluminium hergestellte Steuerkopfrohr 6 fest mit Lagerschalen 64 aus Stahl verbunden, die wiederum auf der Achse 5 beziehungsweise auf der Stahlmutter 61 drehbar gelagert sind. Vorteilhaft an der Verwendung der Lagerschalen 63 und 64 aus Stahl ist, dass die zur Lagerung und zur Drehung des Steuerkopfrohres 6 erforderliche Übergangspassung zwischen zwei Stahlelementen erfolgt, die deutlich höhere Flächenpressungen haushalten als eine Aluminium-Stahl-Paarung, während die Lagerschalen 63 und 64 außen über eine feste Passung mit den aus Aluminium hergestellten Ausfallenden 4 beziehungsweise mit dem Steuerkopfrohr 6 verbunden werden können. Außerdem weisen die Lagerschalen 63 beziehungsweise 64 dann einen genügend großen Außendurchmesser auf, um die aus den auftretenden Kräften resultierenden Flächenpressungen in der Aluminium-Stahl-Paarung unter den zulässigen Flächenpressungen für Aluminium zu halten.

Das einstückig hergestellte Steuerkopfrohr 6 kann kostengünstig aus einem stranggepressten Profil hergestellt werden. Fig. 12 zeigt ein entsprechendes Profil für die in Fig. 1 dargestellte bevorzugte Ausführungsform. Dabei kann bereits bei der Ausführung des stranggepressten Profils die für die Verstellschraube 55 erforderliche Ausnehmung 6b im Steuerkopfrohr 6 vorgesehen werden.

Fig. 13 zeigt eine Seitenansicht des Fahrrades aus Fig. 1 mit eingeklapptem Lenker 16. Nach einem besonderen Merkmal der Erfindung ist das Klappgelenk 11 so ausgeführt und ausgerichtet, dass das Lenkrohr 14 seitlich gesehen zwischen der Seitenzug-Felgenbremse 34 und der Vorderradachse zu liegen kommt, wobei der Lenker 16 dann weitgehend parallel beziehungsweise in einem Winkel von maximal 10° zur Bezugsmittelebene des Fahrrades liegt.

Fig. 14 zeigt eine Seitenansicht des zusammengeklappten Fahrrades aus Fig. 1. Im zusammengeklappten Zustand liegen nach einem besonderen Merkmal der Erfindung das Vorderrad 10 und das Hinterrad 24 seitlich gesehen weitgehend deckungsgleich hintereinander.

Das Lenkrohr 14 nutzt dabei nach einem besonderen Merkmal der Erfindung exakt den zwischen der Seitenzug-Felgenbremse 34 des Vorderrades 10 und der hinteren Ausfallenden 47 beziehungsweise dem Abtriebs-Zahnkranz 22 verfügbaren Raum. Die beiden längsten Faltlängen des Faltmaßes betragen in diesem Ausführungsbeispiel höchstens 53 cm und höchstens 44 cm. Die Summe dieser beiden Faltlängen beträgt nach einem besonderen Merkmal der Erfindung damit höchstens 100 cm. Dieses geringe Faltmaß wird erreicht, weil nach einem besonderen Merkmal der Erfindung das Lenkrohr 14 durch das Klappgelenk 11 an die Seite der Gabelscheiden 8 der Vorderradgabel geklappt wird und weil nach einem besonderen Merkmal der Erfindung das vordere Rahmenteil 1, das hintere Rahmenteil 2 und die Gabelscheiden 8 der Vorderradgabel im zusammengeklappten Zustand des Fahrrades ein Dreieck beschreiben, wobei die Vorderradachse beziehungsweise die Hinterradachse, das Klappgelenk 3 und das Steuerkopfrohr 6 die Eckelemente des Dreiecks bilden.

Fig. 15 zeigt die Vorderansicht des zusammengeklappten Fahrrades aus Fig. 1.

Durch die Verwendung der Seitenzug-Felgenbremsen 34 und 35 ist im zusammengeklappten Zustand ein definierter Mindestabstand zwischen dem Vorderrad 10 und dem Hinterrad 24 einzuhalten. Nach einem besonderen Merkmal der Erfindung wird der dadurch zwischen Vorderrad 10 und Hinterrad 24 entstehende Raum dadurch ausgefüllt, dass das Lenkrohr 14 und der Lenker 16 zwischen dem Vorderrad 10 und dem Hinterrad 24 angeordnet sind. Ebenso finden die Bremshebel 39 und 40 sowie die Drehgriffschalter 38 den erforderlichen Raum, wie insbesondere auch in Fig. 16, die die Draufsicht des zusammengeklappten Fahrrades aus Fig. 1 zeigt, dokumentiert wird.

Aus diesen Gründen beträgt die Tiefe des Faltmaßes damit weniger als 28 cm. Damit beträgt die Summe aus der Länge, der Höhe und der Breite des Faltmaßes nach einem besonderen Merkmal der Erfindung höchstens 125 cm.

Nach einem besonderen Merkmal der Erfindung werden in diesem in den Fig. 1 bis Fig. 16 dargestellten Ausführungsbeispiel trotz der erreichbaren geringen Faltmaße viele handelsübliche und günstig zu beschaffende Fahrradkomponenten verwendet, im besonderen die Laufrad-Felgen und die Laufrad-Reifen von dem Vorderrad 10 und dem Hinterrad 24, das Tretlager 17, die Tretkurbeln 19, die faltbaren Pedale 20, das Dreifach-Kettenrad 18, der Abtriebs-Zahnkranz 22, der vordere Kettenumwerfer 25, die Lenkrohre 14 und 15, der Lenker 16, die Seitenzug-Felgenbremsen 34 und 35, die Drehgriffschalter 38, die Bremshebel 39 und 40, die Verstelleinrichtung 33 und die Arretiereinrichtung 41, die Kettenspannrolle 43 und die Kettenführungsrolle 42. Die Verwendung dieser handelsüblichen Fahrradkomponenten ermöglicht damit eine kostengünstige Produktion auf Basis bewährter und geprüfter Technik.

Nach einem besonderen Merkmal der Erfindung sind die geometrischen Werte des Fahrrades so ausgeführt, dass eine in allen Belangen normgerechte Ausführung des Fahrrades verwirklicht ist mit einem Steuerkopfwinkel von 65° bis 75°, einer Gewichtsverteilung von wenigstens 25% auf dem Vorderrad 10, einer normgerecht möglichen Abbremsung des Vorderrades 10 mit einer Bremsverzögerung von 3,4 m/s$^2$ ohne Vornüberkippen selbst des 2,0 m großen und 100 kg schweren Fahrers, der für eine seitliche Fahrradneigung von 25° erforderlichen Bodenfreiheit der in unterster Stellung befindlichen Pedale 20 und damit der erforderlichen Tretlagerhöhe, der erforderlichen Fußfreiheit der Pedale 20 mit einem erforderlichen Abstand von 100 mm der Pedalachse zum Vorderrad 10 beziehungsweise zum Radschutz des Vorderrades 10 und der durch die Verwendung der Luftreifen sicheren Überfahrbarkeit von 25 mm hohen und 12 mm angefasten Leisten.

Schließlich versteht es sich, dass die in den Fig. 1 bis Fig. 16 dargestellte bevorzugte Ausführungsform unter Beibehaltung der wesentlichen Merkmale auch für andere Laufradgrößen, insbesondere für die Laufradgrößen 12 Zoll und 10 Zoll ausführbar ist, wobei nach einem besonderen Merkmal sogar derselbe Fahrradrahmen verwendet werden kann. Auch diese Ausführungsformen sind von der Erfindung umfasst.

Fig. 17 zeigt die Seitenansicht einer zweiten bevorzugten Ausführungsform des Fahrrades mit einseitiger Hinterradaufhängung, einem Zahnriemengetriebe mit nachgeschaltetem Planetengetriebe, das wiederum eine Hinterradwelle antreibt, 10-Zoll-Vollkunststoff-Laufrädern und einer Radschutzbremse, wobei das Fahrrad von einem 2,0 m großen Menschen gefahren wird.

Auch in diesem Ausführungsbeispiel ist der Lenker 16 so nah zum Rumpf 27 des Fahrers angeordnet, dass der 2,0 m große, aufrecht fahrende Mensch sowohl den Ellenbogen 28, als auch die Unterarme 29 und gegebenenfalls die Handgelenke 30 an seinen Rumpf 27 anlegen kann.

Nach einem besonderen Merkmal der Erfindung werden in dem Ausführungsbeispiel in Fig. 17 gemäß DE 10 2011 053 875 A1 ein vorderes Rahmenteil 65 und ein hinteres Rahmenteil 66 eingesetzt, die parallel zur und außerhalb der Bezugsmittelebene des Fahrrades verlaufen, wobei die Rahmenteile aus stranggepressten Profilen hergestellt werden. Die beiden Rahmenteile 65 und 66 sind wiederum mit einem Klappgelenk 67 verbunden. Nach einem besonderen Merkmal der Erfindung ist ein Tretlager 68 in diesem Ausführungsbeispiel mit einem handelsüblichen Antriebsrad 69 eines Zahnriemengetriebes verbunden. Das Antriebsrad 69 des Zahnriemengetriebes treibt über einen Zahnriemen 70 ein Abtriebsrad 71 des Zahnriemengetriebes an, das mit Hilfe einer Getriebeeinheit eine Hinterradwelle 72 antreibt. Wiederum wird bezüglich einer detaillierten Beschreibung der Getriebeeinheit auf

DE 10 2011 050 447 A1 verwiesen. Die erforderliche Riemenspannung wird durch eine am Leertrum des Zahnriemens 70 angeordnete Riemenspannrolle 73 erzeugt, die von einem mit dem hinteren Rahmenteile 66 verbundenen Führungselement 74 in Richtung des Lasttrums des Zahnriemens 70 gezogen wird. Mit der Hinterradwelle 72 ist auf der dem Abtriebsrad 71 gegenüber liegenden Seite des hinteren Rahmenteils 66 in diesem Ausführungsbeispiel ein 10 Zoll großes Vollkunstöfflaufrad als Hinterrad 75 verbunden. Nach einem besonderen Merkmal der Erfindung erfolgt die Abbremsung des Hinterrades 75 durch einen drehbar mit dem Fahrradrahmen verbundenen Radschutz 76 des Hinterrades 75. Da das Fahrrad im Stehen gefahren wird, kann der Fahrer zur Abbremsung des Hinterrades 75 seinen Fuß auf den drehbar im Rahmen angeordneten Radschutz 76 drücken und mit dem Radschutz 76 entsprechend Druck auf das Hinterrad 75 ausüben. Seine Massenträgheit drückt ihn dabei gegen den Lenker 16, was ihn in die Lage versetzt, gegen diesen Druck durch entsprechende Körperspannung weitere Kraft auf das Hinterrad 75 auszuüben und das Fahrrad sicher und zügig abzubremsen.

Ein Steuerkopfrohr 77 ist nach einem besonderen Merkmal der Erfindung seitlich mit dem vorderen Rahmenteil 65 verbunden. Zu diesem Zweck weist das Steuerkopfrohr 77 nach einem besonderen Merkmal der Erfindung zwei Arme auf, die auf der Ober- und auf der Unterseite des vorderen Rahmenteils 65 mit dem vorderen Rahmenteil 65 verbunden sind. Die die Arme bildenden Ausnehmungen des aus einem stranggepressten Profil hergestellten Steuerkopfrohres 77 sind parallel zum Verlauf des vorderen Rahmenteils 65 vorzunehmen und können in einem beliebigen Winkel zur Strangpressrichtung des Steuerkopfrohres 77 vorgenommen werden. Zum Zwecke eines möglichst geringen erreichbaren Faltmaßes verläuft das vordere Rahmenteil 65 in diesem Ausführungsbeispiel nach einem besonderen Merkmal der Erfindung parallel zur Horizontalen, womit die die Arme des Steuerkopfrohres 77 bildenden Ausnehmungen des stranggepressten Profils des Steuerkopfrohres 77 in einem Winkel von 75° zur Strangpressrichtung des Steuerkopfrohres 77 verlaufen.

Nach einem weiteren besonderen Merkmal der Erfindung ist eine Vorderradgabel 78 aus einem stranggepressten Profil hergestellt, wobei die Strangpressrichtung des Profils der Vorderradgabel 78 orthogonal zur Strangpressrichtung des Steuerkopfrohres 77 verläuft. An der Vorderradgabel 78 ist über Befestigungsschrauben 79 ein Flansch mit einer Vorderradachse befestigt, auf der ein Vorderrad 80 drehend gelagert ist. Nach einem besonderen Merkmal der Erfindung kann an die Vorderradgabel 78 ebenso ein Vorderrad mit einem Elektromotor angeordnet werden, wobei sich das Motordrehmoment über die Befestigungsschrauben 79 an der Vorderradgabel 78 abstützen kann. Auch diese Ausführungsformen sind von der Erfindung umfasst.

Als Vorderradbremse kann eine hier nur angedeutete Bremse mit einem auf das Vollkunststoff-Laufrad direkt wirkenden Bremsklotz 81 aus Metall, vorzugsweise Stahl oder Aluminium, zum Einsatz kommen. Dieses Bremsprinzip ist altbekannt und wird daher nicht weiter ausgeführt. Wesentlich daran ist, dass die Bremse keine größere Breite erfordert als das Laufrad selbst, womit das angestrebte geringe Faltmaß erreicht wird.

Wie in Fig. 17 vermerkt, wird durch den Einsatz des 10-Zoll-Laufrades eine besonders geringe Hinterbaulänge von höchstens 14 cm verwirklicht. Diese geringe Hinterbaulänge bietet den Vorteil, dass noch mehr Fahrergewicht auf das Hinterrad 75 verlagert wird, womit das Haftungsvermögen des Hinterrades 75 auf dem Bodenbelag selbst beim Antritt dieser kleinen Laufradgröße verbessert ist.

Auch in diesem Ausführungsbeispiel sind nach einem besonderen Merkmal der Erfindung die geometrischen Werte des Fahrrades so ausgeführt, dass eine in fast allen Belangen normgerechte Ausführung des Fahrrades verwirklicht ist mit einem Steuerkopfwinkel von 75°, einer normgerecht möglichen Abbremsung des Vorderrades 80 mit einer Bremsverzögerung von 3,4 m/s$^2$ ohne Vornüberkippen selbst des 2,0 m großen und 100 kg schweren Fahrers, der für eine seitliche Fahrradneigung von 25° erforderlichen Bodenfreiheit der in unterster Stellung befindlichen Pedale und damit der erforderlichen Tretlagerhöhe, der erforderlichen Fußfreiheit der Pedale mit einem erforderlichen Abstand von 100 mm der Pedalachse zum Vorderrad 80 beziehungsweise Zu einem Radschutz des Vorderrades 80. Aufgrund der kurzen Hinterbaulänge lastet mehr als 75% des Fahrergewichtes auf dem Hinterrad 75.

Die normative Anforderung an die Gewichtsverteilung ist im Wesentlichen zur Verhinderung des Abhebens des Vorderrades 80 bei schnellem Beschleunigen formuliert. Da das Fahrrad aus Fig. 17 im Stehen gefahren wird, ist trotz der geringen Hinterbaulänge und wegen des geringen Abstandes des Lenkers 16 zum Rumpf 27 des Fahrers gewährleistet, dass das Vorderrad 80 beim Beschleunigen nicht abheben kann.

Fig. 18 zeigt die Seitenansicht des Fahrrades aus Fig. 17 mit einem 1,4 m großen Menschen, der das Fahrrad fährt.

Zu diesem Zwecke ist wiederum das obere Lenkrohr 15 in das untere Lenkrohr 14 eingeschoben, wodurch der Lenker 16 niedriger wird. Wegen der in diesem Ausführungsbeispiel fehlenden Verstelleinnchtung für den Steuerkopfwinkel wandert der Lenker 16 mit abnehmender Höhe vom Rumpf 27 des Fahrers weg. Trotzdem ist der in Fig. 18 gezeigte Fahrer weiterhin in der Lage, im Interesse der Fahrstabilität wenigstens seine Ellenbogen 28 an den Rumpf 27 anzulegen, um einen zusätzlichen Abstützpunkt für die Lenkbewegung und für die Lenkerführung zu erhalten. Damit ist auch dieses Ausführungsbeispiel bei konstantem Steuerkopfwinkel und unter Beibehaltung der kennzeichnenden Merkmale der Erfindung gleichermaßen für Fahrer mit einem Körpergrößenunterschied von wenigstens 60 cm geeignet.

Fig. 19 zeigt eine Ansicht des Fahrrades aus Fig. 17 mit eingeklapptem Lenker.

Nach einem besonderen Merkmal der Erfindung verlaufen die Rahmenteile 65 und 66 außerhalb der Bezugsmittelebene des Fahrrades. In Fig. 19 wird deutlich, dass die weiteren wesentlichen Rahmenkomponenten, nämlich das Steuerkopfrohr 77, ein Tretlagergehäuse 82 und eine Halterung 83 für den drehbeweglichen und als Bremse dienenden Radschutz 76 des Hinterrades 75 nach einem besonderen Merkmal der Erfindung auf einer Seite der Rahmenteile 65 beziehungsweise 66 liegen und mit diesen verbunden sind.

Nach einem besonderen Merkmal der Erfindung werden die Lenkrohre 14 und 15 sowie der Lenker 16 auf der dem Steuerkopfrohr 77 gegenüber liegenden Seite des vorderen Rahmenteils 65 nach unten geklappt. Die Drehachse des Klappgelenkes 11 ist dafür gegenüber dem Rahmenteil 65 um etwa 45° verdreht, die Drehachse des Klappgelenkes 11 ist darüber hinaus nicht genau rechtwinklig zur Steuerkopfrohrachse, so dass der Lenker 16 nach einem besonderen Merkmal der Erfindung in der gezeigten Weise wiederum weitgehend parallel zur Bezugsmittelebene des Fahrrades zu liegen kommt.

Fig. 20 zeigt in einer Detailansicht die Anordnung einer Rückstellfeder 84 für den als Bremse dienenden Radschutz 76 des Hinterrades 75. Die Halterung 83 des Radschutzes 76 ist fest mit dem Tretlagergehäuse 82 verbunden. In der Halterung 83 ist die Rückstellfeder 84 angebracht, die sich über ihren Arm 84a an der Unterseite des Tretlagergehäuses 82 abstützt und mit Hilfe des Arms 84b den Radschutz 76 zum Tretlagergehäuse 82 drückt. Nach einem besonderen Merkmal der Erfindung kann aufgrund der Gestaltung des Tretlagergehäuses 82 und aufgrund des geringen Platzbedarfs für Halterung 83, Radschutz 76 und Rückstellfeder 84 zwischen dem Hinterrad 75 und dem Tretlagergehäuse 82 ein besonders kleiner Abstand zwischen dem Außenumfang des Hinterrades 75 und der Tretlagerachse von etwa 4 cm verwirklicht werden.

Fig. 21 zeigt das zusammengeklappte Fahrrad aus Fig. 17 in der Seitenansicht. Nach einem besonderen Merkmal der Erfindung verläuft das vordere Rahmenteil 65 in etwa oder exakt parallel zur Grundebene, während das hintere Rahmenteil 66 von der Hinterradachse aus in einem solchen Winkel zur Grundebene nach oben verläuft, dass das Tretlager nach einem besonderen Merkmal der Erfindung seitlich gesehen zwischen der Ober- und der Unterseite des hinteren Rahmenteils 66 angeordnet ist und in normgerechter Höhe über der Grundebene liegt. Der besondere Vorteil dieser Ausführungsform besteht darin, dass durch den steilen Winkel des hinteren Rahmenteils 66 eine kurze Hinterbaulänge bei normgerechter Tretlagerhöhe erreicht wird und dass das vordere Rahmenteil 65 sehr kurz ausgeführt werden kann. Im Ergebnis wird damit nach einem besonderen Merkmal der Erfindung ein besonders kompaktes Faltmaß erreicht, das sicher die üblichen Bordgepäckmaße der Fluggesellschaften einhält. Die beiden längsten Faltlängen betragen dabei höchstens 53 cm beziehungsweise höchstens 34 cm. Das Gewicht des Fahrrades hält aufgrund des sehr leichten Rahmens ebenfalls die üblichen Bestimmungen für Bordgepäck der Fluggesellschaften ein.

Ein weiterer Vorteil der kurzen Hinterbaulänge in Verbindung mit dem steilen Winkel des hinteren Rahmenteils 66 zur Grundebene ist, dass das hintere Rahmenteil 66 trotz seiner schmalen Ausführung den aus den auf den Fahrradrahmen einwirkenden Biege- und Drehmomente resultierenden Stabilitätsanforderungen an den Fahrradrahmen genügen kann.

Fig. 22 zeigt das zusammengeklappte Fahrrad aus Fig. 17 in der anderen Seitenansicht. Fig. 23 zeigt das zusammengeklappte Fahrrad aus Fig. 17 in der Draufsicht. Nach einem besonderen Merkmal der Erfindung ist das vordere Rahmenteil 65 beim zusammengeklappten Fahrrad axial gesehen zwischen dem hinteren Rahmenteil 66 und einer Tretkurbel 85 mit dem Pedal 20 angeordnet. Nach einem weiteren besonderen Merkmal der Erfindung befindet sich das vordere Rahmenteil 65 im zusammengeklappten Zustand des Fahrrades oberhalb des Tretlagergehäuses 82. Aus beiden Merkmalen resultiert der Vorteil, dass die beiden Laufräder beim zusammengeklappten Fahrrad weitgehend deckungsgleich und ohne Zwischenraum nebeneinander beziehungsweise seitlich gesehen hintereinander liegen. Im Ergebnis führt die Anordnung der beiden direkt nebeneinander liegenden Laufräder und des parallel zur Bezugsmittelebene verlaufenden Lenkers zu einer sehr geringen Faltbreite von den in der Fig. 23 verzeichneten 24 cm.

Auch in diesem Ausführungsbeispiel werden trotz der erreichbaren geringen Faltmaße wiederum viele handelsübliche Fahrradkomponenten verwendet. Ebenso kann dieses Ausführungsbeispiel wie das Ausführungsbeispiel aus Fig. 1 mit handelsüblichen Antriebs-Kettenrädern und Abtriebs-Zahnkränzen versehen werden. Auch diese Ausführungsformen sind von der Erfindung umfasst. Nach einem besonderen Merkmal der Erfindung ist die Tretkurbel 85 aufgrund der günstigeren Fahreigenschaften beim Fahren im Stehen wiederum kürzer als übliche Tretkurbeln für sitzend gefahrene Erwachsenenfahrräder. In diesem Ausführungsbeispiel beträgt die Tretkurbellänge sogar nur 130 mm mit den oben bereits beschriebenen Vorteilen.

Um mit dem 10 Zoll großen Hinterrad 75 angemessene Entfaltungen zu erreichen, ist nach einem besonderen Merkmal der Erfindung im Kraftfluss gesehen zwischen dem Abtriebs-Zahnkranz 71 und der Hinterradwelle 72 ein in DE 10 2011 050 447 A1 ausführlich dargestelltes Planetengetriebe 86 mit wenigstens einer Gangstufe angeordnet mit einem feststehenden, direkt oder mittelbar mit dem Fahrradrahmen verbundenen Hohlrad, einem vom Abtriebs-Zahnkranz 71 angetriebenen Planetenträger mit Planetenrädern, die mit dem Hohlrad kämmen, und wenigstens einem mit den Planetenrädern kämmenden Sonnenrad, das direkt oder über eine dazwischen geschaltete Freilaufkupplung die Hinterradwelle 72 antreibt.

Fig. 24 zeigt das zusammengeklappte Fahrrad aus Fig. 17 in der Vorderansicht. Nach einem besonderen Merkmal der Erfindung sind das vordere Rahmenteil 65 und das hintere Rahmenteil 66 aus einem stranggepressten Profil hergestellt. Diese Profile weisen stabilisierende Querwände auf, die Montagekräfte abzustützen vermögen.

Ebenso sind nach einem besonderen Merkmal der Erfindung Gabelkopf, Gabelscheide und Gabelausfallende der Vorderradgabel 78 als einstückig hergestelltes Bauteil aus einem stranggepressten Profil hergestellt, wobei die Strangpressrichtung nach einem besonderen Merkmal der Erfindung weitgehend oder exakt rechtwinklig zur Steuerkopfrohrachse verläuft. Der besondere Vorteil besteht darin, dass keine festigkeitsmindernden Verbindungen zwischen dem Gabelkopf und den Gabelscheiden erforderlich sind.

Fig. 25 zeigt die Seitenansicht einer dritten bevorzugten Ausführungsform des Fahrrades mit einseitiger Hinterradaufhängung, einem Kettengetriebe mit nachgeschaltetem Planetengetriebe, einer Scheibenbremse und mit 12-Zoll-Laufrädern mit einem besonders breiten Reifen.

Dargestellt ist ein 2,0 m großer Fahrer. Die Pedale 20 sind in dieser Darstellung auf gleicher Höhe, der Fahrer hat seine Beine durchgestreckt und kann problemlos weiter den Lenker 16 umgreifen. In dieser Ausführungsform ist mit den verwendeten 12-Zoll-Laufrädern nach einem besonderen Merkmal der Erfindung eine Hinterbaulänge von höchstens 17 cm verwirklicht.

Auch in diesem Ausführungsbeispiel sind nach einem besonderen Merkmal der Erfindung die geometrischen Werte des Fahrrades so ausgeführt, dass eine in allen Belangen normgerechte Ausführung des Fahrrades verwirklicht ist mit einem Steuerkopfwinkel von 75°, einer Gewichtsverteilung von wenigstens 25% auf einem Vorderrad 88, einer normgerecht möglichen Abbremsung des Vorderrades 88 mit einer Bremsverzögerung von 3,4 m/s$^2$ ohne Vornüberkippen selbst des 2,0 m großen und 100 kg schweren Fahrers, der für eine seitliche Fahrradneigung von 25° erforderlichen Bodenfreiheit der in unterster Stellung befindlichen Pedale 20 und damit der erforderlichen Tretlagerhöhe, der erforderlichen Fußfreiheit der Pedale 20 mit einem erforderlichen Abstand von 100 mm der Pedalachse zum Vorderrad 88 beziehungsweise zu einem Radschutz des Vorderrades 88 und der durch die Verwendung der Luftreifen sicheren Überfahrbarkeit von 25 mm hohen und 12 mm angefasten Leisten.

Die verzeichneten Bezugszeichen werden zu den folgenden Figuren beschrieben.

Fig. 26 zeigt eine Ansicht des Fahrrades aus Fig. 25 von unten ohne die Laufräder. Fig. 27 zeigt eine Rückansicht des hinteren Teils des Fahrrades mit demontiertem Hinterrad.

Eine einarmige Vorderradgabel 87 weist einen dem Vorderrad 88 mit breitem 12-Zoll-Laüfreifen angepassten Verlauf auf. Ihre Ausfallende 89 ist mit einem Flansch 90 verbunden, der eine Achse zur Lagerung des Vorderrades 88 aufweist.

Nach einem besonderen Merkmal der Erfindung sind ein vorderes Rahmenteil 91 und/oder ein hinteres Rahmenteil 92 aus einem stranggepressten Profil gemäß DE 10 2011 052 270 A1 hergestellt, wobei die Strangpressrichtung von der Oberseite des Rahmenteils zur Unterseite des Rahmenteils verläuft. Die beiden Rahmenteile 91 und 92 sind über ein Klappgelenk 93, beispielsweise das in DE 10 2011 052 134 A1 eingehend ausgeführte Klappgelenk, miteinander verbunden. Der besondere Vorteil der Rahmenform in diesem Ausführungsbeispiel besteht darin, dass der Rahmen den geometrischen und den Festigkeitsanforderungen durch Gestaltung und Zuschnitt des stranggepressten Profils angepasst werden kann. So weist das hintere Rahmenteil 92 folgende aus Fig. 26 und aus Fig. 27 ersichtliche besondere Merkmale auf:

a. das hintere Rahmenteil 92 ist auf Höhe eines Tretlagers 94 so breit wie die Klemmbreite des Tretlagers 94 es erfordert. Ein entsprechendes Tretlagergehäuse 95 schließt bündig mit dem Rahmenteil 92 ab.

b. Im Verlauf nach hinten beschreibt das hintere Rahmenteil 92 nach einem besonderen Merkmal der Erfindung einen nach außen verlaufenden Bogen 92a, wodurch das 12-Zoll-Laufrad mit breitem Reifen mittig zur Bezugsmittelebene des Fahrrades angeordnet werden kann. Der Bogen 92a hält nach außen den erforderlichen Abstand zu einer Kette 96 ein und ist zum Tretlager 94 hin breiter und damit stabiler ausgeführt.

c. Im weiteren Verlauf zur Hinterradachse eines Hinterrad 97 weist das hintere Rahmenteil 92 nach einem besonderen Merkmal der Erfindung eine Äusnehmung beziehungsweise eine stranggepresste Kammer 92b auf, in der eine lineare Führung 98 für eine Kettenspannrolle 99 angeordnet ist, wobei die Kettenspannrolle 99 und damit die Kette 96 durch eine in der Ausnehmung angeordnete Einstellschraube 100 nach oben gezogen und gespannt wird.

d. Im weiteren Verlauf zur Hinterradachse des Hinterrades 97 verspringt das hintere Rahmenteil 92 hin zur Bezugsmittelebene des Fahrrades, um Raum zu schaffen für den mit dem hinteren Rahmenteil 92 verbundenen Hinterradantrieb. Um mit dem 12 Zoll großen Hinterrad 97 angemessene Entfaltungen zu erreichen, ist nach einem besonderen Merkmal der Erfindung im Kraftfluss gesehen zwischen einem Abtriebs-Zahnkranz 102 und einer Hinterradwelle 103 ein in DE 10 2011 050 447 A1 ausführlich dargestelltes Planetengetriebe 104 mit wenigstens einer Gangstufe angeordnet mit einem feststehenden, direkt oder mittelbar mit dem Fahrradrahmen verbundenen Hohlrad, einem vom Abtriebs-Zahnkranz 102 angetriebenen Planetenträger mit Planetenrädern, die mit dem Hohlrad kämmen, und wenigstens einem mit den Planetenrädem kämmenden Sonnenrad, das direkt oder über eine dazwischen geschaltete Freilaufkupplung die Hinterradwelle 103 antreibt.

e. Auf Höhe des Hintenadantriebes weist das hintere Rahmenteil 92 nach einem besonderen Merkmal der Erfindung weitere Ausnehmungen auf, die zur Montage einer Bremszange 105 einer Scheibenbremse dienen, wobei eine Bremsscheibe 106 nach einem weiteren besonderen Merkmal der Erfindung vom hinteren Rahmenteil 92 aus gesehen auf der Seite des und innerhalb des Hinterrades 97 angeordnet ist. Die Bremszange 105 ist über Befestigungsschrauben 107 und 108 direkt mit dem hinteren Rahmenteil 92 verbunden.

Fig. 28 zeigt eine vergrößerte Ansicht des hinteren Teil des Fahrrades zur Verdeutlichung der Anordnung der Scheibenbremse.

Fig. 29 zeigt die Bremsscheibe der Scheibenbremse in Verbindung mit einem Hinteiradflansch, an dem die Bremsscheibe befestigt ist, in der Montagestellung.

Fig. 30 zeigt die Bremsscheibe und den Hinterradflansch im eingebauten Zustand.

Die Hinterradwelle 103 ist auf der dem Hinterrad 97 zugewandten Seite des hinteren Rahmenteils 92 zu einem Hinterradflansch 103a ausgebildet. Nach einem besonderen Merkmal der Erfindung wird die Bremsscheibe 106 an den Hintetradflansch 103a der Hinterrad welle 103 so montiert, dass die Bremsscheibe 106 axial gesehen zwischen dem hinteren Rahmenteil 92 und dem Hinterradflansch 103a mit dem Hinterradflansch 103a verbunden ist. Zu diesem Zweck weisen die Bremsscheibe 106 und der Hinterradflansch 103a Ohren 103b beziehungsweise 106a auf, die wechselseitig aneinander vorbei geschoben werden können, um die Bremsscheibe 106 hinter den Hinterradflansch 103a zu bekommen und dort mit dem Hinterradflansch 103a montieren zu können. Optional kann der Hinterradflansch 103a zur Erzielung einer formschlüssigen Bremskraftübertragung von der Bremsscheibe 106 auf den Hinterradflansch 103a zu den Ohren 106a der Bremsscheibe 106 hin eine Kante 103c aufweisen, an der sich die Ohren 106a der Bremsscheibe 106 beim Abbremsen des Fahrrades zum Hinterradflansch 103a hin abstützen.

Fig. 31 zeigt das zusammengeklappte Fahrrad aus Fig. 25 in der Seitenansicht und die Anordnung der Scheibenbremse aus einer weiteren Perspektive. Das hintere Rahmenteil 92 weist nach einem besonderen Merkmal der Erfindung wie in DE 10 2011 052 270.9 eine dem Verlauf der Bremszange 105 folgende Ausnehmung sowie weitere Ausnehmungen zur Führung von Befestigungsschrauben 107 und 108, die die Bremszange 105 mit dem hinteren Rahmenteil 92 verbinden, auf. Um die Befestigungsschraube 108 am hinteren Rahmenteil 92 verklemmen zu können, weist das hintere Rahmenteil 92 eine weitere seitliche Ausnehmung auf, in der eine Rundmutter 109 angeordnet ist, die wiederum mit der Befestigungsschraube 108 verspannt ist. Ein Bremszug 110 ist ebenfalls angedeutet und wird zwischen dem Hinterrad 97 und der Kette 96 nach vorn geführt.

Fig. 32 zeigt das zusammengeklappte Fahrrad aus Fig. 25 in der anderen Seitenansicht und Fig. 33 zeigt das zusammengeklappte Fahrrad aus Fig. 25 in der Vorderansicht.

Wie in dem Ausführungsbeispiel aus Fig. 17 ist auch in diesem Ausführungsbeispiel nach einem besonderen Merkmal der Erfindung das vordere Rahmenteil 91 beim zusammengeklappten Fahrrad axial gesehen zwischen dem hinteren Rahmenteil 92 und einer Tretkurbel 111 mit dem Pedal 20 angeordnet. Nach einem weiteren besonderen Merkmal der Erfindung befindet sich das vordere Rahmenteil 91 im zusammengeklappten Zustand des Fahrrades oberhalb eines Tretlagers 112. Aus beiden Merkmalen resultiert der Vorteil, dass das Hinterrad 97 und das Vorderrad 88 beim zusammengeklappten Fahrrad weitgehend deckungsgleich und ohne Zwischenraum nebeneinander liegen. Hinzu kommt, dass in diesem Ausführungsbeispiel aufgrund der breiten Reifen die einarmige Vorderradgabel 87 rohrförmig ist, so dass das Lenkrohr 14 und die Vorderradgabel 87 beim zusammengeklappten Fahrrad auf Höhe des Reifens seitlich gesehen nebeneinander liegen. Im Ergebnis führt die Anordnung der beiden direkt nebeneinander liegenden Laufräder von dem Vorderrad 88 und dem Hinterrad 97, der seitlich gesehen nebeneinander liegenden Komponenten Vorderradgabel 87 und Lenkrohr 14 und des parallel zur Bezugsmittelebene verlaufenden Lenkers 16 nach einem besonderen Merkmal der Erfindung zu einem sehr kleinen Faltmaß.

Nach einem besonderen Merkmal der Erfindung hält auch dieses Ausführungsbeispiel mit breiten 12 Zoll-Laufrädern wie in Fig. 32 verzeichnet mit einer längsten Faltlänge von 54 cm sicher die üblichen Bordgepäckmaße der Fluggesellschaften ein.

Fig. 34 zeigt das zusammengeklappte Fahrrad aus Fig. 25 in einer Ansicht von oben, um die weiteren Faltmaße zu verdeutlichen. Die Faltmaße des Fahrrades betragen danach nach einem besonderen Merkmal der Erfindung 54 cm + 36 cm + 24 cm = 114 cm, womit das üblicherweise einzuhaltende Bordgepäckmaß der Fluggesellschaften von L + H + T = 115 cm auch in diesem Ausführungsbeispiel sicher eingehalten wird. Auch in diesem Ausführungsbeispiel wird das handelsübliche faltbare Pedal 20 verwendet. Aus Fig. 34 wird unmittelbar deutlich, dass verfügbare Faltpedale, die noch geringere Faltbreiten erreichen, das Faltmaß des Fahrrades noch weiter reduzieren können.

Fig. 35 zeigt die Seitenansicht einer vierten bevorzugten Ausführungsform mit 14-Zoll großen Laufrädern, einem einstufigen Kettengetriebe mit einem besonders kleinen Abtriebs-Zahnkranz und einer Trommelbremse.

Ein vorderes Rahmenteil 113 ist mit einem hinteren Rahmenteil 114 über ein Klappgelenk 115 verbunden. Ein Vorderrad 116 und ein Hinterrad 117 sind 14 Zoll groß. Das Hinterrad 117 wird nach einem besonderen Merkmal der Erfindung durch einen - beispielsweise gemäß DE 10 2011 051 850 B3 gestalteten - Hinterradantrieb mit einer Hinterradwelle 118 über den Abtriebs-Zahnkranz 119 eines vorgeschalteten Kettengetriebes angetrieben. Das Hinterrad 117 ist mit der Hinterradwelle 118 auf der einem Abtriebs-Zahnkranz 119 gegenüber liegenden Seite des hinteren Rahmenteils 114 verbunden. Nach einem besonderen Merkmal der Erfindung ist axial gesehen zwischen dem hinteren Rahmenteil 114 und dem Hinterrad 117 eine Trommelbremse 120 angeordnet, die über einen drehbar im hinteren Rahmenteil 114 angeordneten Bremsbügel 121 betätigt wird, wobei sich das Bremsseil entsprechend handelsüblicher Trommelbremsen an einem vorderen Bremssteg 122 abstützt.

Auf die in allen Belangen normgerechte Ausführung, die auch in dieser Ausführungsform gewährleistet ist, sowie auf die vielen auch hier verwendeten handelsüblichen Fahrradkomponenten wurde bereits an anderer Stelle hingewiesen.

In dieser Ausführungsform wird nach einem besonderen Merkmal der Erfindung mit den verwendeten 14-Zoll-Laufrädern eine Hinterbaulänge von höchstens 18 cm verwirklicht.

Fig. 36 zeigt eine Ansicht des Fahrrades aus Fig. 35 von unten ohne die Laufräder zur Verdeutlichung der Anordnung des Hinterradantriebes und der Trommelbremse 120.

Das vordere Rahmenteil 113 und das hintere Rahmenteil 114 sind nach einem besonderen Merkmal der Erfindung in diesem Ausführungsbeispiel wiederum gemäß DE 10 2011 053 733 A1 mit zwei äußeren Segmenten 113a beziehungsweise 114a und 113b beziehungsweise 114b ausgefüllt, wobei nach einem besonderen Merkmal der Erfindung das äußere Segment 113a des vorderen Rahmenteils, 113 und das äußere Segment 114a des hinteren Rahmenteils 114 in der Bezugsmittelebene des Fahrrades angeordnet sind. Nach einem besonderen Merkmal der Erfindung weisen die tragenden Rahmenteile 113 und 114 unterschiedlich breite stranggepresste Profile auf. Dies hat den Vorteil, dass insbesondere das vordere Rahmenteil 113 schmal genug ausgeführt werden kann, um, wie aus Fig. 37 ersichtlich, im zusammengeklappten Zustand oberhalb eines Tretlagers 123 und axial gesehen wiederum zwischen dem hinteren Rahmenteil 114 und dem Pedal 20 angeordnet werden zu können mit den bereits beschriebenen Vorteilen betreffend das erreichbare Faltmaß.

Fig. 37 zeigt das zusammengeklappte Fahrrad aus Fig. 35 in der Seitenansicht. Fig. 38 zeigt das zusammengeklappte Fahrrad aus Fig. 35 in der anderen Seitenansicht.

Nach einem besonderen Merkmal der Erfindung hält auch dieses Ausführungsbeispiel mit 14 Zoll-Laufrädem wie in Fig. 37 verzeichnet mit einer längsten Faltlänge von 54 cm sicher die üblichen Bordgepäckmaße der Fluggesellschaften ein.

Fig. 39 zeigt das zusammengeklappte Fahrrad aus Fig. 35 in einer Ansicht von oben, um die Faltmaße zu verdeutlichen.

Die Faltmaße des Fahrrades betragen danach nach einem besonderen Merkmal der Erfindung 54 cm + 38 cm + 23 cm = 115 cm, womit das üblicherweise einzuhaltende Bordgepäckmaß von L + H + T = 115 cm auch in diesem Ausführungsbeispiel eingehalten wird. Auch in diesem Ausführungsbeispiel wird das handelsübliche faltbare Pedal 20 verwendet. Aus Fig. 39 wird wiederum unmittelbar deutlich, dass verfügbare Faltpedale, die noch geringere Faltbreiten erreichen, das Faltmaß des Fahrrades noch weiter reduzieren würden.

Nach einem besonderen Merkmal der Erfindung dient eine linke Tretkurbel 124 dazu, das vordere Rahmenteil 113 und damit das Vorderrad 116 gegen das Hinterrad 117 zu verspannen, womit nochmals ein geringeres Faltmaß erreicht werden kann. Zu diesem Zweck wird die Tretkurbel 124 im zusammengeklappten Zustand zum Vorderrad 116 gedreht, womit die Tretkurbel 124 über die vom vorderen Rahmenteil 113 gebotene schiefe Ebene die entsprechende Kraft auf das vordere Rahmenteil 113 ausüben kann.

Fig. 40 zeigt die Seitenansicht einer fünften bevorzugten Ausführungsform mit 8-Zoll-Vollkunststoff-Laufrädern und einer mit dem Hinterrad verbundenen Getriebeeinheit mit Planetengetriebe. Wiederum ist ein vorderes Rahmenteil 125 mit einem hinteren Rahmenteil 126 über ein Klappgelenk 127 verbunden. Diese Ausführungsform beinhaltet ein 8 Zoll großes Hinterrad 128 und ein 8 Zoll großes Vorderrad 129.

Um trotz der kleinen Laufräder die erforderliche Tretlagerhöhe bei dieser Laufradgröße zu erreichen, ist ein Tretlager 130 nach einem besonderen Merkmal der Erfindung über ein mit dem hinteren Rahmenteil 126 verbundenes Tretlagergehäuse 131 seitlich gesehen oberhalb der Oberkante des hinteren Rahmenteils 126 angeordnet. Dadurch wird eine sehr kurze Hinterbaulänge von 8 cm verwirklicht. Wiederum ist ein zweistufiger Fahrradantrieb verwirklicht, wobei die erste Stufe ein Kettengetriebe und die zweite Stufe eine Getriebeeinheit mit Planetengetriebe mit feststehendem Hohlrad und abgetriebenem Sonnenrad, beispielsweise eine Getriebeeinheit gemäß DE 10 2011 050 447 A1, ist. In Kombination der kurzen Hinterbaulänge mit dem Fahrradantrieb wird nach einem besonderen Merkmal der Erfindung selbst für das hier verwendete 8 Zoll große Hinterrad 128 ein gutes Haftungsvermögen des Hinterrades 128 auf schlechterem Untergrund erreicht.

Zur Abbremsung des Fahrrades in diesem Ausführungsbeispiel ist nach einem besonderen Merkmal der Erfindung lediglich die bereits in Fig. 17 beschriebene Abbremsung durch einen Radschutz 132 des Hinterrades 128 vorgesehen, weshalb im Interesse eines geringen Gewichtes und im Interesse eines besonders kompakten Faltmaßes auf weitere Anbauteile am Lenker, insbesondere auf Bremshebel verzichtet werden kann.

Aufgrund der geringen Hinterbaulänge und der daraus resultierenden kurzen Rahmenteile 127 und 128 erscheint für diese Ausführungsform auch die Verwendung von Rahmenteilen aus Hartholz denkbar. Auch Ausführungsformen mit Rahmenteilen aus Holz oder anderen geeigneten Materialien sind von der Erfindung umfasst. In diesem Fall wäre das Klappgelenk in Bezug auf die Verbindung mit den Rahmenteilen geringfügig zu modifizieren.

Fig. 41 zeigt das zusammengeklappte Fahrrad aus Fig. 40 in der Seitenansicht.

Nach einem besonderen Merkmal der Erfindung hält auch dieses Ausführungsbeispiel mit 8 Zoll-Laufrädern wie in Fig. 41 verzeichnet mit einer längsten Faltlänge von 47 cm sicher die üblichen Bordgepäckmaße der Fluggesellschaften ein.

Eine Kettenspannrolle 133 ist in dieser Ausführungsform mittels einer am hinteren Rahmenteil 126 befestigten Klemmschiene 134 und einer die Kettenspannrolle 133 lagernden Klemmschraube 135 linear verschieblich am hinteren Rahmenteil 126 fixiert.

Fig. 42 zeigt das zusammengeklappte Fahrrad aus Fig. 40 in der zu Fig. 41 gegenüber liegenden Seitenansicht.

Nach einem besonderen Merkmal der Erfindung ist das Tretlager 130 im zusammengeklappten Zustand des Fahrrades in dem durch das vordere Rahmenteil 125, das hintere Rahmenteil 126 und eine Vorderradgabel 136 gebildeten Dreieck angeordnet.

Des Weiteren ist der Lenker 16 und das Lenkrohr 15 sogar so weit in das Lenkrohr 14 eingeschoben, dass das Lenkrohr 15 am anderen Ende des Lenkrohres 14 wieder aus dem Lenkrohr 14 herausgeschoben ist.

Mit der Anordnung des Tretlagers 130 und dem weit eingeschobenen Lenkrohr 15 wird nach einem besonderen Merkmal der Erfindung schließlich ein besonders kompaktes Faltmaß erreicht.

Fig. 43 zeigt das zusammengeklappte Fahrrad aus Fig. 40 in der Vorderansicht. Aus Fig. 43 ist ersichtlich, dass im zusammengeklappten Zustand zwischen dem vorderen Rahmenteil 125 und dem hinteren Rahmenteil 126 genügend Platz verfügbar ist, um beispielsweise auch Rahmenteile gemäß Fig. 25 und/oder gemäß Fig. 35 einzusetzen und das kompakte Faltmaß trotzdem einzuhalten.

Fig. 44 zeigt das zusammengeklappte Fahrrad aus Fig. 40 in einer Ansicht von oben, um die Faltmaße zu verdeutlichen.

Um ein besonders kompaktes Faltmaß zu erreichen, weist der Radschutz 132 eine Ausnehmung 132a auf, damit das Vorderrad 129 und das Hinterrad 128 im zusammengeklappten Zustand des Fahrrades so dicht wie möglich nebeneinander zu liegen kommen.

Die Faltmaße des Fahrrades betragen danach nach einem besonderen Merkmal der Erfindung 47 cm + 32 cm + 24 cm = 102 cm, womit das üblicherweise einzuhaltende Bordgepäckmaß von L + B + T = 115 cm auch in diesem Ausführungsbeispiel sicher eingehalten wird.

In Bezug auf die Beschreibung der weiteren Merkmale dieser Ausführungsform wird an dieser Stelle auf die bereits beschriebenen Ausführungsformen verwiesen.

In der folgenden Tabelle ist die Ermittlung des zuvor definierten Bemessungswertes

$$\text{Bemessungswert} = 1 \geq \text{TKL} / \text{AA} + \text{HBL} / \text{AA} + \text{TKL} * F * \ddot{U} / Da$$

als charakterisierendes Merkmal der Erfindung und der dargestellten bevorzugten Ausführungsformen mit den Faktoren F = 5,4 und F = 5,8 dargestellt. Für alle gezeigten Ausführungsformen ergibt sich ein Wert $\leq$ 1, womit ein wesentliches Merkmal der Erfindung nachgewiesen ist.

Tabelle A: Ermittlung des Bemessungswertes für die dargestellten Ausführungsformen

| | | Fig. 1 | Fig. 17 | Fig. 25 | Fig. 35 | Fig. 40 | Fig. 45 |
|---|---|---|---|---|---|---|---|
| Laufradgröße | Zoll | 14 | 10 | 12 | 14 | 8 | 16 |
| Laufraddurchmesser | mm | 341 | 254 | 305 | 341 | 203 | 391 |
| TKL | mm | 150 | 130 | 130 | 150 | 130 | 150 |
| HBL | mm | 220 | 140 | 170 | 180 | 80 | 230 |
| VR-HR | mm | 710 | 630 | 660 | 690 | 570 | 710 |
| VR-TL | | 490 | 490 | 490 | 510 | 490 | 480 |
| 1. Getriebestufe | | | | | | | |
| Zähnezahl Antriebs-Kettenrad | Zähne | 42 | 36 | 36 | 42 | 42 | 42 |
| Zähne-Zahl Abtriebs-Zahnkranz | Zähne | 18 | 17 | 18 | 9 | 17 | 9 |

(fortgesetzt)

|  |  | Fig. 1 | Fig. 17 | Fig. 25 | Fig. 35 | Fig. 40 | Fig. 45 |
|---|---|---|---|---|---|---|---|
| 1/Ü 1. Getriebestufe |  | 2,33 | 2,12 | 2,00 | 4,67 | 2,47 | 4,67 |
| 2. Getriebestufe |  |  |  |  |  |  |  |
| Zähnezahl Hohlrad |  | 67 | 57 | 57 |  | 57 |  |
| Zähnezahl Planetenrad |  | 19 | 15 | 15 |  | 15 |  |
| Zähnezahl Sonnenrad |  | 29 | 27 | 27 |  | 27 |  |
| 1/Ü 2. Getriebestufe |  | 3,31 | 3,11 | 3,11 | 1 | 3,11 | 1,00 |
| 1/Ü |  | 7,72 | 6,59 | 6,22 | 4,67 | 7,69 | 4,67 |
| Entfaltung im schwersten Gang | m/U | 8,27 | 5,26 | 5,96 | 5,00 | 4,91 | 5,74 |
|  |  |  |  |  |  |  |  |
| Bemessungswert 1> | 5,4 | 0,83 | 0,85 | 0,82 | 0,99 | 0,82 | 0,98 |
| Bemessungswert 1> | 5,8 | 0,85 | 0,88 | 0,85 | 1,02 | 0,85 | 1,01 |

In der folgenden Tabelle sind Werte für weitere Ausführungsformen aufgeführt, wobei unterschieden wird zwischen den Eingang-Varianten mit einer Tretkurbellänge von 130 mm, die eine Entfaltung um die 5,3 m (beim 8-Zoll-Rad 4,6 m) pro Kurbelumdrehung erreichen, und den Mehrgang-Varianten mit einer Tretkurbellänge von 150 mm, die im schwersten Gang eine Entfaltung von circa 7,4 m (beim 10-Zoll-Rad 6,2 m) pro Kurbelumdrehung erreichen.

Tabelle B: Ermittlung des Bemessungswertes für weitere Ausführungsformen

|  |  | Eingang-Varianten | | | | Mehrgang-Varianten | | | |
|---|---|---|---|---|---|---|---|---|---|
| Laufradgröße | Zoll | 8 | 10 | 12 | 14 | 10 | 12 | 14 | 16 |
| Da = Laufraddurchmesser | mm | 203 | 254 | 305 | 341 | 254 | 305 | 341 | 391 |
| TKL = Tretkurbellänge | mm | 130 | 130 | 130 | 130 | 150 | 150 | 150 | 150 |
| HBL = Hinterbaulänge | mm | 200 | 250 | 250 | 250 | 250 | 250 | 250 | 250 |
| AA = Abstand VR-HR |  | 690 | 740 | 740 | 740 | 740 | 740 | 740 | 730 |
| VR-TL | mm | 490 | 490 | 490 | 490 | 490 | 490 | 490 | 480 |
| 1. Getriebestufe |  |  |  |  |  |  |  |  |  |
| Zähnezahl Antriebs-Kettenrad | Zähne | 42 | 36 | 36 | 36 | 42 | 42 | 42 | 42 |
| Zähne-Zahl Abtriebs-Zahnkranz | Zähne | 18 | 17 | 20 | 22 | 18 | 18 | 20 | 23 |
| 1/Ü 1. Getriebestufe |  | 2,33 | 2,12 | 1,80 | 1,64 | 2,33 | 2,33 | 2,10 | 1,83 |
| 2. Getriebestufe |  |  |  |  |  |  |  |  |  |
| Zähnezahl Hohlrad |  | 57 | 57 | 57 | 57 | 67 | 67 | 67 | 67 |
| Zähnezahl Planetenrad |  | 15 | 15 | 15 | 15 | 19 | 19 | 19 | 19 |
| Zähnezahl Sonnenrad |  | 27 | 27 | 27 | 27 | 29 | 29 | 29 | 29 |
| 1/Ü 2. Getriebestufe |  | 3,11 | 3,11 | 3,11 | 3,11 | 3,31 | 3,31 | 3,31 | 3,31 |
| 1/Ü |  | 7,26 | 6,59 | 5,6 | 5,09 | 7,72 | 7,72 | 6,95 | 6,04 |
| Entfaltung im schwersten Gang | m/U | 4,63 | 5,26 | 5,37 | 5,45 | 6,16 | 7,40 | 7,44 | 7,43 |
|  |  |  |  |  |  |  |  |  |  |
| Bemessungswert 1> | 5,4 | 0,95 | 0,93 | 0,92 | 0,92 | 0,95 | 0,88 | 0,88 | 0,89 |
| Bemessungswert 1> | 5,8 | 0,99 | 0,96 | 0,95 | 0,95 | 0,98 | 0,91 | 0,91 | 0,92 |

Aus der Tabelle wird ersichtlich, dass auch mit Hinterbaulängen von 25 cm der Bemessungswert noch sicher eingehalten wird. Außerdem halten alle Eingang- und Mehrgang-Varianten sogar einen Bemessungswert von 1,0 ein, wenn der Faktor auf F = 5,8 gesetzt wird.

In den nachfolgenden Patentansprüchen beziehen sich die genannten Zähnezahlen des Abtriebs-Zahnkranzes 22, 102 ,119 auf die für Fahrradketten übliche Kettenteilung von 12,7 mm.

**Patentansprüche**

1.    Kompaktes, zusammenklappbares Fahrrad,

enthaltend:

- einen Fahrradrahmen mit einem vorderen Rahmenteil (1, 65, 91, 113, 125), mit einem hinteren Rahmenteil (2, 66, 92, 114, 126) und mit einem das vordere Rahmenteil (1, 65, 91, 113, 125) und das hintere Rahmenteil (2, 66, 92, 114, 126) drehbeweglich zueinander verbindende Klappgelenk (3, 67, 93, 115)
- ein Steuerkopfrohr (6, 77),
- einen Lenker (16),
- ein Lenkrohr (14, 15), das über ein Klappgelenk (11) mit einem zum Steuerkopfrohr (6, 77) gelagerten Gabelschaft verbunden ist und das mit dem Lenker (16) verbunden ist,
- ein Vorderrad (10, 80, 88, 116, 129),
- ein Hinterrad (24, 75, 97, 117, 128),
- einen Fahrradantrieb zum Antrieb des Hinterrades (24, 75, 97, 117, 128), enthaltend ein Tretlager (17, 68, 94, 112, 123, 130), Tretkurbeln (19, 85, 111, 124) mit Pedale (20), die nur mit den Tretkurbeln (19, 85, 111, 124) verbunden sind und die 360° um ihre Pedalachse drehbeweglich sind, ein von den Tretkurbeln (19, 85, 111, 124) angetriebenes Antriebsrad (69) und ein zur Hinterradachse koaxiales Abtriebsrad (71), wobei das Abtriebsrad (71) von dem Antriebsrad (69) entweder über ein endloses Zugmittel oder über ein zwischengeschaltetes Zahnrad angetrieben wird und wobei der Abstand der Tretlagerachse zur Hinterradachse größer ist als der halbe Außendurchmesser des Hinterrades (24, 75, 97, 117, 128),
- eine Vorderradgabel (78, 87, 136), die mit dem Gabelschaft verbunden ist,

wobei im zusammengeklappten Zustand des Fahrrades das Vorderrad (10, 80, 88, 116, 129) und das Hinterrad (24, 75, 97, 117, 128) seitlich gesehen weitgehend deckungsgleich hintereinander angeordnet sind und das hintere Rahmenteil (2, 66, 92, 114, 126), das vordere Rahmenteil (1, 65, 91, 113, 125) und die Vorderradgabel (78, 87, 136) seitlich gesehen die Seiten eines Dreiecks bilden,
wobei
das Fahrrad im Stehen gefahren wird, das Abtriebsrad (71) des Fahrradantriebes auf der gleichen Seite des Fahrradrahmens angeordnet ist wie das Antriebsrad (69) des Fahrradantriebes und das Lenkrohr ein unteres Lenkrohr (14) und ein oberes Lenkrohr (15) aufweist, die im zusammengeklappten Zustand des Fahrrades seitlich neben das Vorderrad (10, 80, 88, 116, 129) eingeklappt sind, und wobei das Antriebsrad (69) des Fahrradantriebes gemeinsam mit einer Tretkurbel (19, 85, 111, 124) auf der gleichen Seite des Tretlagers (17, 68, 94, 112, 123, 130) angeordnet ist **dadurch gekennzeichnet, dass** der Mittelwert der Außendurchmesser von Hinterrad (24, 75, 97, 117, 128) und Vorderrad (10, 80, 88, 116, 129) höchstens 380 mm beträgt, und der Wert der nachfolgenden Berechnung höchstens 1,00 ergibt:
Wert = (Tretkurbellänge geteilt durch den Radstand des Fahrrades) plus (Hinterbaulänge geteilt durch den Radstand des Fahrrades)
plus (Tretkurbellänge multipliziert mit 5,4, geteilt durch den Außendurchmesser des Hinterrades, multipliziert mit der Übersetzung des Fahrradantriebes, wobei die Übersetzung die Drehzahl der Tretkurbel geteilt durch die Drehzahl des Hinterrades ist und wobei im Falle von mehrgängigen Fahrradantrieben die Übersetzung für den schwersten Gang einzusetzen ist).

2. Fahrrad nach Anspruch 1, **dadurch gekennzeichnet, dass** das Hinterrad (24, 75, 97, 128) einen Außendurchmesser von weniger als 425 mm aufweist und dem Abtriebsrad (71) des vorgeschalteten Fahrradantriebes ein Planetengetriebe (46), enthaltend ein mit dem Fahrradrahmen drehfest verbundenes Hohlrad, einen von dem Abtriebsrad (71) angetriebenen Planetenträger mit Planetenrädern und wenigstens ein abgetriebenes Sonnenrad, das das Hinterrad (24, 75, 97, 128) antreibt, nachgeschaltet ist.

3. Fahrrad nach einem der Ansprüche 1 oder 2, **dadurch gekennzeichnet, dass** das Hinterrad (117) einen Außendurchmesser von weniger als 425 mm aufweist und der Fahrradantrieb ein Kettengetriebe, enthaltend ein von der Tretkurbel angetriebenes Antriebs-Kettenrad und ein mit dem Antriebs-Kettenrad auf der gleichen Seite des Fahrradrahmens angeordneten Abtriebs-Zahnkranz (119) mit weniger als 13 Zähnen, eine im Fahrradrahmen gelagerte Hinterradwelle (118), auf der das Hinterrad (117) angeordnet ist, sowie eine im Kraftfluss gesehen zwischen dem Abtriebs-Zahnkranz (119) und der Hinterradwelle (118) angeordnete Freilaufkupplung aufweist.

4. Fahrrad nach einem der Ansprüche 1 bis 3, **dadurch gekennzeichnet, dass** der Lenker (16) höhenverstellbar ist.

5. Fahrrad nach einem der Ansprüche 1 bis 4, **dadurch gekennzeichnet, dass** das Fahrrad eine Verstelleinrichtung (33) für den Steuerkopfwinkel aufweist, durch die der Steuerkopfwinkel wenigstens in einem Bereich zwischen 65° und 75° eingestellt werden kann.

6.  Fahrrad nach einem der Ansprüche 1 bis 5, **dadurch gekennzeichnet, dass** das Abtriebsrad (71) des Fahrradantriebes axial gesehen auf der dem Hinterrad (24, 75, 97, 117, 128) gegenüber liegenden Seite des Fahrradrahmens angeordnet ist.

7.  Fahrrad nach einem der Ansprüche 2 bis 6, **dadurch gekennzeichnet, dass** das Planetengetriebe (46, 86, 104) axial gesehen auf derselben Seite des Fahrradrahmens angeordnet ist wie das Abtriebsrad (71) des Fahrradantriebes.

8.  Fahrrad nach einem der Ansprüche 1 bis 7, **dadurch gekennzeichnet, dass** das Hinterrad (75, 97, 117, 128) und das Vorderrad (80, 88, 116, 129) einarmig im Fahrradrahmen aufgehängt sind und das Hinterrad (75, 97, 117, 128) und das Vorderrad (80, 88, 116, 129) im eingeklappten Zustand des Fahrrades axial gesehen ohne dazwischen liegende Rahmenteilen direkt nebeneinander liegen.

9.  Fahrrad nach einem der Ansprüche 1 bis 8, **dadurch gekennzeichnet, dass** das vordere Rahmenteil (65, 91, 113, 125) im zusammengeklappten Zustand axial gesehen zwischen dem hinteren Rahmenteil (66, 92, 114, 126) und der Tretkurbel (85, 111, 124), die auf der dem Antriebsrad (69) des Fahrradantriebes gegenüber liegenden Seite des Fahrradrahmens angeordnet ist, liegt.

10. Fahrrad nach einem der Ansprüche 1 bis 9, **dadurch gekennzeichnet, dass** die Tretlagerachse seitlich gesehen oberhalb der auf Höhe der Tretlagerachse durch die Oberseite des Fahrradrahmens gebildeten Linie liegt und dass das Tretlager (130) im eingeklappten Zustand des Fahrrades in dem von dem vorderen Rahmenteil (125), dem hinteren Rahmenteil (126) und der Vorderradgabel (136) gebildeten Dreieck liegt.

**Claims**

1.  A compact, foldable bicycle,
    comprising:

    - a bicycle frame with a front frame part (1, 65, 91, 113, 125), a rear frame part (2, 66, 92, 114, 126) and a folding hinge (3, 67, 93, 115) connecting the front frame part (1, 65, 91, 113, 125) and the rear frame part (2, 66, 92, 114, 126) rotatably to each other,
    - a head tube (6, 77),
    - a handlebar (16),
    - a steering tube (14, 15) that is connected to the handlebar (16) and, via a folding hinge (11), to a fork stem, that is mounted rotatably to the head tube (6, 77),
    - a front wheel (10, 80, 88, 116, 129),
    - a rear wheel (24, 75, 97, 117, 128),
    - a bicycle drive for driving the rear wheel (24, 75, 97, 117, 128), comprising a bottom bracket (17, 68, 94, 112, 123, 130), cranks (19, 85, 111, 124) with pedals (20), that are only connected to the cranks (19, 85, 111, 124) and that can be rotated by 360° around their pedal axle, a driving wheel (69) driven by the cranks (19, 85, 111, 124) and an output wheel (71) coaxial to the rear-wheel axle, the output wheel (71) being driven by the driving wheel (69) either by means of a continuous traction element or by means of an intermediate gear and wherein the distance of the bottom-bracket axle to the rear-wheel axle is larger than half the outer diameter of the rear wheel (24, 75, 97, 117, 128),
    - a front-wheel fork (78, 87, 136) that is connected to the fork stem,

    wherein in the folded state of the bicycle, seen laterally, the front wheel (10, 80, 88, 116, 129) and the rear wheel (24, 75, 97, 117, 128) are arranged one behind the other largely congruently and the rear frame part (2, 66, 92, 114, 126), the front frame part (1, 65, 91, 113, 125) and the front-wheel fork (78, 87, 136) form the sides of a triangle, wherein
    the bicycle is ridden while standing up, that the output wheel (71) of the bicycle drive is arranged on the same side of the bicycle frame as the driving wheel (69) of the bicycle drive and that the steering tube exhibits a lower steering tube (14) and an upper steering tube (15), that can be displaced linearly relative to each other and that in the folded state of the bicycle are folded-in laterally beside the front wheel (10, 80, 88, 116, 129) and wherein the driving wheel (69) of the bicycle drive is arranged together with a crank (19, 85, 111, 124) on the same side of the bottom bracket (17, 68, 94, 112, 123, 130)
    **characterized in that** the average of the outer diameter of the rear wheel (24, 75, 97, 117, 128) and the front wheel (10, 80, 88, 116, 129) amounts to at most 380 mm and the value of the following calculation amounts to at most 1.00:

Value = (Crank length divided by the wheel base of the bicycle)

plus (horizontal component of the chainstay length divided by the wheel base of the bicycle)

plus (crank length multiplied by 5.4 divided by the outer diameter of the rear wheel, multiplied by the transmission ratio of the bicycle drive, the transmission ratio being the number of revolutions of the crank divided by the number of revolutions of the rear wheel and wherein in the case of multi-speed bicycle drives the transmission ratio for the hardest speed is to be inserted).

2. The bicycle according to Claims 1, **characterized in that** the rear wheel (24, 75, 97, 128) exhibits an outer diameter of less than 425 mm and there is connected downstream from the output wheel (71) of the upstream bicycle drive a planetary gear (46), comprising a ring gear non-rotatably engaged to the bicycle frame, a planet carrier driven by the output wheel (71) having planet gears, and at least one driven sun gear that drives the rear wheel (24, 75, 97, 128).

3. The bicycle according to one of Claims 1 or 2, **characterized in that** the rear wheel (117) exhibits an outer diameter of less than 425 mm and the bicycle drive exhibits a chain drive, comprising a driving sprocket driven by the crank and an output sprocket (119), having less than 13 teeth, arranged with the driving sprocket on the same side of the bicycle frame, a rear-wheel shaft (118) that supported in the bicycle frame and on which the rear wheel (117) is arranged, and a freewheel clutch arranged, seen in the force flow, between the output sprocket (119) and the rear-wheel shaft (118).

4. The bicycle according to Claims 1 to 3, **characterized in that** the height of the handlebar (16) can be adjusted.

5. The bicycle according to one of Claims 1 to 4, **characterized in that** the bicycle exhibits a setting device (33) for the head angle, by means of which the head angle can be set at least in a range between 65° and 75°.

6. The bicycle according to one of Claims 1 to 5, **characterized in that** the output wheel (71) of the bicycle drive, seen axially, is arranged on the side of the bicycle frame opposite the rear wheel (24, 75, 97, 117, 128).

7. The bicycle according to one of Claims 2 to 6, **characterized in that** the planetary gear (46, 86, 104), seen axially, is arranged on the same side of the bicycle frame as the output wheel (71) of the bicycle drive.

8. The bicycle according to one of Claims 1 to 7, **characterized in that** the rear wheel (75, 97, 117, 128) and the front wheel (80, 88, 116, 129) are single-arm suspended and the rear wheel (75, 97, 117, 128) and the front wheel (80, 88, 116, 129), when folded, seen axially, lie directly next to each other without intermediate frame parts.

9. The bicycle according to one of Claims 1 to 8, **characterized in that** the front frame part (65, 91, 113, 125), when folded, seen axially, is situated between the rear frame part (66, 92, 114, 126) and the crank (85, 111, 124) that is arranged on the side of the bicycle frame opposite the driving wheel (69) of the bicycle drive.

10. The bicycle according to one of Claims 1 to 9, **characterized in that**, seen laterally, the bottom-bracket-axle is situated above the upper-side-line of the bicycle frame and that the bottom-bracket (130) in the folded-in state of the bicycle, is situated in the triangle formed by the front frame part (125), the rear frame part (126) and the front-wheel fork (136).

**Revendications**

1. Bicyclette pliante compacte,
comprenant :

- un cadre de bicyclette muni d'un élément de cadre avant (1, 65, 91, 113, 125), d'un élément de cadre arrière (2, 66, 92, 114, 126) et d'une articulation pliante (3, 67, 93, 115) reliant l'un à l'autre, de manière mobile en rotation, l'élément de cadre avant (1, 65, 91, 113, 125) et l'élément de cadre arrière (2, 66, 92, 114, 126)
- un tube de direction (6, 77),
- un guidon (16),
- une colonne de direction (14, 15) qui est reliée à une tige de fourche logée vers le tube de direction (6, 77) par l'intermédiaire d'une articulation pliante (11) et qui est reliée au guidon (16),
- une roue avant (10, 80, 88, 116, 129),
- une roue arrière (24, 75, 97, 117, 128),
- un entraînement de bicyclette pour l'entraînement de la roue arrière (24, 75, 97, 117, 128), comprenant un ensemble pédalier (17, 68, 94, 112, 123, 130), des manivelles (19, 85, 111, 124) avec pédales (20) qui sont reliées uniquement aux manivelles(19, 85, 111, 124) et qui sont mobiles en rotation de 360° autour de leur axe de pédale, une roue d'entraînement (69) entraînée par les manivelles (19, 85, 111, 124) et une roue de sortie (71) coaxiale à l'axe de roue arrière, la roue de sortie (71) étant entraînée par la roue d'entraînement (69) soit par l'intermédiaire d'un moyen de traction sans fin soit par l'intermédiaire d'une roue dentée intermédiaire, et l'écart de l'axe de l'ensemble pédalier par rapport à l'axe de roue arrière étant plus grand que le demi-diamètre extérieur de la roue arrière (24, 75, 97, 117, 128),
- une fourche (78, 87, 136) de roue avant, qui est reliée à la tige de fourche,

dans laquelle, à l'état replié de la bicyclette, la roue avant (10, 80, 88, 116, 129) et la roue arrière (24, 75, 97, 117, 128), en vue de côté, sont disposées largement de manière à coïncider l'une derrière l'autre, et dans lequel l'élément de cadre arrière (2, 66, 92, 114, 126), l'élément de cadre avant (1, 65, 91, 113, 125) et la fourche (78, 87, 136) de roue avant, en vue de côté, forment les côtés d'un triangle,
dans laquelle la bicyclette est conduite debout, dans lequel la roue de sortie (71) de l'entraînement de bicyclette est disposée du même côté du cadre de bicyclette que la roue d'entraînement (69) de l'entraînement de bicyclette, et dans lequel a colonne de direction présente une colonne de direction inférieure (14) et une colonne de direction supérieure (15), qui, à l'état replié de la bicyclette, sont rabattues latéralement à côté de la roue avant (10, 80, 88, 116, 129), et
dans laquelle la roue d'entraînement (69) de l'entraînement de bicyclette est disposée en commun avec une manivelle (19, 85, 111, 124) du même côté de l'ensemble pédalier (17, 68, 94, 112, 123, 130),
**caractérisée en ce que** la valeur moyenne des diamètres extérieurs de la roue arrière (24, 75, 97, 117, 128) et de la roue avant (10, 80, 88, 116, 129) est au maximum de 380 mm et **en ce que** la valeur du calcul suivant donne au maximum 1,00 :

valeur = (longueur de manivelle divisée par l'empattement de la bicyclette)

plus (distance horizontale entre l'axe de l'ensemble pédalier et l'axe de roue arrière divisée par l'empattement de la bicyclette)

plus (longueur de manivelle multipliée par 5,4, divisée par le diamètre extérieur de la roue arrière, multipliée par le rapport de l'entraînement de bicyclette, le rapport étant la vitesse de rotation de la manivelle divisée par la vitesse de rotation de la roue arrière, et, dans le cas d'entraînements de bicyclette à plusieurs vitesses, le rapport pour la vitesse la plus dure devant être utilisé).

2. Bicyclette selon la revendication 1, **caractérisée en ce que** la roue arrière (24, 75, 97, 128) présente un diamètre extérieur de moins de 425 mm et **en ce qu'**un engrenage planétaire (46) est installé en aval de la roue de sortie (71) de l'entraînement de bicyclette installé en amont, l'engrenage planétaire comprenant une couronne reliée de manière solidaire en rotation au cadre de bicyclette, un train planétaire muni de roues planétaires, entraîné par la roue de sortie (71), et au moins une roue solaire entraînée, qui entraîne la roue arrière (24, 75, 97, 128).

3. Bicyclette selon l'une quelconque des revendications 1 ou 2, **caractérisée en ce que** la roue arrière (117) présente un diamètre extérieur de moins de 425 mm et **en ce que** l'entraînement de bicyclette présente un engrenage à chaîne, comprenant une roue à chaîne d'entraînement entraînée par la manivelle et une couronne dentée de sortie (119) disposée avec la roue à chaîne d'entraînement du même côté que le cadre de bicyclette, munie de moins de 13 dents, un arbre de roue arrière (118) logé dans le cadre de bicyclette, sur lequel arbre de roue arrière est disposée la roue arrière (117), ainsi qu'un accouplement à roue libre disposé, en vue dans le flux de force, entre la couronne dentée de sortie (119) et l'arbre de roue arrière (118).

4. Bicyclette selon l'une quelconque des revendications 1 à 3, **caractérisée en ce que** le guidon (16) est réglable en hauteur.

5. Bicyclette selon l'une quelconque des revendications 1 à 4, **caractérisée en ce que** la bicyclette présente un dispositif de réglage (33) de l'angle de direction, au moyen duquel l'angle de direction peut être réglé au moins dans une plage comprise entre 65° et 75°.

6. Bicyclette selon l'une quelconque des revendications 1 à 5, **caractérisée en ce que** la roue de sortie (71) de l'entraînement de bicyclette, en vue axiale, est disposée sur le côté du cadre de bicyclette opposé à la roue arrière (24, 75, 97, 117, 128).

7. Bicyclette selon l'une quelconque des revendications 2 à 6, **caractérisée en ce que** l'engrenage planétaire (46, 86, 104), en vue axiale, est disposé du même côté du cadre de bicyclette que la roue de sortie (71) de l'entraînement de bicyclette.

8. Bicyclette selon l'une quelconque des revendications 1 à 7, **caractérisée en ce que** la roue arrière (75, 97, 117, 128) et la roue avant (80, 88, 116, 129) sont accrochées avec un bras dans le cadre de bicyclette et **en ce que** la roue arrière (75, 97, 117, 128) et la roue avant (80, 88, 116, 129), à l'état replié de la bicyclette en vue axiale, sont situées directement l'une à côté de l'autre sans éléments de cadre situés entre elles.

9. Bicyclette selon l'une quelconque des revendications 1 à 8, **caractérisée en ce que** l'élément de cadre avant (65, 91, 113, 125), à l'état replié en vue axiale, est situé entre l'élément de cadre arrière (66, 92, 114, 126) et la manivelle (85, 111, 124) qui est disposée sur le côté du cadre de bicyclette opposé à la roue d'entraînement (69) de l'entraînement de bicyclette.

10. Bicyclette selon l'une quelconque des revendications 1 à 9, **caractérisée en ce que** l'axe de pédalier, en vue latérale, est situé au-dessus de la ligne formée à hauteur de l'axe de pédalier à travers le côté supérieur du cadre de bicyclette et **en ce que** le pédalier (130), à l'état replié de la bicyclette, est situé dans le triangle formé par l'élément de cadre avant (125), l'élément de cadre arrière (126) et la fourche de roue avant (136).

Fig. 1

Fig. 2

Fig. 3

Fig. 4

# Fig. 5

Fig. 6

# Fig. 7

Fig. 8

EP 2 768 722 B1

Fig. 9

Fig. 10

Fig. 11

## Fig. 12

Fig. 13

Fig. 14

Fig. 15

## Fig. 16

Fig. 17

# Fig. 18

Fig. 19

# Fig. 20

# Fig. 21

# Fig. 22

## Fig. 23

Fig. 24

Fig. 25

27

28

29

30

31

16

32

92

93

91

105

87

89

106

97

99

94

20

88

17
cm

## Fig. 26

## Fig. 27

Fig. 28

EP 2 768 722 B1

Fig. 29

Fig. 30

Fig. 31

# Fig. 32

## Fig. 33

Fig. 34

Fig. 35

Detail A

Fig. 36

# Fig. 37

## Fig. 38

54 cm

Fig. 39

Fig. 40

125

136

129

132

127

128

126

130

8 cm

Fig. 41

47 cm

A

133

Detail A

126

135

134

Fig. 42

# Fig. 43

Fig. 44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1258421 A
- DE 20110016 U1
- DE 20120092 U1
- US 6439590 B1
- US 7784808 B2
- US 6799771 B2
- US 5186482 A
- US 3979136 A
- EP 1995165 A2
- US 20070069499 A1
- US 4598923 A
- DE 19803462 A1
- US 7306249 B2
- DE 3225340 A1
- US 3990717 A
- DE 20311511 U1
- US 20050263979 A1
- WO 2010054500 A1
- DE 20112963 U1
- US 6595536 B1
- WO 2007057992 A1
- US 6595539 B1
- US 20030114274 A1
- US 1381281 A
- EP 1600368 A2
- EP 0388540 A1
- WO 2009145599 A2
- WO 2006111590 A1
- US 4824130 A
- DE 4006095 A1
- US 3419283 A
- US 6196566 B1
- US 20050230933 A1
- US 20070024023 A1
- US 20030051934 A1
- US 4844494 A
- US 6032971 A
- US 7055842 B1
- US 6883817 B2
- DE 60303842 T2

- US 6695334 B2
- US 7290780 B2
- US 4718688 A
- US 4895386 A
- US 5785338 A
- US 4132428 A
- US 4111447 A
- US 7367576 B2
- DD 284200 A5
- US 4389055 A
- DE 19521064 A1
- GB 2373771 A
- US 20040180758 A1
- DE 4316366 A1
- WO 9800331 A1
- EP 0010201 A1
- FR 411607 A
- FR 2366491 A1
- FR 876657 A
- DE 138824 A
- FR 493509 A
- WO 2009056078 A2
- JP 2010260457 A
- FR 2876657 A1
- KR 100768964 B1
- US 20040004341 A1
- US 20080217881 A1
- US 20020163159 A1
- US 20030030245 A1
- DE 152616 A
- DE 102011050447 A1
- DE 102011051850 B3
- DE 102011052134 A1
- DE 102011052270 A1
- DE 102011053733 A1
- DE 102011053875 A1
- DE 102011050447
- DE 102011052270